# EUROPEAN PATENT APPLICATION

(11) **EP 2 474 580 A1**
(43) Date of publication of application: **11.07.2012**
(21) Application number: 10813788.6
(22) Date of filing: 02.09.2010
(51) Int. Cl.: C09D 11/00, B41J 2/01, B41M 5/00, C09B 67/20

(54) **PIGMENT DISPERSION INCLUDING AZO PIGMENT AND AQUEOUS INK FOR INKJET RECORDING USING THE SAME**

(30) Priority: 04.09.2009 JP 2009205360
(71) Applicant: FUJIFILM Corporation, Tokyo 106-0031 (JP)
(72) Inventor: TANAKA Shigeaki, Odawara-shi, Kanagawa (JP); TATEISHI Keiichi, Odawara-shi Kanagawa (JP); MORIMOTO Kiyoshi, Odawara-shi, Kanagawa (JP); TOJO Kaoru, Odawara-shi, Kanagawa (JP)
(74) Representative: HOFFMANN EITLE
(86) International application number: PCT/JP2010/065071
(87) International publication number: WO 2011/027840

(57) **Abstract**

The invention provides pigment dispersion capable of preparing aqueous ink for inkjet recording, the particle size of which is not changed after storage for a long period of time or even after being exposed to a high temperature condition, generation of streaks and unevenness are controlled, which aqueous ink is capable of forming uniform printed images excellent in light fastness. Another object is to provide aqueous ink for inkjet recording using the pigment dispersion.

A pigment dispersion including vinyl polymer particles containing A and B:
A: an azo pigment represented by the following formula (1), a tautomer thereof, a salt thereof, a hydrate thereof, or a solvate thereof,
B: a vinyl polymer containing a structural unit (a) having a non-aromatic alicyclic group bonded to the polymer main chain via a linking group, and a structural unit (b) having a hydrophilic group, 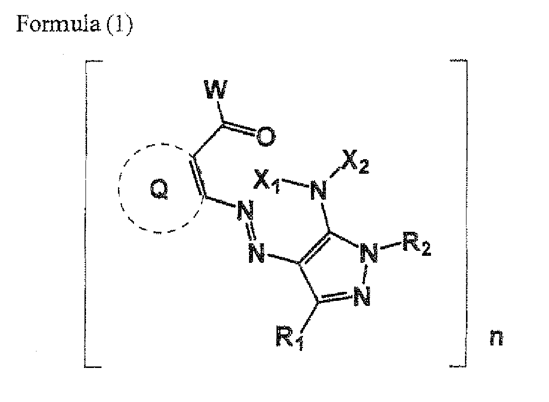 wherein Q represents a nonmetallic atomic group necessary to form a 5-, 6- or 7-membered heterocyclic ring together with a carbon atom; W represents an alkoxy group, an amino group, an alkyl group or an aryl group; each of X₁ and X₂ independently represents a hydrogen atom, an alkyl group, an acyl group, an alkylsulfonyl group, or an arylsulfonyl group; R₁ represents a hydrogen atom or a substituent; R₂ represents a heterocyclic group; n represents an integer of 1 to 4, and when n is 2, formula (1) represents a dimer via Q, W. X₁, X₂, R₁ or R₂, when n is 3, formula (1) represents a trimer via Q, W, X₁, X₂, R₁ or R₂, and when n is 4, formula (1) represents a tetramer via Q, W, X₁, X₂, R₁ or R₂.

## Description

### Technical Field

The present invention relates to pigment dispersion of which the particle size is not affected and homogeneous even after being exposed to a high temperature condition, and also relates to aqueous ink for inkjet recording containing a novel azo pigment capable of realizing an image quality free from density unevenness and uneven streaks.

### Background Art

Various kinds of media have been used as media to be recorded by inkjet recording and high grade image quality is required of not only special paper for inkjet recording but also commercially available plain paper, printing media such as hig-quality paper, coated paper, art paper, and the like. As ink coloring materials giving fastness such as water fastness and light fastness to plain paper and printing media, pigments are preferably used, and aqueous pigment inks are examined in view of various aspects including a viewpoint of cost. Of such pigments, azo pigments are preferably used as yellow pigments for inkjet recording.
However, it has been found that streaks and unevenness are caused when printing is performed on image-receiving paper with inks aged for a long period of time or at a high temperature.
As aqueous ink for inkjet recording, aqueous dispersion for inkjet recording including aqueous pigment dispersion containing a pigment and an anionic group-containing organic polymer compound is disclosed (for example, refer to patent document 1). Specifically, the same patent document describes that dispersibility and storage stability can be maintained and a sharp image can be formed by using C.I. Pigment Yellow 74 (also referred to as "PY-74" in the specification of the invention) as the pigment and a copolymer of n-butyl methacrylate, n-butyl acrylate, 2-hydroxyethyl methacrylate, methacrylic acid and styrene as the dispersant.
Further, pigment dispersion for inkjet recording ink including a polymer obtained by polymerization of cyclohexyl acrylate and/or benzyl acrylate, methacrylic acid and acrylic acid, a pigment and an aqueous medium is disclosed in patent document 2. There is disclosed in the same patent document that the inkjet recording ink using the pigment dispersion is excellent in stability and dispersibility.
Patent document 2 describes that stability and dispersibility of inks are improved by inkjet recording inks manufactured of a polymer containing an anionic group-containing polymer compound.

### Related Art Document

### Patent Document

Patent Document 1: JP-A-2000-239594 (The term "JP-A" as used herein refers to an "unexamined published Japanese patent application".)
Patent Document 2: JP-A-2005-171223

### Disclosure of the Invention

### Problems that the Invention is to Solve

However, in the inkjet recording aqueous ink constituted by using pigment aqueous dispersion as described in patent document 1, it has been found that when the inkjet recording aqueous ink after aging for a long period of time or at a high temperature is used, the ink is not on a satisfactory level from the points of density unevenness and uneven streaks. It has also been found that even when the polymer composition disclosed in patent document 2 is used, the particle sizes of pigment dispersion including commercially available pigment such as C.I. Pigment Yellow 74 or the like grow larger by heating the ink, which causes color unevenness in printing after heating.
An object of the invention is to provide pigment dispersion capable of preparing aqueous ink for inkjet recording, the particle size of which is not changed after storage for a long period of time or even after being exposed to a high temperature condition, generation of streaks and unevenness are controlled, which aqueous ink is capable of forming uniform printed images excellent in light fastness. Another object is to provide aqueous ink for inkjet recording using the pigment dispersion.

### Means for Solving the Problems

The inventors of the present invention have found that by forming tinctorial particles with an azo pigment having a carbonyl group capable of forming intramolecular hydrogen bonding and a vinyl polymer having a specified structure, aqueous ink for inkjet recording can be obtained, and the particle size of the pigment dispersion of the aqueous ink is not changed after storage for a long period of time or even after being exposed to a high temperature condition, and generation of streaks and unevenness can be restrained.
That is, the above objects of the invention have been achieved by the following means.

(1) A pigment dispersion comprising vinyl polymer particles containing A and B,
wherein A is an azo pigment represented by the following formula (1), a tautomer thereof, a salt thereof, a hydrate thereof, or a solvate thereof, and B is a vinyl polymer containing a structural unit (a) having a non-aromatic alicyclic group bonded to the polymer main chain via a linking group, and a structural unit (b) having a hydrophilic group.

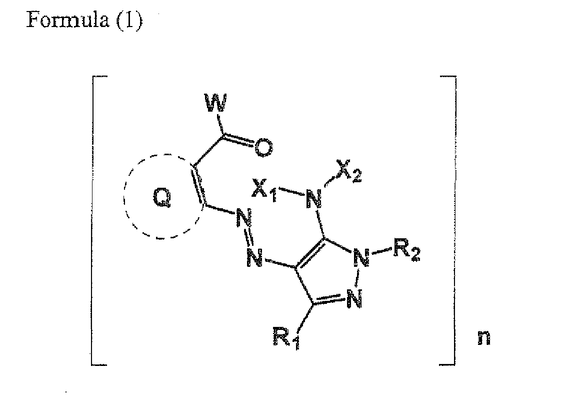

In the formula (1), Q represents a nonmetallic atomic group necessary to form a 5-,6- or 7-membered heterocyclic ring together with a carbon atom; W represents an alkoxy group, an amino group, an alkyl group or an aryl group; each of X₁ and X₂ independently represents a hydrogen atom, an alkyl group, an acyl group, an alkylsulfonyl group, or an arylsulfonyl group; R₁ represents a hydrogen atom or a substituent; R₂ represents a heterocyclic group; n represents an integer of 1 to 4, and when n is 2, formula (1) represents a dimer via Q, W, X₁, X₂, R₁ or R₂, when n is 3, formula (1) represents a trimer via Q, W, X₁, X₂, R₁ or R₂, and when n is 4, formula (1) represents a tetramer via Q. W, X₁, X₂, R₁ or R₂.

(2) The pigment dispersion according to (1), wherein the structural unit (a) contains a structural unit (a1) represented by the following formula (I).

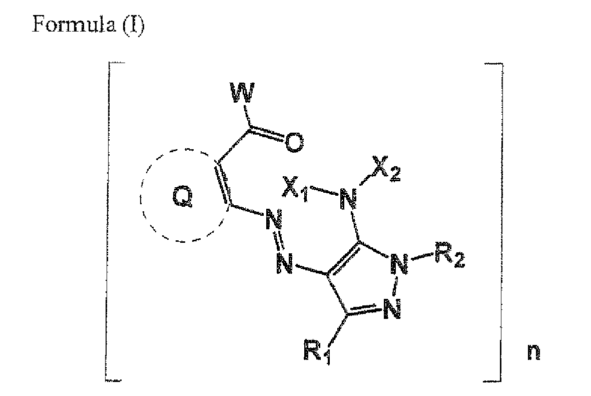

In the formula (I), R₁ represents a hydrogen atom, a methyl group, or a halogen atom; L₁ represents -COO-, -OCO-, -CONR₂-, -0-, or a substituted or unsubstituted phenylene group; R₂ represents a hydrogen atom or an alkyl group; L₂ represents a single bond or a divalent linking group; and Cyc₁ represents a monovalent non-aromatic alicyclic group.

(3) The pigment dispersion according to (1) or (2), wherein the structural unit (a) further contains a structural unit (a2) deriving from alkyl ester of acrylic acid or methacrylic acid.

(4)) The pigment dispersion according to any one of (1) to (3), wherein the structural unit (a) contains one or more selected from structural units deriving from cyclohexyl (meth)acrylate in a total amount of 5% by mass or more and less than 93% by mass to total weight of the vinyl polymer, and the structural unit (b) contains one or more selected from structural units deriving from acrylic acid or methacrylic acid in a total amount of 3% by mass or more and less than 41% by mass to the gross mass of the vinyl polymer.

(5) The pigment dispersion according to any one of (1) to (4), wherein the weight average molecular weight of the vinyl polymer is 5,000 to 152,000.

(6) The pigment dispersion according to any one of (1) to (5), wherein the acid value of the vinyl polymer is 10 mg KOH/g to 270 mg KOH/g.

(7) The pigment dispersion according to any one of (1) to (6), wherein the size of particles of cumulative volume accounting for 95% of the pigment dispersion is 10nm to 400 nm.

(8) The pigment dispersion according to any one of (1) to (7), wherein the azo pigment represented by formula (1) is represented by the following formula (2).

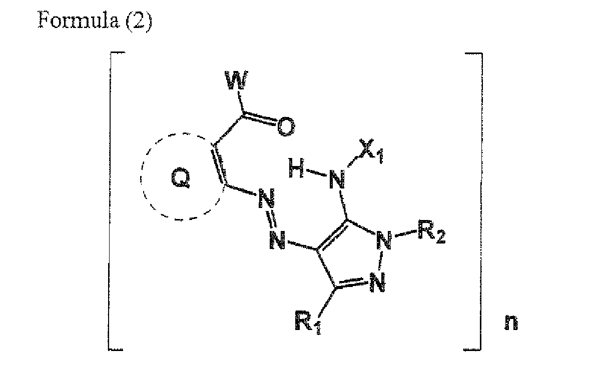

In the formula (2), Q, W, X₁, R₁, R₂ and n respectively have the same meaning as Q, W, X₁, R₁, R₂ and n in formula (1), and when n is 2, formula (2) represents a dimer via Q, W, X₁, R₁ or R₂, when n is 3, formula (2) represents a trimer via Q, W, X₁, R₁ or R₂, and when n is 4, formula (2) represents a tetramer via Q, W, X₁, R₁ or R₂.

(9) The pigment dispersion according to any one of (1) to (8), wherein Q in formula (1) forms a 5-membered nitrogen-containing heterocyclic ring together with a carbon atom.

(10) The pigment dispersion according to andy one of (1) to (9), wherein n in formula (1) represents 2.

(11) The pigment dispersion according to any one of (8) to (10), wherein X₁ in formula (2) represents a hydrogen atom.

(12) The pigment dispersion according to any one of (1) to (8), wherein the azo pigment represented by formula (1) is represented by the following formula (3).

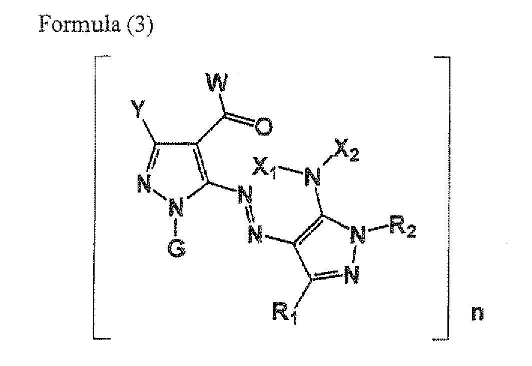

In the formula (3), Y represents a hydrogen atom or a substituent; G represents a hydrogen atom, an alkyl group, a cycloalkyl group, an aralkyl group, an alkenyl group, an alkynyl group, an aryl group or a heterocyclic group; W, X₁, X₂, R₁, R₂ and n respectively have the same meanings as W, X₁, X₂, R₁, R₂ and n in formula (1), and when n is 2, formula (3) represents a dimer via Q, W, X₁, X₂, R₁ or R₂, when n is 3, formula (3) represents a trimer via Q, W, X₁, X₂, R₁ or R₂, and when n is 4, formula (3) represents a tetramer via Q, W, X₁, X₂, R₁ or R₂.

(13) The pigment dispersion according to (12), wherein the azo pigment represented by formula (3) is represented by the following formula (4).

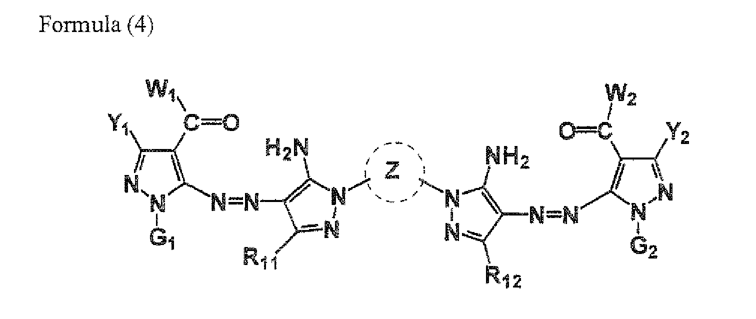

In the formula (4), Z represents an atomic group necessary to form a 5-, 6-, 7- or 8-membered nitrogen-containing heterocyclic ring; each of Y₁, Y₂, R₁₁ and R₁₂ independently represents a hydrogen atom or a substituent; each of G₁ and G₂ independently represents a hydrogen atom, an alkyl- group, an aralkyl group, an alkenyl group, an alkynyl group, an aryl group, or a heterocyclic group; and each of W₁ and W₂ independently represents an alkoxy group, an amino group, an alkyl group, or an aryl group.

(14) The pigment dispersion according to any one of (1) to (13), wherein each of W, W₁ and W₂ independently represents an alkoxy group having carbon atoms of 3 or less in total, an amino group, or an alkylamino group having carbon atoms of 3 or less in total.

(15) The pigment dispersion according to (12) or (13), wherein each of G, G₁ and G₂ independently represents an alkyl group having carbon atoms of 3 or less in total.

(16) The pigment dispersion according to any one of (13) to (15), wherein Z represents a 6-membered nitrogen-containing heterocyclic ring.

(17) Aqueous ink for inkjet recording which contains pigment dispersion according to any one of (1) to (16) and a water-soluble medium.

### Advantage of the Invention

The invention can provide pigment dispersion capable of preparing aqueous ink for inkjet recording, the particle size of which is not changed after storage for a long period of time or even after being exposed to a high temperature condition, generation of streaks and unevenness are controlled, which aqueous ink is capable of forming uniform printed images excellent in light fastness, and the invention can also provide aqueous ink for inkjet recording using the pigment dispersion.

### Mode for Carrying Out the Invention

The invention will be described in detail below.
The pigment dispersion of the invention contains the dispersion of vinyl polymer particles containing A and B.
A: an azo pigment represented by the following formula (1), a tautomer thereof, a salt thereof, a hydrate thereof, or a solvate thereof,
B: a vinyl polymer containing a structural unit (a) having a non-aromatic alicyclic group bonded to the polymer main chain via a linking group, and a structural unit (b) having a hydrophilic group,

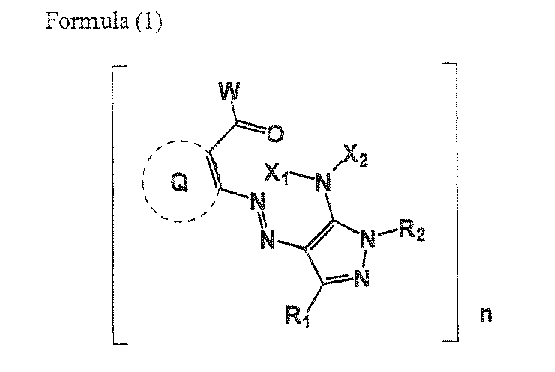

In formula (1), Q represents a nonmetallic atomic group necessary to form a 5-, 6- or 7-membered heterocyclic ring together with a carbon atom; W represents an alkoxy group, an amino group, an alkyl group or an aryl group; each of X₁ and X₂ independently represents a hydrogen atom, an alkyl group, an acyl group, an alkylsulfonyl group, or an arylsulfonyl group; R₁ represents a hydrogen atom or a substituent; R₂ represents a heterocyclic group; n represents an integer of 1 to 4, and when n is 2, formula (1) represents a dimer via Q, W, X_{1,} X₂, R₁ or R₂, when n is 3, formula (1) represents a trimer via Q, W, X₁, X₂, R₁ or R₂, and when n is 4, formula (1) represents a tetramer via Q, W, X₁, X₂, R₁ or R₂.

### <Structural unit (a) having a non-aromatic alicyclic group bonded to the main chain via a linking group>

The non-aromatic alicyclic compound in the structural unit (a) having the non-aromatic alicyclic compound bonded to the main chain via a linking group (hereinafter sometimes referred to as merely "structural unit (a)") is not especially restricted, but non-aromatic alicyclic hydrocarbon groups and non-aromatic heterocyclic groups are exemplified, and non-aromatic alicyclic hydrocarbon groups having 5 to 15 carbon atoms for forming a ring and non-aromatic heterocyclic groups having 3 to 10 carbon atoms for forming a ring are preferred. Non-aromatic alicyclic hydrocarbon groups having 5 to 15 carbon atoms for forming a ring are more preferred of these.

The non-aromatic alicyclic hydrocarbon groups may have a substituent. The specific examples include groups obtained by removing a hydrogen atom(s) from cyclopentane, methylcyclopentane, cyclohexane, cyclohexanol, chlorocyclohexane, t-arnylcyclohexane, dicyclohexylmethane, cycloheptane, cyclooctane, cyclooctanol, cyclopentanone, cyclohexanone, and cyclohexanecarboxaldehyde. Structures in which two or more of the carbon atoms forming a ring are crosslinked with alkylene are also included in the non-aromatic alicyclic groups and, for example, structures deriving from norbornene, 3-methyl-2-norbomene methanol, decahydronaphthalene, perhydrofluorene, tricyclodecane, adamantane, 1-adamantyl methyl ketone, 1-3-cyclopentanedionc, 2-decalone and norcamphor are exemplified. A group to form a ring is more preferably an alicyclic group having 5 to 10 carbon atoms, still more preferably an alicyclic group having 5 to 8 carbon atoms, and most preferably an alicyclic group having 5 or 6 carbon atoms.

The non-aromatic heterocyclic groups may have a substituent. The heterocyclic rings of the non-aromatic heterocyclic groups include alicyclic ethers, sugars, alicyclic thioethers, alicyclic amines, alicyclic amides, alicyclic esters, alicyclic thioesters, alicyclic thioamides, and alicyclic heterocyclic rings containing plural hetero atoms.
The specific examples of alicyclic ethers include tetrahydrofuran, tetrahydropyran, tetrahydro-4H-pyran-4-ol, 2-methyl-1,3-dioxolan, dioxane, and 2-(hydroxymethyl)-12-crown-4. Sugars obtained by substitution with a hydroxyl group on alicyclic ethers are also included. The specific examples of sugars include erythrose, threose, ribose, lyxose, xylose, arabinose, allose, talose, gulose, glucose, altrose, mannose, galactose, idose, fructose, erythrulose, xylulose, ribulose, psicose, fructose, sorbose, tagatose, erythritol, arabitol, xylitol, ribitol, sorbitol, mannitol, and galactitol. The specific examples of alicyclic thioethers include tetrahydrothiophene, pentamethylene sulfide, tetramethylene sulfide, tetramethylene sulfone, and glycol sulfite. The specific examples of alicyclic amines include pyrrolidine, 3-pyrrolidinol, 1-aminopyrrolidine, piperidine, 2-methylpiperidine, l-amino-2,6-dimethylpiperi.dine, decahydroquinoline, quinuclidine, pipecolic acid, nipipecotic acid, i-nipecotic acid, 1-acetylpiperazine, and proline. The specific examples of alicyclic amides include 2-imidazolidone, tetrahydro-2-pyrimidone, hydantoin, 2,4-thiazolidinedione, parabanic acid, cycloserine, barbituric acid, 2,4-dioxohexahydro-1,3,5-triazine, 2-pyrrolidinone, δ-valerolactam, ε-caprolactam, 4-azatricyclo[4.3.1.1(3,8)jundeca-n-5-on., 2-oxazolidone, succinimide, glycine anhydride, glutarimide, and β,β-methylethyl glutarimide. As the examples of alicyclic esters, ε-caprolactam, δ-valerolactone, mevalonic lactone, a-hydroxy-y-butyrolactone, and tetronic acid are exemplified. As the examples of alicyclic thioesters, γ-thiobutyrolactone and thiotetronic acid are exemplified. The specific examples of alicyclic thioamides include ω-caprolactam, rhodanine, 2-thiohydantoin, and 3-aminorhodanine. As the examples of alicyclic heterocyclic rings having plural hetero atoms, morpholine and thiazolidine are exemplified.
Of the heterocyclic rings of the non-aromatic heterocyclic groups, alicyclic ethers, sugars, alicyclic amines, alicyclic amides, alicyclic thioamides, and alicyclic heterocyclic rings having plural hetero atoms are more preferred, sugars, alicyclic amines, alicyclic amides, and alicyclic thioamides are still more preferred, and alicyclic amides and alicyclic thioamides are most preferred.

As the examples of linking groups in structural unit (a),-COO-, -OCO-, -CONR₂-(wherein R₂ represents a hydrogen atom, an alkyl group, an aryl group, or a heterocyclic group), -O-, an alkylene group, a substituted or unsubstituted phenylene group, and combinations thereof can be exemplified.

As the main chain in structural unit (a), a vinyl bond, an ester bond, and a urethane bond can be exemplified, and a vinyl bond is preferred.

Structural unit (a) having a non-aromatic alicyclic group bonded to the main chain of vinyl polymer via a linking group preferably contains a structural unit (a1) represented by the following formula (I). Structural unit (a) may further have a structural unit (a2) deriving from alkyl ester of acrylic acid or methacrylic acid.

### (Structural unit (a1) represented by formula (I))

The content of structural unit (a1) represented by formula (I) (hereinafter sometimes referred to as merely "structural unit (a1)") is preferably 5% by mass or more and less than 93% by mass of the gross mass of the vinyl polymer from the viewpoints of dispersion stability of the pigment, discharge stability and cleaning property, more preferably 5% by mass or more and less than 90% by mass, and especially preferably 10% by mass or more and less than 80% by mass.

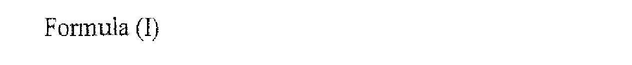

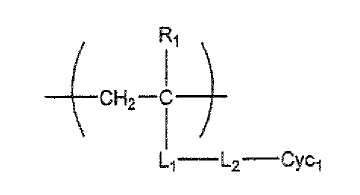

In formula (I), R₁ represents a hydrogen atom, a methyl group, or a halogen atom; L₁ represents -COO-, -OCO-, -CONR₂-, -O-, or a substituted or unsubstituted phenylene group; R₂ represents a hydrogen atom or an alkyl group; L₂ represents a single bond or a divalent linking group; and Cyc₁ represents a monovalent non-aromatic alicyclic group.

R₁ represents a hydrogen atom, a methyl group, or a halogen atom, more preferably a hydrogen atom or a methyl group, and still more preferably a methyl group.
The alkyl group represented by R₂ is preferably an alkyl group having I to 10 carbon atoms and, e.g., a methyl group, an ethyl group, an n-propyl group, an i-propyl group, and a t-butyl group are exemplified. As the examples of the substituents, a halogen atom, an alkyl group, an alkoxy group, a hydroxyl group, and a cyano group are exemplified, but not limitative thereto.

L₁ represents -COO-, -OCO-, -CONR₂-, -O-, or a substituted or unsubstituted phenylene group, preferably -COO-, -OCO-, or -CONR₂-, more preferably -COO- or -CONR₂-, and still more preferably -COO-. Above all, a divalent linking group having 1 to 25 carbon atoms and containing at least one selected from an alkyleneoxy group and an alkylene group is preferred, and -(CH₂-CH₂)n-, -(CH₂O)n-, or -(CH₂-CH₂-O)n- (n represents an average repeating unit number, and n is 1 to 6, preferably 1 or 2, and more preferably 1) is preferred. When L₂ represents a divalent linking group; it is preferably a linking group having 1 to 30 carbon atoms, more preferably a linking group having 1 to 25 carbon atoms, and especially preferably a linking group having 1 to 20 carbon atoms.

The specific examples and preferred examples of the non-aromatic alicyclic groups represented by Cyc₁ are the same with the above-described specific examples and preferred examples of the non-aromatic alicyclic groups.

It is preferred that structural unit (a1) represented by formula (I) is at least one selected from structural units deriving from acrylate and (meth)acrylate. When structural unit (a1) is at least one selected from structural units deriving from acrylate and (meth)acrylate, it is possible to bond the non-aromatic alicyclic compound from the main chain via ester bonding, and so a streostructure such that the non-aromatic alicyclic group, which is expectative of interaction with the pigment such as adsorption or the like, has a degree of freedom from the main chain can be taken.
Further, it is preferred for structural unit (a1) represented by formula (I) to contain a monovalent group of a non-aromatic alicyclic hydrocarbon group or a non-aromatic heterocyclic group as the non-aromatic alicyclic group. By adopting the non-aromatic alicyclic group, it becomes possible fort the bulkiness of the group to keep the vinyl polymer rigid. Accordingly, the vinyl polymer can be prevented from becoming a coiled state by the interaction of the vinyl polymer itself, and original effect, that is, the effect of interaction of the hydrophobic part of the polymer and pigment surface, and interaction of the hydrophilic part of the polymer and liquid medium can be exhibited.

The specific examples of the monomers capable of forming structural unit (a1) represented by formula (I) are shown below, but the invention is not restricted to the following specific examples.

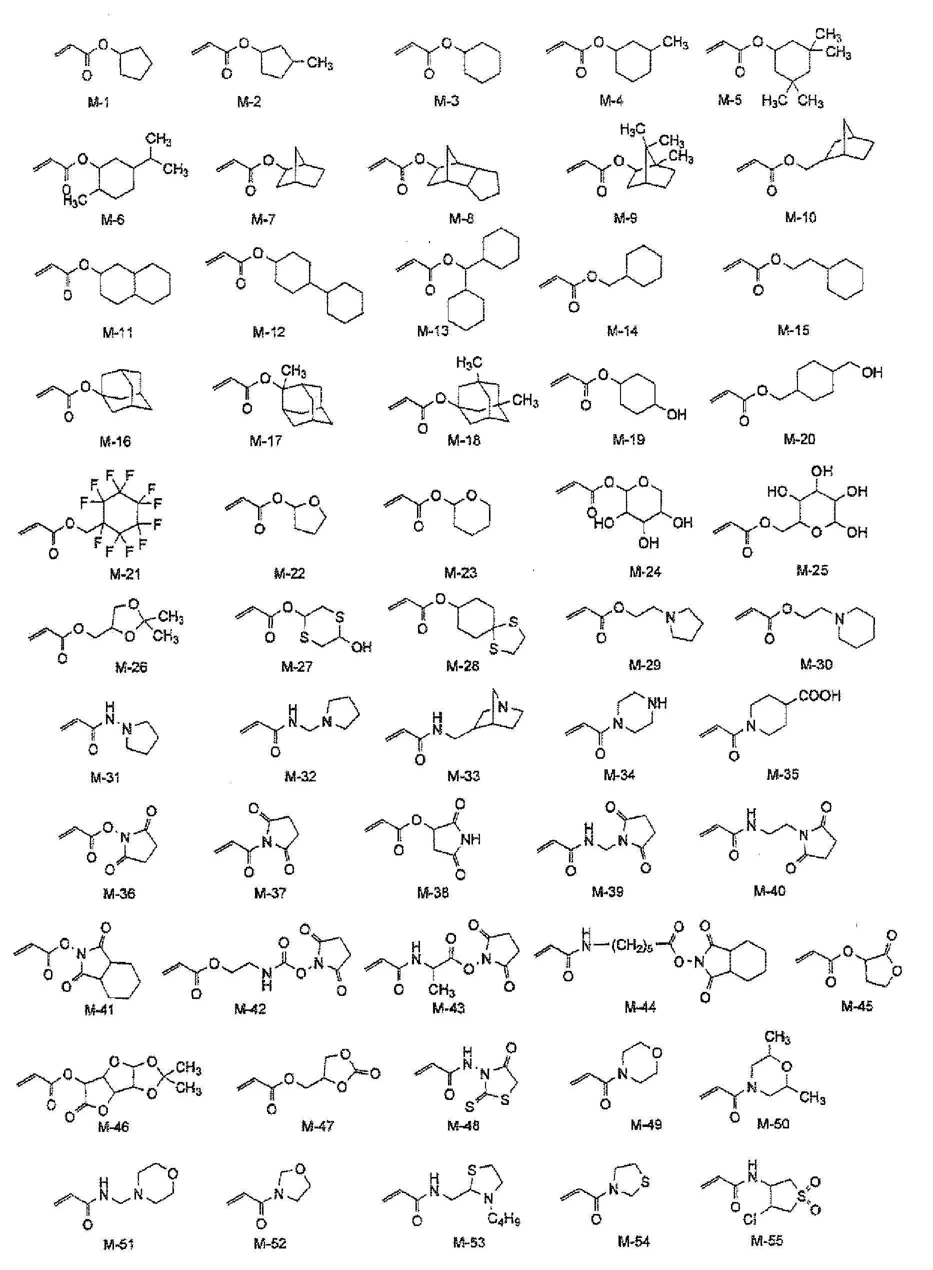

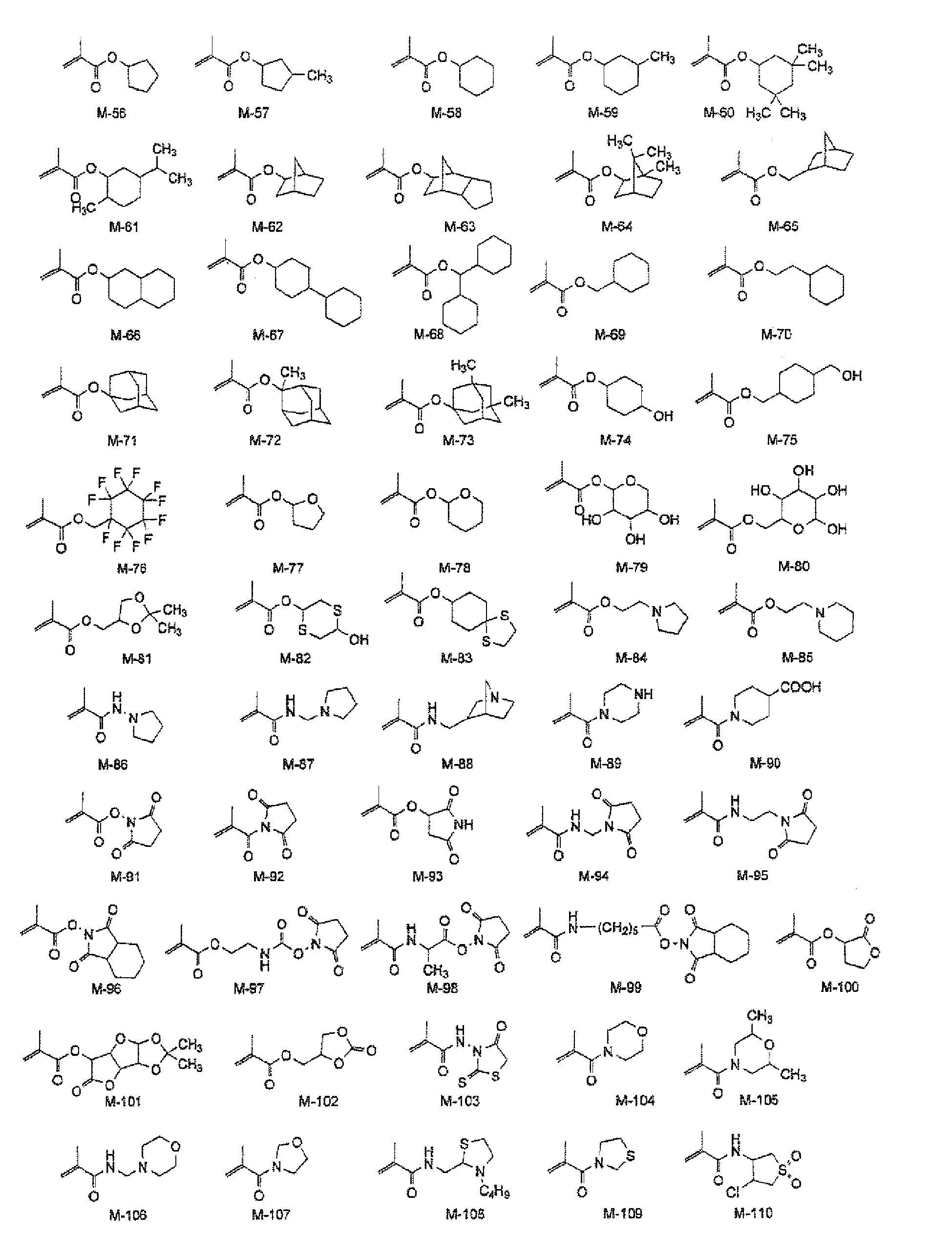

Regarding structural unit (a1) represented by formula (I), in view of the storage stability of pigment dispersion, the non-aromatic alicyclic hydrocarbon group is preferably an alicyclic group having 5 to 10 carbon atoms to form a ring, more preferably an alicyclic group having 5 to 8 carbon atoms, still more preferably an alicyclic group having 5 or 6 carbon atoms, especially preferably an alicyclic group having 6 carbon atoms, and most preferably a cyclohexyl group. The pigment dispersion in the invention preferably contains a structural unit having a cyclohexyl group as structural unit (a) in total amount of 5% by mass or more and less than 93% by mass to the gross mass of the vinyl polymer, more preferably 5% by mass or more and less than 90% by mass, and especially preferably 10% by mass or more and less than 80% by mass.

### (Structural unit (a2) deriving from alkyl ester of acrylic acid or methacrylic acid)

Structural unit (a) may contain structural unit (a2) deriving from alkyl ester of acrylic acid or methacrylic acid.
The number of carbon atoms of the alkyl ester is preferably 1 to 18, more preferably 1 to 8, still more preferably 1 to 4, and especially preferably 1 or 2.
The content of structural unit (a2) is preferably 5% by mass or more and less than 95% by mass in the vinyl polymer, more preferably 10% by mass or more and less than 90% by mass, and still more preferably 15% by mass or more and less than 86% by mass.
The examples of structural units (a2) include (meth)acrylates such as methyl (meth)acrylate, ethyl (meth)acrylate, (i-)propyl (meth)acrylate, (i- or t-)butyl (meth)acrylate, dodecyl (meth)acrylate, and stearyl (meth)acrylate.
Methyl (meth)acrylate and ethyl (meth)acrylate are preferred of all.

### <Structural unit (b)>

A structural unit (b) having a hydrophilic group contained in the vinyl polymer in the invention will be described below.
As the examples of structural unit (b), structural units deriving from acrylic acid or methacrylic acid can be exemplified. Structural units having a nonionic hydrophilic group can also be exemplified.

Further, as the examples of structural unit (b), (meth)acrylates, (meth)acrylamides and vinyl esters each having a hydrophilic functional group can be exemplified.
As the hydrophilic functional groups, a hydroxyl group, an amino group, an amido group (wherein the nitrogen atom is unsubstituted), and the later-described alkylene oxide polymers such as polyethylene oxide and polypropylene oxide can be exemplified.
Of the (metlt)acrylates, (meth)acrylamides and vinyl esters having a hydrophilic functional group, hydroxyethyl (meth)acrylate, hydroxybutyl (meth)acrylate. (meth)acrylamide, aminoethyl acrylate, aminopropyl acrylate, and (met4)acrylate containing an alkylene oxide polymer are especially preferred.

As the examples of structural unit (b), hydrophilic structural units having an alkylene oxide polymer structure can be exemplified.
From the viewpoint of hydrophilicity, the alkylene of the alkylene oxide polymer structure is preferably alkylene having 1 to 6 carbon atoms, more preferably 2 to 6 carbon atoms, and especially preferably 2 to 4 carbon atoms.
The degree of polymerization of the alkylene oxide polymer structure is preferably 1 to 120, more preferably 1 to 60, and especially preferably 1 to 30.

As the examples of structural unit (b), hydrophilic structural units containing a. hydroxyl group can be exemplified. The number of hydroxyl groups is not especially restricted and from the points of the hydrophilicity of the vinyl polymer, the kinds of solvents at the time of polymerization and compatibility with other monomers, preferably 1 to 4, more preferably 1 to 3, and especially preferably 1 or 2.

Structural unit (b) is preferably a structure deriving from acrylic acid or methacrylic acid.

The content of structural unit (b) is preferably 2% by mass or more and less than 50% by mass to the gross mass of the vinyl polymer, more preferably 2% by mass or more and less than 45% by mass, and still more preferably 3% by mass or more and less than 41% by mass.

### <Structural unit (c)>

The vinyl polymer in the invention can also contain a structural unit (c) having a structure different from those of structural unit (a1), structural unit (a2) and structural unit (b) (hereinafter merely referred to as "structural unit (c)").
The content of structural unit (c) is preferably 15% by mass or more and 80a/° by mass or less to the gross mass of the vinyl polymer, preferably 25% by mass or more and 70% by mass or less, and more preferably 40% by mass or more and 60% by mass or less.

When structural unit (c) is a hydrophobic structural unit, monomers are not especially limited so long as they have a functional group capable of forming a polymer and a hydrophobic functional group and any known monomer can be used.
As the monomers capable of forming a hydrophobic structural unit, from the viewpoints of availability, handling ability and wide usability, vinyl monomers ((meth)acrylamides, styrenes, vinyl esters and the like) are preferred.

As (meth)acrylamides, N-cyclohexyl (meth)acrylamide, N-(2-methoxyethyl) (meth)acrylamide, N,N-diallyl (meth)acrylamide, and N-allyl (meth)acrylamide are exemplified.

As styrenes, styrene, methylstyrene, dimethylstyrene, trimethylstyrene, ethylstyrene, i-propylstyrene, n-butylstyrene, t-butylstyrene, methoxystyrene, butoxystyrene, acetoxystyrene, chlorostyrene, dichlorostyrene, bromostyrene, chloromethylstyrene, methylvinyl benzoate, α-methylstyrene, and vinyl naphthalene are exemplified, and styrene and a-methylstyrene are preferred.

As vinyl esters, vinyl acetate, vinyl chloroacetate, vinyl propionate, vinyl butyrate, vinyl methoxyacetate, and vinyl benzoate are exemplified, and vinyl acetate is preferred of these. These monomers can be used alone or in combination of two or more.

It is possible that vinyl monomers consist of structural unit (a1) alone or structural unit (b) alone.
As inks for inkjet recording, it is more preferred that one or more selected from the structural units deriving from cyclohexyl (meth)acrylate are contained in total amount of 5% by mass or more and less than 93% by mass to the gross mass of the vinyl polymer as structural unit (a) of the vinyl polymer, and one or more selected from the structural units deriving from acrylic acid or methacrylic acid are contained in total amount of 3% by mass or more and less than 41% by mass to the gross mass of the vinyl polymer as structural unit (b).
Further, it is preferred that the vinyl polymer does not substantially contain a structural unit having an aromatic group (specifically, the ratio of the repeating unit having an aromatic group is preferably 15% by mass or less, more preferably 10% by mass or less, still more preferably 5% by mass or less, and ideally 0% by mass, that is to say, does not contain a structural unit having an aromatic group).

From the viewpoints of pigment dispersibility and storage stability, the acid value of the vinyl polymers of the invention is preferably 10 mg KOH/g or more and 270 mg KOH/g or less, more preferably 20 mg KOH/g or more and less than 180 mg KOH/g, and especially preferably 30 mg KOH/g or more and 160 mg KOH/g. When the acid value of the vinyl polymers is 10 mg KOH/g or more, easy dispersibility of the pigment is maintained and aggregation of the pigment dispersion due to long term storage can also be controlled. On the other hand, when the acid value is smaller than 160 mg KOH/g, the hydrophilic property of the vinyl polymer lowers and interaction with water weakens, while the vinyl polymer is easily brought into contact with the pigment surface, as a result, control of the pigment dispersion by long term storage becomes possible.
The acid value used here is defined by the mass of KOH (mg) required to completely neutralize 1 g of the vinyl polymer, and it can be measured according to the method described in JIS standard (JIS K0070, 1992).

The vinyl polymer in the invention may be a random copolymer of irregularly introducing each structural unit, or may be a block copolymer of regularly introducing each structural unit. Each structural unit in the case of a block copolymer may be the one synthesized by any introduction order, and the same constituent may be used two or more times, but a random copolymer is preferred in view of wide usability and productivity.

The range of the molecular weight of the vinyl polymer for use in the invention is preferably 5,000 to 152,000 as mass average molecular weight (Mw), more preferably 7,000 to 120,000, and still more preferably 7,000 to 100,000.
Bringing the molecular weight of the vinyl polymer into the above range is preferred in the points that steric repulsion effect as a dispersant has an inclination to be bettered and adsorption onto the pigment is liable not to take time due to steric effect.
The molecular weight distribution (expressed as the value of mass average molecular weight/the value of number average molecular weight) of the vinyl polymer for use in the invention is preferably 1 to 6, and more preferably 1 to 4.
Bringing the molecular weight of the vinyl polymer into the above range is preferred from the points of the dispersion stability of the ink and control of aggregation of the pigment dispersion. Mass average molecular weight and number average molecular weight here are molecular weights detected with a GPC analyzer using columns of TSKgel GMHxL, TSKgel G4000HxL and TSKgel G2000HxL (trade names, manufactured by Toso Corporation), THF as the solvent and a differential refractometer, and expressed by conversion with polystyrene as reference material.

The vinyl polymer for use in the invention can be synthesized by various polymerization methods, for example, solution polymerization, precipitation polymerization, suspension polymerization, precipitation polymerization, block polymerization, and emulsion polymerization can be used. Polymerization reaction can be carried out by known operations, such as batch operation, semi-continuous operation, and continuous operation.
Polymerization is initiated by methods of using radical initiators, irradiation with light or radiation. These methods of polymerization and methods of initiation of polymerization are described in, e.g., Teiji Tsuruta, Kobunshi Gosei Hoho, revised edition, Nikkan Kogyo Shinbunsha (1971), and Takayuki Ohtsu and Masayoshi Kinoshita, Kobunshi Gosei no Jikkenho, pp. 124-154, Kagaku-Dojin Publishing Co., Inc. (1972).
Of the above polymerization methods, the solution polymerization method using a radical initiator is especially preferred. The solvent used in the solution polymerization method may be a single solvent or a mixture of two or more solvents selected from among various organic solvents such as ethyl acetate, butyl acetate, acetone, methyl ethyl ketone, methyl i-butyl ketone, cyclohexanone, tetrahydrofuran, dioxane, N,N-dimethylformamide, N,N-dimethlacetamide, benzene, toluene, acetonitrile, methylene chloride, chloroform, dichloroethane, methanol, ethanol, 1-propanol, 2-propanol, and 1-butanol, or a mixed solvent of such an organic solvent with water.
The polymerization temperature is necessary to be set in relation to the molecular weight of a polymer to be produced and the kind of an initiator to be used. The temperature is generally 0°C to 100°C or so, but it is preferred to perform polymerization at a temperature ranging from 50°C to 100°C.
The reaction pressure can be arbitrarily selected, but is generally 1 kg/cm² to 100 kg/cm², and especially preferably 1 kg/cm² to 30 kg/cm² or so. The reaction time is 5 hours to 30 hours or so. The obtained resin may be refined by re-precipitation or the like.

The addition ratio of the vinyl polymer in the invention is, from the viewpoint of dispersion stability, preferably 10% or more and 100% or less to the pigment on mass base, and more preferably 15% or more and 60% or less.

### <Azo Pigment>

The azo pigment for use in the invention is represented by formula (1). The azo pigment represented by the following formula (1) is described in the first place.
The compound represented by formula. (1) easily forms intermolecular interaction of the colorant molecules due to its unique structure, solubility of the compound in water or an organic solvent is low and can be used as azo pigment.
Different from dyes which are dissolved in water or an organic solvent in a molecular dispersion state and used, pigments are finely dispersed in a dispersion medium as solid particles such as molecular aggregates and used.

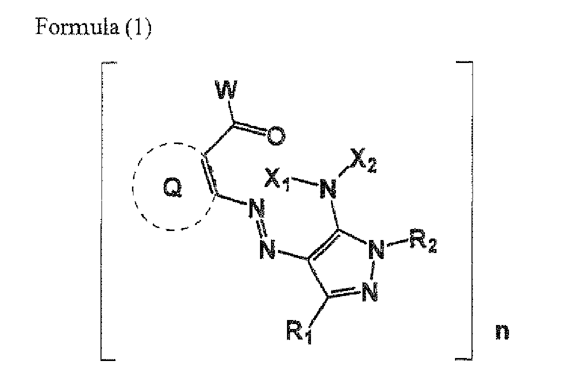

In formula (1), Q represents a nonmetallic atomic group necessary to form a 5-, 6- or 7-membered heterocyclic ring together with a carbon atom; W represents an alkoxy group, an amino group, an alkyl group or an aryl group; each of X₁ and X₂ independently represents a hydrogen atom, an alkyl group, an acyl group, an alkylsulfonyl group, or an arylsulfonyl group; R₁ represents a hydrogen atom or a substituent; R₂ represents a heterocyclic group; n represents an integer of 1 to 4, and when n is 2, formula (1) represents a dimer via Q, W, X₁, X₂, R₁ or R₂, when n is 3, formula (1) represents a trimer via Q, W, X₁, X₂, R₁ or R₂, and when n is 4, formula (1) represents a tetramer via Q, W, X₁, X₂, R₁ or R₂.

When n is 1, each of Q, W, X₁, X₂, R₁ and R₂ is a monovalent group and formula (1) represents a mono-type azo pigment shown in the brackets.

When n is 2, each of Q, W, X₁, X₂, R₁ and R₂ is a monovalent or divalent group, provided that at least one is a divalent group, and formula (1) represents a bis-type azo pigment of the colorant shown in the brackets.

When n is 3, each of Q, W, X₁, X₂, R₁ and R₂ is a monovalent, divalent or trivalent group, provided that at least two are divalent substituents, or at least one is a trivalent group, and formula (1) represents a tris-type azo pigment of the colorant shown in the brackets.

When n is 4, each of Q, W, X₁, X₂, R₁ and R₂ is a monovalent, divalent or trivalent group, provided that at least two are divalent substituents, or at least one is a trivalent group, or at least one is a tetravalent group, and formula (1) represents a tetra-type azo pigment of the colorant shown in the brackets.

n preferably represents an integer of 1 to 3, more preferably 1 or 2, and especially preferably 2. When n is 2, solubility in water and an organic solvent lowers (substantially hardly solubilized), which is preferred in that water resistance and chemical resistance are improved.

In formula. (1), each of X₁ and X₂ independently represents a hydrogen atom, an alkyl group, an acyl group, an alkylsulfonyl group or an arylsulfonyl group.

As each of the alkyl groups represented by X₁ and X₂, a straight chain, branched or alicyclic, substituted or unsubstituted alkyl group is independently exemplified, and a cycloalkyl group, a bicycloalkyl group, and further, a tricyclic structure having many cyclic structures are also included. The alkyl groups in the substituents described below (e.g., the alkyl group in an alkoxy group and an alkylthio group) are also alkyl groups having such a concept.
In detail, the alkyl group is preferably an alkyl group having 1 to 30 carbon atoms, e.g., a methyl group, an ethyl group, an n-propyl group, an i-propyl group, a t-butyl group, an n-octyl group, an eicosyl group, a 2-chloroethyl group, a 2-cyanoethyl group, and a 2-ethylhexyl group are exemplified. The cycloalkyl group is preferably a substituted or unsubstituted cycloalkyl group having 3 to 30 carbon atoms, e.g., a cyclohexyl group, a cyclopentyl group, and a 4-n-dodecylcyclohexyl group are exemplified. The bicycloalkyl group is preferably a substituted or unsubstituted bicycloalkyl group having 5 to 30 carbon atoms, i.e., a monovalent group obtained by removing one hydrogen atom from bicycloalkane having 5 to 30 carbon atoms, e.g., a bicycle[1,2,2]heptan-2-yl group and a bicycle[2,2,2]octan-3-yl group are exemplified.

As each of the preferred acyl groups represented by X₁ and X₂, a formyl group, a substituted or unsubstituted alkylcarbonyl group having 2 to 30 carbon atoms, a substituted or unsubstituted arylcarbonyl group having 7 to 30 carbon atoms, a substituted or unsubstituted heterocyclic carbonyl group having 2 to 30 carbon atoms bonded to a carbonyl group via carbon atoms, e.g., an acetyl group, a pivaloyl group, a 2-chloroacetyl group, a stearoyl group, a benzoyl group, a p-n-octyloxyphenylcarbonyl group, a 2-pyridylcarbonyl group, or a 2-furylcarbonyl group is independently exemplified.

As each of the preferred alkylsulfonyl group or arylsulfonyl group represented by X₁ and X₂, a substituted or unsubstituted alkylsulfonyl group having 1 to 30 carbon atoms, a substituted or unsubstituted arylsulfonyl group having 6 to 30 carbon atoms, e.g., a ethylsulfonyl group, an ethylsulfonyl group, a phenylsulfonyl group, or a p-methylsulfonyl group is independently exemplified.

Of these groups, each of X₁ and X₂ independently preferably represents a hydrogen atom, an acyl group, or an alkylsulfonyl group, especially preferably a hydrogen atom, and most preferably both of X₁ and X₂ represent a hydrogen atom.

In formula (1), W represents an alkoxy group, an amino group, an alkyl group or an aryl group.

The alkoxy group represented by W is preferably a substituted or unsubstituted alkoxy group having 1 to 30 carbon atoms, e.g., a methoxy group, an ethoxy group, an i-propoxy group, a t-butoxy group, an n-octyloxy group, and a 2-methoxyethoxy group are exemplified.

The amino group represented by W includes an alkylamino group, an arylamino group, and a heterocyclic amino group, preferably an amino group, a substituted or unsubstituted alkylamino group having 1 to 30 carbon atoms, or a substituted or unsubstituted anilino group having 6 to 30 carbon atoms, e.g., a methylamino group, a dimethylamino group, an anilino group, an N-methylanilino group and a diphenylamino group are exemplified.

As each of the alkyl group represented by W, a straight chain, branched or alicyclic, substituted or unsubstituted alkyl group is exemplified, and a cycloalkyl group, a bicycloalkyl group, and further, a tricyclic structure having many cyclic structures are also included. The alkyl groups in the substituents described below (e.g., the alkyl group in an alkoxy group and an alkylthio group) are also alkyl groups having such a concept. In detail, the alkyl group is preferably an alkyl group having 1 to 30 carbon atoms, e.g., a methyl group, an ethyl group, an n-propyl group, an i-propyl group, a t-batyl group, an n-octyl group, an eicosyl group, a 2-chloroethyl group, a 2-cyanoethyl group, and a 2-ethylhexyl group are exemplified. The cycloalkyl group is preferably a substituted or unsubstituted cycloalkyl group having 3 to 30 carbon atoms, e.g., a cyclohexyl group, a cyclopentyl group, and a 4-n-dodecylcyclohexyl group are exemplified. The bicycloalkyl group is preferably a substituted or unsubstituted bicycloalkyl group having 5 to 30 carbon atoms, i.e., a monovalent group obtained by removing one hydrogen atom from bicycloalkane having 5 to 30 carbon atoms, e.g., a bicycle[1,2,2]heptan-2-yl group and a bicycle[2,2,2]octan-3-yl group are exemplified.

The aryl group represented by W is preferably a substituted or unsubstituted aryl group having 6 to 30 carbon atoms, e.g., a phenyl group, a p-tolyl group, a naphthyl group, an m-chlorophenyl group, and an o-hexadecanoylaminophenyl group are exemplified.

Of the above groups, preferred as W is an alkoxy group, an amino group or an alkyl group, more preferably an alkoxy group or an amino group, still more preferably an alkoxy group having total carbon atoms of 5 or less, an amino group (an -NH₂ group), or an alkylamino group having total carbon atoms of 5 or less, and especially preferably an alkoxy group having total carbon atoms of 3 or less, or an alkylamino group having total carbon atoms of 3 or less, and a methoxy group is most preferred of them. When W represents an alkoxy group having total carbon atoms of 5 or less, an amino group, or an alkylamino group having total carbon atoms of 5 or less, colorant molecules easily and firmly form intramolecular and intermolecular interactions. Accordingly, a pigment of more stable molecular arrangement is easily formed, and so preferred in the points of good hue and high fastness (against light, gas, heat, water and chemicals).

In formula (1), R₁ represents a hydrogen atom or a substituent, and when R₁ represents a substituent, the examples of the substituents include a straight chain or branched chain alkyl group having 1 to 12 carbon atoms, a straight chain or branched chain aralkyl group having 7 to 18 carbon atoms, a straight chain or branched chain alkenyl group having 2 to 12 carbon atoms, a straight chain or branched chain alkynyl group having 2 to 12 carbon atoms, a straight chain or branched chain cycloalkyl group having 3 to 12 carbon atoms, a straight chain or branched chain cycloalkenyl group having 3 to 12 carbon atoms (e.g., methyl, ethyl, n-propyl, i-propyl, n-butyl, i-butyl, sec-butyl, t-butyl, 2-ethylhexyl, 2-methylsulfonylethyl, 3-phenoxypropyl, trifluoromethyl, cyclopentyl), a halogen atom (e.g., a chlorine atom, a bromine atom), an aryl group (e.g., phenyl, 4-t-butylphenyl, 2,4-di-t-amylphenyl), a heterocyclic group (e.g., imidazolyl, pyrazolyl, triazolyl, 2-furyl, 2-thienyl, 2-pyrimidinyl, 2-benzothiazolyl), a cyano group, a hydroxyl group, a nitro group, a carboxyl group, an amino group, an alkyloxy group (e.g., methoxy, ethoxy, 2-methoxyethoxy, 2-methylsulfonylethoxy), an aryloxy group (e.g., phenoxy, 2-methylphenoxy, 4-t-butylphenoxy, 3-nitrophenoxy, 3-t-butyloxycarbonylphenoxy, 3-methoxycarbonyl-phenyloxy), an acylamino group (e.g., acetamide, benzamido, 4-(3-t-butyl-4-hydroxy-phenoxy)butanamide), an alkylamino group (e.g., methylamino, butylamino, diethylamino, methylbutylamino), an arylamino group (e.g., phenylamino, 2-chkoroanilino), a ureido group (e.g., phenylureido, methylureido, N,N-dibutylureido), a sulfamoylamino group (e.g., N,N-dipropylsulfamoylamino), an alkylthio group (e.g., methylthio, octylthio, 2-phenoxyethylthio), an arylthio group (e.g., phenylthio, 2-butoxy-5-t-octylphenylthio, 2-carboxyphenylthio), an alkyloxycarbonylamino group (e.g., methoxycarbonylamino), an alkylsulfonylamino group and an arylsulfonylamino group (e.g., methylsulfonylamino, phenylsulfonylamino, p-toluenesulfonylamino), a carbamoyl group (e.g., N-ethylcarbamoyl, N,N-dibutylcarbamoyl), a sulfamoyl group (e.g., N-ethylsulfamoyl N,N-dipropylsulfamoyl, N-phenylsulfamoyl), a sulfonyl group (e.g., methylsulfonyl, octylsulfonyl, phenylsulfonyl, p-toluenesulfonyl), an alkyloxy- carbonyl group (e.g., methoxycarbonyl, butyloxycarbonyl), a heterocyclic oxy group (e.g., 1-phenyltetrazol-5-oxy, 2-tetrahydropyranyloxy), an azo group (e.g., phenylazo, 4-methoxyphenylazo, 4-pivaloylaminophenylazo, 2-hydroxy-4-propanoylphenylazo), an acyloxy group (e.g., acetoxy), a carbamoyloxy group (e.g., N-methylcarbamoyloxy, N-phenylcarbamoyloxy), a silyloxy group (e.g., trimethylsilyloxy, dibutylmethyl- silyloxy), an aryloxycarbonylamino group (e.g., phenoxycarbonylamino), an imido group (e.g., N-succinimido, N-phthalimido), a heterocyclic thio group (e.g., 2-benzothiazolylthio, 2,4-diphenoxy-1,3,5-triazol-6-thio, 2-pyridylthio), a sulfinyl group (e.g., 3-phenoxypropylsulfinyl), a phosphonyl group (e.g., phenoxyphosphonyl, octyloxyphosphonyl, phenylphosphonyl), an aryloxycarbonyl group (e.g., phenoxy- carbonyl), an acyl group (e.g., acetyl, 3-phenylpropanoyl, benzoyl), and an ionic hydrophilic group (e.g., a carboxyl group, a sulfo group, a phosphono group, and a quaternary ammonium group).

In formula (1), R₁ preferably represents a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total, more preferably a straight chain or branched alkyl group having 1 to 8 carbon atoms in total, still more preferably a methyl group or a t-butyl group, and most preferably a t-butyl group.

In formula (1), R₂ represents a heterocyclic group, which may be further condensed. R₂ preferably represents a 5 to 8-membered heterocyclic group, more preferably a 5- or 6-membered substituted or unsubstituted heterocyclic group, and especially preferably a 6-membered nitrogen-containing heterocyclic group having 3 to 10 carbon atoms.

As the examples of heterocyclic groups represented by R₂, without limiting the substitution positions, pyridyl, pyrazinyl, pyridazinyl, pyrimidyl, triazinyl, quinolinyl, i-cluinolinyl, quinazolinyl, cinnolinyl, phthalazinyl, quinoxalinyl, pyrrolyl, indolyl, furyl, benzofuryl, thienyl, benzothienyl, pyrazolyl, imidazolyl, benzimidazolyl, triazolyl, oxazolyl, benzoxazolyl, thiazolyl, benzothiazolyl, i-thiazolyl, benz i-thiazolyl, thiadiazolyl, i-oxazolyl, benz i-oxazolyl, pyrrolidinyl, piperidinyl, piperazinyl, imidazolidinyl, thiazolinyl, and sulforanyl are exemplified.

The examples of preferred heterocyclic rings include a pyridine ring, a pyrimidine ring, an S-triazine ring, a pyridazine ring, a pyrazine ring, a 1,2,4-thiadiazole ring, a 1,3,4-thiadiazole ring, and an imidazole ring, more preferably a pyridine ring, a pyrimidine ring, an S-triazine ring, a pyridazine ring, and a pyrazine ring, especially preferably a pyrimidine ring and an S-triazine ring, and most preferably a pyrimidine ring.

In formula (1), Q represents a nonmetallic atomic group necessary to form a 5-, 6- or 7-membered heterocyclic ring together with a carbon atom, and an aliphatic ring, an aromatic ring or other heterocyclic ring may be condensed with the heterocyclic ring. As the examples of the 5- to 7-membered heterocyclic rings formed by Q together with a carbon atom, e.g., a thienyl group, a furyl group, a pyrrolyl group, an indolyl group, an imidazolyl group, a pyrazolyl group, a thiazolyl group, an i-thiazolyl group, an oxazolyl group, an i-oxazolyl group, a triazinyl group, a pyridyl group, a pyrazinyl group, and a pyridazinyl group are exemplified. Each heterocyclic group may further have a substituent.

The 5- to 7-membered heterocyclic rings formed by Q together with a carbon atom are preferably 5-membered nitrogen-containing heterocyclic rings, and heterocyclic rings represented by the following formulae (a) to (j) are most preferred.
The heterocyclic ring represented by any of (a) to (f) or (j) is preferred, the heterocyclic ring represented by (a), (b), (c), (e) or (j) is more preferred, the heterocyclic ring represented by (a) or (c) is still more preferred, and the heterocyclic ring represented by (a) is most preferred in view of hue, tinctorial strength and image fastness. In the following formulae (a) to (j), "*" is the bonding position with the azo group in formula (1).

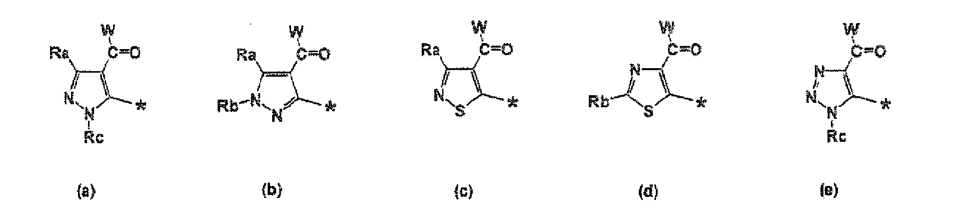

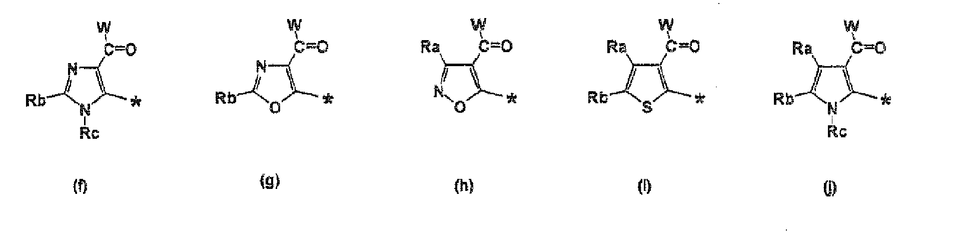

In formulae (a) to (j). Ra represents a hydrogen atom or a substituent; each of Rb and Rc independently represents a hydrogen atom, an alkyl group, a cycloalkyl group, an aralkyl group, an alkenyl group, an alkynyl group, an aryl group or a heterocyclic group; and W has the same meaning with W in formula (1) and preferred groups are also the same.

W preferably represents an alkoxy group (e.g., a methoxy group, an ethoxy group, an i-propoxy group, a t-butoxy group), an amino group (e.g., an -NH₂ group, a methylamino group, a dimethylamino group, an anilino group), an alkyl group (e.g., a methyl group, an ethyl group, an n-propyl group, an i-propyl group, a t-butyl group, a cyclopropyl group), or an aryl group (e.g., a phenyl group, a p-tolyl group, a naphthyl group). An alkoxy group, an amino group, and an alkyl group are preferred of these groups, and an alkoxy group and an amino group are more preferred.
More preferred is an alkoxy group having 5 or less carbon atoms in total, an amino group (an -NH₂ group), or an alkylamino group having 5 or less carbon atoms in total. The case where W is an alkoxy group having 5 or less carbon atoms in total, an amino group or an alkylamino group having 5 or less carbon atoms in total is preferred in the points of good hue and high fastness (against light, gas, heat, water and chemicals).
From the points of hue, light fastness and solvent resistance, especially preferred case is an alkoxy group having 3 or less carbon atoms in total, an amino group (an -NH₂ group), or an alkylamino group having 3 or less carbon atoms in total. Of these, a methoxy group (an -OCH₃ group), an ethoxy group (an -OC₂H₅ group) or an amino group is especially preferred, and a methoxy group is most preferred from good hue and improvement of light fastness.

Ra preferably represents a hydrogen atom, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total, more preferably a hydrogen atom, or a straight chain or branched alkyl group having 1 to 8 carbon atoms in total, and especially preferably a hydrogen atom or a straight chain alkyl group having 1 to 4 carbon atoms in total, especially preferred from the points of hue and image fastness is a hydrogen atom or a methyl group, and a hydrogen atom is most preferred in the points of good hue and improvement of light fastness.

Each of Rb and Rc preferably represents a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group, more preferably a substituted or unsubstituted alkyl group, a substituted or unsubstituted aryl group, or a substituted or unsubstituted heterocyclic group, especially preferably an alkyl group having 3 or less carbon atoms in total from the points of hue and image fastness, and most preferably a methyl group in view of good hue and improvement of light fastness.

When each of Q, W, X₁, X₂, R₁ or R₂ further has a substituent, the following groups can be exemplified as the examples of the substituents (hereinafter sometimes referred to as "substituents J"),

For example, a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyl- oxy group, an aryloxycarbonyloxy group, an amino group, an acylamino group, an aminocarbonylamino group, an alkoxycarbonylamino group, an aryloxy carbonylamino group, a sulfamoylamino group, an alkyl- or arylsulfonylamino group, a mercapto group, an alkylthio group, an arylthio group, a heterocyclic thio group, a sulfamoyl group, an alkyl- or arylsulfinyl group, an alkyl- or arylsulfonyl group, an acyl group, an aryloxycarbonyl group, an alkoxycarbonyl group, a carbamoyl group, an aryl- or heterocyclic azo group, an imido group, a phosphino group, a phosphinyl group, a phosphinyloxy group, a phosphinylamino group, a silyl group, and an ionic hydrophilic group are exemplified.

In more detail, as the halogen atom, e.g., a fluorine atom, a chlorine atom, a bromine atom and an iodine atom are exemplified.

As the alkyl group, straight chain, branched or cyclic, substituted or unsubstituted alkyl groups are exemplified, and a cycloalkyl group, a bicycloalkyl group, and further, a tricyclic structure having many cyclic structures are also included. The alkyl groups in the substituents described below (e.g., the alkyl group in an alkoxy group and an alkylthio group) are also alkyl groups having such a concept. In detail, the alkyl group is preferably an alkyl group having 1 to 30 carbon atoms, e.g., a methyl group, an ethyl group, an n-propyl group, an i-propyl group, a t-butyl group, an n-octyl group, an eicosyl group, a 2-chloroethyl group, a 2-cyanoethyl group, and a 2-ethylhexyl group are exemplified. The cycloalkyl group is preferably a substituted or unsubstituted cycloalkyl group having 3 to 30 carbon atoms, e.g., a cyclohexyl group, a cyclopentyl group, and a 4-n-dodecylcyclohexyl group are exemplified. The bicycloalkyl group is preferably a substituted or unsubstituted bicycloalkyl group having 5 to 30 carbon atoms, i.e., a monovalent group obtained by removing one hydrogen atom from bicycloalkane having 5 to 30 carbon atoms, e.g., a bicycle[1,2,2]heptan-2-yl group and a bicycle[2,2,2]octan-3-yl group are exemplified.

Examples of the aralkyl group include substituted or unsubstituted aralkyl groups. Preferred examples of the substituted or unsubstituted aralkyl groups include aralkyl groups containing from 7 to 30 carbon atoms, such as a benzyl group and a 2-phenethyl group.

Examples of the alkenyl group include straight, branched, or cyclic, substituted or unsubstituted alkenyl groups, with a cycloalkenyl group and a bicycloalkenyl group being also included. More specifically, the alkenyl group is preferably a substituted or unsubstituted alkenyl group containing from 2 to 30 carbon atoms, and examples thereof include a vinyl group, an allyl group, a prenyl group, a geranyl group, or an oleyl group. The cycloalkenyl group is preferably a substituted or unsubstituted cycloalkyl group containing from 3 to 30 carbon atoms, i.e., a monovalent group formed by removing one hydrogen atom from a cycloalkene containing from 3 to 30 carbon atoms, and examples thereof include a 2-cyclopentenn-1-yl group and a 2-cyclohexen-1-yl group. The bicycloalenkyl group is a substituted or unsubstituted bicycloalkenyl group, preferably a substituted or unsubstituted bicycloalkenyl group containing from 5 to 30 carbon atoms, i.e., a monovalent group formed by removing one hydrogen atom from a bicycloalkene containing one double bond, and examples thereof include a bicyclo[2,2,1]hept-2-en-1-yl group and a bicyclo[2,2,2]oct-2-en-4-yl group.

The alkynyl group is preferably a substituted or unsubstituted alkynyl group containing from 2 to 30 carbon atoms, such as an ethynyl group, a propargyl group, or a trimethylsilylethynyl group.

The aryl group is preferably a substituted or unsubstituted aryl group containing from 6 to 30 carbon atoms, such as a phenyl group, a p-tolyl group, a naphthyl group, a m-chlorophenyl group, or an o-hexadecanoylaminophenyl group.

The heterocyclic group is preferably a monovalent group formed by removing one hydrogen atom from a 5- or 6-membered, substituted or unsubstituted, aromatic or non-aromatic, heterocyclic compound, more preferably a 5- or 6-membered aromatic heterocyclic group containing from 3 to 30 carbon atoms, such as a 2-furyl group, a 2-thienyl group, a 2-pyrimidinyl group, or a 2-benzothiazolyl group.

The alkoxy group is preferably a substituted or unsubstituted alkoxy group containing from 1 to 30 carbon atoms, and examples thereof include a methoxy group, an ethoxy group, an isopropoxy group, a t-butoxy group, a n-octyloxy group, and a 2-methoxyethoxy group.

The aryloxy group is preferably a substituted or unsubstituted aryloxy group containing from 6 to 30 carbon atoms, and examples thereof include a phenoxy group, a 2-methylphenoxy group, a 4-t-butylphenoxy group, a 3-nitrophenoxy group, and a 2-tetradecanoylaminophenoxy group.

The silyloxy group is preferably a substituted or unsubstituted silyloxy group containing from 0 to 20 carbon atoms, and examples thereof include a trimethylsilyloxy group and a diphenylmethylsilyloxy group.

The heterocyclic oxy group is preferably a substituted or unsubstituted heterocyclic oxy group containing from 2 to 30 carbon atoms, and examples thereof include a I -phenyltetrazol-5-oxy group and a 2-tetrahydropyranylnxy group.

The acyloxy group is preferably a formyloxy group, a substituted or unsubstituted alkylcarbonyloxy group containing from 2 to 30 carbon atoms, a substituted or unsubstituted arylcarbonyloxy group containing from 6 to 30 carbon atoms, and examples thereof include an acetyloxy group, a pivaloyloxy group, a stearoyloxy group, a benzoyloxy group, and a p-methoxyphenylcarbonyloxy group.

The carbamoyloxy group is preferably a substituted or unsubstituted carbamoyloxy group containing from 1 to 30 carbon atoms, and the examples thereof include an N,N-dimethylcarbarrzaylaxy group, an N,N-diethylcarbamoyloxy group, a morpholinocarbonyloxy group, an N,N-di-n-octylaminocarbonyloxy group, and an N-n-octylcarbamoyloxy group.

The alkoxycarbonyloxy group is preferably a substituted or unsubstituted alkoxycarbonyloxy group containing from 2 to 30 carbon atoms, and the examples thereof include a methoxycarbonyloxy group, an ethoxycarbonyloxy group, a t-butoxycarbonyloxy group, and a n-octylcarbonyloxy group.

The aryloxycarbonyloxy group is preferably a substituted or unsubstituted aryloxycarbonyloxy group containing from 7 to 30 carbon atoms, and the examples thereof include a phenoxycabonyloxy group, a p-methoxyphenoxycarbonyloxy group, and a p-n-hexadecyloxyphenoxycarbonyloxy group.

The amino group includes an alkylamino group, an arylamino group, and a heterocyclic amino group, and is preferably an amino group, a substituted or unsubstituted alkylamino group containing from 1 to 30 carbon atoms, or a substituted or unsubstituted anilino group containing from 6 to 30 carbon atoms. Examples thereof include a methylamino group, a dimethylamino group, an anilino group, an N-methyl-anilino group, and a diphenylamino group.

The acylamino group is' preferably a formylamino group, a substituted or unsubstituted alkylcarbonylamino group containing from 1 to 30 carbon atoms, or a substituted or unsubstituted arylcarbonylamino group containing from 6 to 30 carbon atoms. Examples thereof include an acetylamino group, a pivaloylamino group, a lauroylamino group, a benzoylamino group, and a 3,4,5-tri-n-octyloxyphenylcarbonylamino group.

The aminocarbonylamino group is preferably a substituted or unsubstituted aminocarbonylamino group containing from 1 to 30 carbon atoms, and the examples thereof include a carbamoylamino group, an N.N-dimethylaminocarbonylamino group, an N,N-diethylaminocarbonylamino group, and a morpholinocarbonylamino group.

The alkoxycarbonylamino group is preferably a substituted or unsubstituted alkoxycarbonylamino group containing from 2 to 30 carbon atoms, and the examples thereof include a methoxycarbonyl amino group, an ethoxycarbonylarnino group, a t-butoxycarbonylamino group, a n-octadecyloxycarbonylamino group, and an N-methyl-methoxycarbonylamino group.

The aryloxycarbonylamino group is preferably a substituted or unsubstituted aryloxycarbonylamino group containing from 7 to 30 carbon atoms, and the examples thereof include a phenoxycarbonylamino group, a p-chlorophenoxycarbonylamino group, and a m-n-octyloxyphenoxycarbonylamino group.

The sulfamoylamino group group is preferably a substituted or unsubstituted sulfamoylamino group containing from 0 to 30 carbon atoms, and the examples thereof include a sulfamoylamino group, an N,N-dimethylaminosulfonylamino group, and an N-n-octylaminosulfonylamino group.

The alkyl- or aryl-sulfonyl amino group group is preferably a substituted or unsubstituted alkylsulfonylamino group containing from 1 to 30 carbon atoms, or a substituted or unsubstituted arylsulfonylamino group containing from 6 to 30 carbon atoms, and the examples thereof include a methylsulfonylamino group, a butylsulfonylamino group, a phenylsulfonylamino group, a 2,3,5-trichlorophenylsulfonylamino group, and a p-methylphenylsulfonylamino group.
The alkylthio group is preferably a substituted or unsubstituted alkylthio group containing from 1 to 30 carbon atoms, and the examples thereof include a methylthio group, an methylthio group, and a n-hexadecylthio group.

The arylthio group is preferably a substituted or unsubstituted arylthio group containing from 6 to 30 carbon atoms, and the examples thereof include a phenylthio group, a. p-chlorophenylthio group, and a m-methoxyphenylthio group.

The heterocyclic thio group is preferably a substituted or unsubstituted heterocyclic thio group containing from 2 to 30 carbon atoms, and the examples thereof include a 2-benzothiazolylthio group and a 1-phenyltetrazol-5-ylthio group.

The sulfamoyl group is preferably a substituted or unsubstituted sulfamoyl group containing from 0 to 30 carbon atoms, and the examples thereof include an N-ethylsulfamoyl group, an N-(3-dodecyloxypropyl)sulfamoyl group, an N.N-dirnethylsulfamayl group, an N-acetytsulfamoyl group, an N-benzoyisulfamoyl group, and an N-(N'-phenylcarbamoyl)sulfamoyl group.

The alkyl- or aryl-sulfinyl group is preferably a substituted or unsubstituted alkylsulfinyl group containing from 1 to 30 carbon atoms, or a substituted or unsubstituted arylsulfinyl group containing from 6 to 30 carbon atoms, and the examples thereof include a methylsulfinyl group, an ethylsulfinyl group, a phenylsulfinyl group, and a p-methylphenylsulfinyl group.

The alkyl- or aryl-sulfonyl group is preferably a substituted or unsubstituted alkylsulfonyl group containing from 1 to 30 carbon atoms, or a substituted or unsubstituted arylsulfonyl group containing from 6 to 30 carbon atoms, and the examples thereof include a methylsulfonyl group, an ethylsulfonyl group, a phenylsulfonyl group, and a p-methylphenylsulfonyl group.

The acyl group is preferably a formyl group, a substituted or unsubstituted alkylcarbonyl group containing from 2 to 30 carbon atoms, a substituted or unsubstituted arylcarbonyl group containing from 7 to 30 carbon atoms, or a substituted or unsubstituted heterocyclic carbonyl group containing from 2 to 30 carbon atoms wherein the heterocyclic ring is connected to the carbonyl group via a carbon atom. Examples thereof include an acetyl group, a pivaloyl group, a 2-chloroacetyl group, a stearoyl group, a benzoylamino group, a p-n-octyloxyphenylcarbonyl group, a 2-pyridylcarbonyl group, and a 2-furylcarbonyl group.

The aryloxycarbonyl group is preferably a substituted or unsubstituted aryloxycarbony group containing from 7 to 30 carbon atoms, and the examples thereof include a phenoxycarbonyl group, an o-chlorophenoxycarbonyl group, a m-nitrophenoxycarbonyl group, and a p-t-butylphenoxycarbonyl group.

The alkoxycarbonyl group is preferably a substituted or unsubstituted alkoxycarbony group containing from 2 to 30 carbon atoms, and the examples thereof include a methoxycarbonyl group, an ethoxycarbonyl group, a t-butoxycarbonyl group, and a n-octadecyloxycarbonyl group.

The carbamoyl group is preferably a substituted or unsubstituted carbamoyl group containing from 1 to 30 carbon atoms, and the examples thereof include a carbamoyl! group, an N-methylcarbamoyl group, an N,N-dimethylcarbamoyl group, an NN-di-n-octylearbamoyl group, and an N-(methylsulfonyl)carbamoyl group.

The aryl or heterocyclic azo group is preferably a substituted or unsubstituted aryl azo group containing from 6 to 30 carbon atoms, or a substituted or unsubstituted heterocyclic azo group containing from 3 to 30 carbon atoms, and the examples thereof include phenylazo, p-chlorophenylazo, and 5-ethylthio-1,3,4-thiadiazol-2-ylazo.

The imido group is preferably an N-succinimido group or an N-phthalimido group.

The phosphino group is preferably a substituted or unsubstituted phosphino group containing from 0 to 30 carbon atoms, and the examples thereof include a dimethylphosphino group, a diphenylphosphino group, and a methylphenoxyphosphino group.

The phosphinyl group is preferably a substituted or unsubstituted phosphinyl group containing from 0 to 30 carbon atoms, and the examples thereof include a phosphinyl group, a dioctyloxyphosphinyl group, and a diethoxyphosphinyl group.

The phosphinyloxy group is preferably a substituted or unsubstituted phosphinyloxy group containing from 0 to 30 carbon atoms, and the examples thereof include a diphenoxyphosphinyloxy group and a dioctyloxyphosphinyloxy group.

The phosphinylamino group is preferably a substituted or unsubstituted phosphinylamino group containing from 0 to 30 carbon atoms, and the examples thereof include a dimethoxyphosphinylamino group and a dimethylaminophosphinylamino group.

The silyl group is preferably a substituted or unsubstituted silyl group containing from 0 to 30 carbon atoms, and the examples thereof include a trimethylsilyl group, a t-butyldimetixylsilyl group, and a phenyldimethylsilyl group.

The inonic hydrophilic group is preferably a lake pigment such as -SO₃M, -CO₂M, wherein M is Ca, Mg, and Ba and so on.

Of the above-described substituents, with those which have a hydrogen atom, the hydrogen atom may be substituted by the above-described substituent. Examples of such substituents include an alkylcarbonylaminosulfonyl group, an arylcarbonylaminosulfonyl group, an alkylsulfonylaminocarbonyl group, and an arylsulfonylaminocarbonyl group. Examples thereof include a methylsuifonylaminocarbonyl group, a p-methylphenylsulfonylaminocarbonyl group, an acetylaminosulfonyl group, and a benzoylaminosulfonyl group.

With regard to preferred combinations of substituents of the pigment represented by formula (1) in the invention, a compound in which at least one of various substituents is the above preferred group is preferred, a compound in which more kinds of various substituents are the above preferred groups is more preferred, and a compound in which all the substituents are the above preferred groups is most preferred.

Especially preferred combinations as the azo pigment represented by formula (1) of the invention are combinations including the following (a) to (f).

(a) Each of X₁ and X₂ independently preferably represents a hydrogen atom, an alkyl group (e.g., a methyl group, an ethyl group, an n-propyl group, an i-propyl group, a t-butyl group, a cyclopropyl group), an acyl group (e.g., a formyl group, an acetyl group, a pivaloyl group, a benzoyl group), an alkylsulfonyl group (e.g., a methylsulfonyl group, an ethylsulfonyl group), or an arylsulfonyl group (e.g., a phenylsulfonyl group), more preferably a hydrogen atom, an acetyl group or a methylsulfonyl group, especially preferably a hydrogen atom, and most preferably both of X₁ and X₂ represent a hydrogen atom.

(b) W preferably represents an alkoxy group (e.g., a methoxy group, an ethoxy group, an i-propoxy group, a t-butoxy group), an amino group (e.g., an -NH₂ group, a methylamino group, a dimethylamino group, an anilino group), an alkyl group (e.g., a methyl group, an ethyl group, an n-propyl group, an i-propyl group, a t-butyl group, a cyclopropyl group), or an aryl group (e.g., a phenyl group, a p-tolyl group, a naphthyl group), more preferably represents an alkoxy group, an amino group or an alkyl group, and still more preferably an alkoxy group or an amino group.
W more preferably represents an alkoxy group having 5 or less carbon atoms in total, an amino group (e.g., an -NH₂ group), or an alkylamino group having 5 or less carbon atoms in total. The case where W represents an alkoxy group having total carbon atoms of 5 or less, an amino group, or an alkylamino group having total carbon atoms of 5 or less is preferred in the points of good hue and high fastness (against light, gas, heat, water and chemicals).
From the points of hue, light fastness and solvent resistance, W especially preferably represents an alkoxy group having total carbon atoms of 3 or less, an amino group (e.g., an -NH₂ group), or an alkylamino group having total carbon atoms of 3 or less, of these groups a methoxy group (e.g., an -OCH₃ group) or an ethoxy group (e.g., an -OC₂H₅ group) is preferred, and a methoxy group is most preferred from good hue and improvement of light fastness.

(c) R₁ preferably represents a hydrogen atom or a substituent (e.g., a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total), more preferably a straight chain or branched alkyl group having 1 to 8 carbon atoms in total, a substituted or unsubstituted aryl group having 6 to 10 carbon atoms in total, or a substituted or unsubstituted heterocyclic group having 4 to 8 carbon atoms in total, still more preferably a methyl group, an i-propyl group, a t-butyl group, a phenyl ring, or a pyridine ring, and most preferably a t-butyl group.

(d) R₂ represents a heterocyclic group, which may further be condensed. R₂ preferably represents a 5 to 8-membered heterocyclic group, more preferably a 5- or 6-membered substituted or unsubstituted heterocyclic group, and especially preferably a 6-membered nitrogen-containing heterocyclic group having 3 to 10 carbon atoms. The examples of more preferred heterocyclic rings include a pyridine ring, a pyrimidine ring, an S-triazine ring, a pyridazine ring, a pyrazine ring, a 1,2,4-thiadiazole ring, a 1.3,4-thiadiazole ring, and an imidazole ring, more preferred examples are a pyridine ring, a pyrimidine ring, an S-tnazine ring, a pyridazine ring, and a pyrazine ring, especially preferred are a pyrimidine ring and an S-triazine ring, and a pyrimidine ring is most preferred.

(e) Q represents a 5-. 6- or 7-membered heterocyclic ring together with a carbon atom, and an aliphatic ring, an aromatic ring or other heterocyclic ring may be condensed with the heterocyclic ring. As the examples of the 5- to 7-membered heterocyclic rings formed by Q together with a carbon atom, e.g., a thienyl group, a furyl group, a pyrrolyl group, an indolyl group, an imidazolyl group, a pyrazolyl group, a thiazolyl group, an i-thiazolyl group, an oxazolyl group, an i-oxazolyl group, a triazinyl group, a pyridyl group, a pyrazinyl group, and a pyridazinyl group are exemplified. Each heterocyclic group may further have a substituent. A 5- to 7-membered ring formed by Q with a carbon atom is preferably a 5-membered nitrogen-containing heterocyclic ring, and a heterocyclic ring represented by any of formulae (a) to (j) is most preferred. The preferred examples of Ra, Rb and Rc of the heterocyclic rings represented by formulae (a) to (j) are the same with those described above,

(f) n preferably represents an integer of 1 to 3, more preferably 1 or 2, and most preferably 2.

The azo pigment represented by formula (1) is preferably an azo pigment represented by the following formula (2).

The azo pigment represented by formula (2), a tautomer thereof, a salt thereof, a hydrate thereof, or a solvate thereof will be described in detail below.

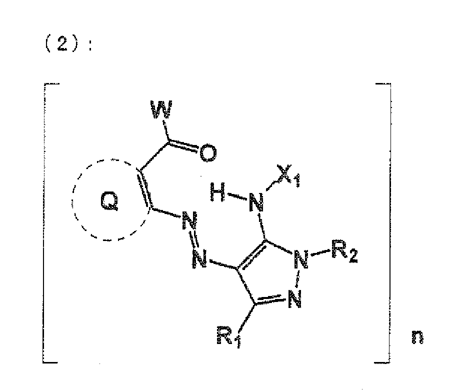

In formula (2), Q, W, X₁, R₁, R₂ and n respectively have the same meaning with Q, W, X₁, R₁, R₂ and n in formula (1). When n is 2, formula (2) represents a dimer via Q, W, X₁, R₁ or R₂. When n is 3, formula (2) represents a trimer via Q, W, X₁, R₁ or R₂. When n is 4, formulae (2) represents a tetramer via Q, W, X₁, R₁ or R₂.

Q, W, X₁, R₁, R₂ and n are described in further detail below.

The examples of Q are the same with those of Q in formula (1) and preferred examples are also the same.

The examples of W are the same with those of W in formula (1) and preferred examples are also the same.

The examples of X₁ are the same with those of X₁ in formula (1) and preferred examples are also the same.

The examples of R₁ and R₂ are the same with those of R₁ and R₂ in formula (1) and preferred examples are also the same.

The examples of n are the same with those of n in formula (1) and preferred examples are also the same.

With regard to preferred combinations of substituents of the pigment represented by formula (2) in the invention, a compound in which at least one of various substituents is the above preferred group is preferred, a compound in which more kinds of various substituents are the above preferred groups is more preferred, and a compound in which all the substituents are the above preferred groups is most preferred.

Especially preferred combinations as the azo pigment represented by formula (2) of the invention are combinations including the following (a) and the above (b) to (f).

(a) X₁ preferably represents a hydrogen atom, an alkyl group (e.g., a methyl group, an ethyl group, an n-propyl group, an i-propyl group, a t-butyl group, a cyclopropyl group), an acyl group (e.g., a formyl group, an acetyl group, a pivaloyl group, a benzoyl group), an alkylsulfonyl group (e.g., a methylsulfonyl group, an ethylsulfonyl group), or an arylsulfonyl group (e.g., a phenylsulfonyl group), more preferably a hydrogen atom, an acetyl group or a methylsulfonyl group, and most preferably a hydrogen atom.

Tautomers of the azo pigments represented by formulae (1) and (2) are also included in the same scope. Formulae (1) and (2) are shown in the form of limiting structural formulae out of several kinds of tautomers that can be taken in terms of chemical structures, but the pigment may be a tautomer other than the structures shown, or a mixture containing plural tautomers may also be used.

For example, the pigment represented by formula (2) is considered to have a tautomer of azo-hydrazone represented by the following formula (2').

A compound represented by the following formula (2'), which is a tautomer of the azo pigment represented by formula (2), is also included in the same scope.

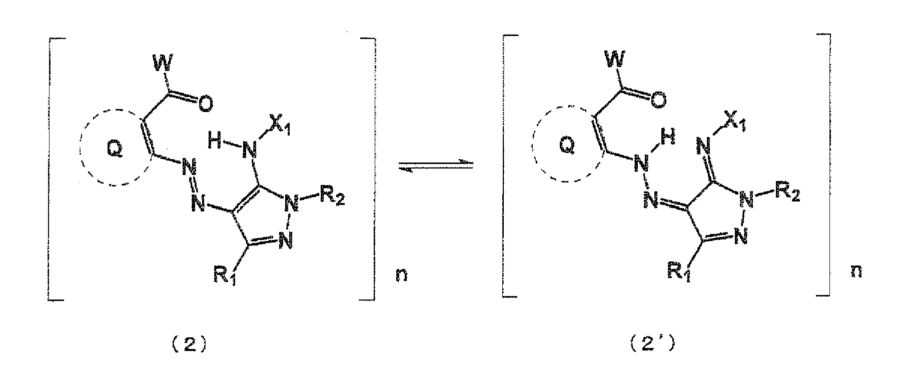

In formula (2'), R₁, R₂ Q, W, X₁, and n respectively have the same meaning with R₁, R₂ Q, W, X₁, and n in formula (2).

The azo pigment represented by formula (1) is preferably an azo pigment represented by the following formula (3).

The azo pigment represented by formula (3), a tautomer thereof, a salt thereof, a hydrate thereof, or a solvate thereof will be described in detail below.

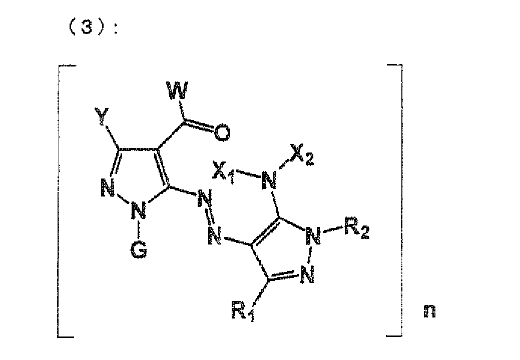

In formula (3), Y represents a hydrogen atom or a substituent; G represents a hydrogen atom, an alkyl group, a cycloalkyl group, an aralkyl group, an alkenyl group, an alkenyl group, an aryl group or a heterocyclic group; W, X₁, X₂, R₁, R₂ and n respectively have the same meanings with W, X₁, X₂, R₁, R₂ and n in formula (1), and when n is 2, formula (3) represents a dimer via Q, W, X₁, X₂, R₁ or R₂, when n is 3, formula (3) represents a trimer via Q, W, X₁, X₂, R₁ or R₂, and when n is 4, formula (3) represents a tetramer via Q, W, X₁, X₂, R₁ or R₂.

The above W, X₁, X₂, R₁, R₂, G, Y and n will be described in further detail below.

The examples of W are the same with those of W in formula (1) and preferred examples are also the same.

The examples of each of X₁ and X₂ are independently the same with those of X₁ and X₂ in formula (1) and preferred examples are also the same.

The examples of each of R₁ and R₂ are independently the same with those of R₁ and R₂ in formula (1) and preferred examples are also the same.

The examples of n are the same with those of n in formula (1) and preferred examples are also the same.

G represents a hydrogen atom, an alkyl group, a cycloalkyl group, an aralkyl group, an alkenyl group, an alkynyl group, an aryl group or a heterocyclic group, preferably a hydrogen atom, a methyl group, an ethyl group, an n-propyl group, an i-propyl group, a t-butyl group, a cyclopropyl group, a benzyl group, a 2-phenethyl group, a vinyl group, an allyl group, an ethynyl group, a propargyl group, a phenyl group, a p-tolyl group, a naphthyl group, a pyridyl group, a pyrimidinyl group, or a pyrazinyl group, more preferably a hydrogen atom, a methyl group, a phenyl group, a pyridyl group, a pyrimidinyl group, or a pyrazinyl group, still more preferably a methyl group, a 2-pyridyl group, a 2,6-pyrimidinyl group, or a 2,5-pyrazinyl group, still further preferably an alkyl group having 5 or less carbon atoms in total, still yet preferably an alkyl group having 3 or less carbon atoms in total, and most preferably a methyl group.

When Y represents a substituent, the examples of the substituents include a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonyl amino group, an alkoxycarbonylamino group, an aryloxycarbonylamino group, a sulfamoylamino group, an alkyl- or arylsulfonylamino group, a mercapto group, an alkylthio group, an arylthio group, a heterocyclic thio group, a sulfamoyl group, an alkyl- or arylsulfinyl group, an alkyl- or arylsulfonyl group, an acyl group, an aryloxycarbonyl group, an alkoxycarbonyl group, a carbamoyl group, an aryl- or heterocyclic azo group, an imido group, a phosphino group, a phosphinyl group, a phosphinyloxy group, a phosphinylamino group, and a silyl group. Y preferably represents a hydrogen atom, an alkyl group (e.g., a methyl group), an aryl group (e.g., a phenyl group), a heterocyclic group (e.g., a 2-pyridyl group), or an alkylthio group (e.g., a methylthio group), more preferably a hydrogen atom, a methyl group, a phenyl group, or a methylthio group, and most preferably a hydrogen atom.

With regard to preferred combinations of substituents of the pigment represented by formula (3) in the invention, a compound in which at least one of various substituents is the above preferred group is preferred, a compound in which more kinds of various substituents are the above preferred groups is more preferred, and a compound in which all the substituents are the above preferred groups is most preferred.

Especially preferred combinations as the azo pigment represented by formula (3) of the invention are combinations including the following (a) to (g).

(a) Each of X₁ and X₂ independently preferably represents a hydrogen atom, an alkyl group (e.g., a methyl group, an ethyl group, an n-propyl group, an i-propyl group, a t-butyl group, a cyclopropyl group), an acyl group (e.g., a formyl group, an acetyl group, a pivaloyl group, a benzoyl group), an alkylsulfonyl group (e.g., a methylsulfonyl group, an ethylsulfonyl group), or an arylsulfonyl group (e.g., a phenylsulfonyl group), more preferably a hydrogen atom, an acetyl group or a methylsulfonyl group, especially preferably a hydrogen atom, particularly preferably at least one of X₁ and X₂ represents a hydrogen atom, and most preferably both of X₁ and X₂ represent a hydrogen atom. The case where at least one of X₁ and X₂ represents a hydrogen atom is preferred for the reason that not only intermolecular interaction but also intramolecular interaction of colorant molecules are easily and firmly formed, and so a pigment of more stable molecular arrangement is easily formed and preferred in the points of good hue and high fastness (against light, gas, heat, water and chemicals).

(b) W preferably represents an alkoxy group (e.g., a methoxy group, an ethoxy group, an i-propoxy group, a t-butoxy group), an amino group (e.g., an -NH₂ group, a methylamino group, a dimethylamino group, an anilino group), an alkyl group (e.g., a methyl group, an ethyl group, an n-propyl group, an i-propyl group, a t-butyl group, a cyclopropyl group), or an aryl group (e.g., a phenyl group, a p-tolyl group, a naphthyl group), more preferably represents an alkoxy group, an amino group or an alkyl group, and still more preferably an alkoxy group or an amino group.
W more preferably represents an alkoxy group having 5 or less carbon atoms in total, an amino group (e.g., an -NH₂ group), or an alkylamino group having 5 or less carbon atoms in total. The case where W represents an alkoxy group having total carbon atoms of 5 or less, an amino group, or an alkylamino group having total carbon atoms of 5 or less is preferred in the points of good hue and high fastness (against light, gas, heat, water and chemicals).
From the points of hue, light fastness and solvent resistance, W especially preferably represents an alkoxy group having total carbon atoms of 3 or less, an amino group (e.g., an -NH₂ group), or an alkylamino group having total carbon atoms of 3 or less, of these groups a methoxy group (e.g., an -OCH₃ group) or an ethoxy group (e.g., an -OC₂H₅ group) is preferred, and a methoxy group is most preferred from good hue and improvement of light fastness.

(c) R₁ preferably represents a hydrogen atom or a substituent (e.g., a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total), more preferably a straight chain or branched alkyl group having 1 to 8 carbon atoms in total, a substituted or unsubstituted aryl group having 6 to 10 carbon atoms in total, or a substituted or unsubstituted heterocyclic group having 4 to 8 carbon atoms in total, still more preferably a methyl group, an i-propyl group, a t-butyl group, a phenyl ring, or a pyridine ring, and most preferably a t-butyl group.

(d) R₂ represents a heterocyclic group, which may further be condensed. R₂ preferably represents a 5 to 8-membered heterocyclic group, more preferably a 5- or 6-membered substituted or unsubstituted heterocyclic group, and especially preferably a 6-membered nitrogen-containing heterocyclic group having 3 to 10 carbon atoms. The examples of more preferred heterocyclic rings include a pyridine ring, a pyrimidine ring, an S-triazine ring, a pyridazine ring, a pyrazine ring, a 1,2,4-thiadiazole ring, a 1,3,4-thiadiazole ring, and an imidazole ring, more preferred examples are a pyridine ring, a pyrimidine ring, an S-triazine ring, a pyridazine ring, and a pyrazine ring, especially preferred are a pyrimidine ring and an S-triazine ring, and a pyrimidine ring is most preferred.

(e) G preferably represents a hydrogen atom, or an alkyl, cycloalkyl, aralkyl, alkenyl, alkynyl, aryl or heterocyclic group each of which has 12 or less carbon atoms in total.
More preferably G represents an alkyl group having 6 or less carbon atoms in total, a cycloalkyl group having 6 or less carbon atoms in total, an aralkyl having 12 or less carbon atoms in total, an alkenyl group having 12 or less carbon atoms in total, an alkynyl group having 12 or less carbon atoms in total, an aryl group having 18 or less carbon atoms in total, or a heterocyclic group having 12 or less carbon atoms in total.
Still more preferably G represents a hydrogen atom, a methyl group, an ethyl group, an n-propyl group, an i-propyl group, a t-butyl group, a cyclopropyl group, a benzyl group, a 2-phenethyl group, a vinyl group, an allyl group, an ethynyl group, a propargyl group, a benzyl group, a 2-phenethyl group, a phenyl group, a p-tolyl group, a naphthyl group, a pyridyl group, a pyrimidinyl group, or a pyrazinyl group.
Especially preferably a hydrogen atom, a methyl group, a phenyl group, a pyridyl group, a pyrimidinyl group, or a pyrazinyl group, of these groups a methyl group, a 2-pyridyl group, a 2,6-pyrimidinyl group, or a 2,5-pyrazinyl group is preferred, and a methyl group is most preferred.

(f) Y represents a hydrogen atom, an alkyl group (e.g., a methyl group), an aryl group (e.g., a phenyl group), a heterocyclic group (e.g., a 2-pyridyl group), or an alkylthio group (e.g., a methylthio group), more preferably a hydrogen atom, a methyl group, a phenyl group, or a methylthio group, and most preferably a hydrogen atom.

(g) n preferably represents an integer of 1 to 3, more preferably 1 or 2, and most preferably 2.

In formulae (1), (2) and (3), n is preferably 2 or 3, and especially preferably n is 2. When n is 2, high tinctorial strength and excellent light fastness are obtained and chemical resistance is improved.

When n is 2 in formulae (1), (2) and (3), the azo pigments, tautomers thereof, salts thereof, hydrates thereof or solvates thereof represent dimers via Q, W, X₁, X₂, R₁ or R₂.

When the azo pigments, tautomers thereof salts thereof, hydrates thereof or solvates thereof represent dimers, for example, the following-shown linking systems represented by formulae (4), (5), (6), (7), (8) and (9) are exemplified.

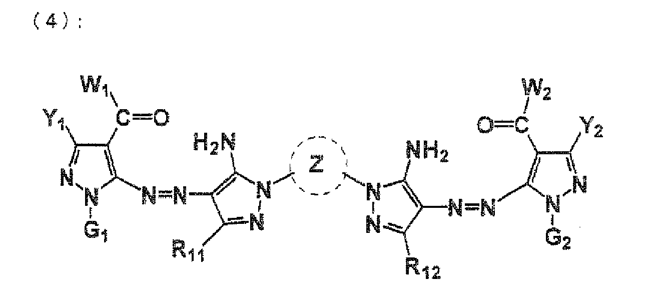

In formula (4), each of G₁ and G₂ independently has the same meaning with G in formula (3).
Each of R₁₁ and R₁₂ independently has the same meaning with R₁ in formula (3).
Each of W₁ and W₂ independently has the same meaning with W in formula (3).
Each of Y₁ and Y₂ independently has the same meaning with Y in formula (3).
Z has the same meaning with the case where R₂ in formula (3) represents a divalent substituent.

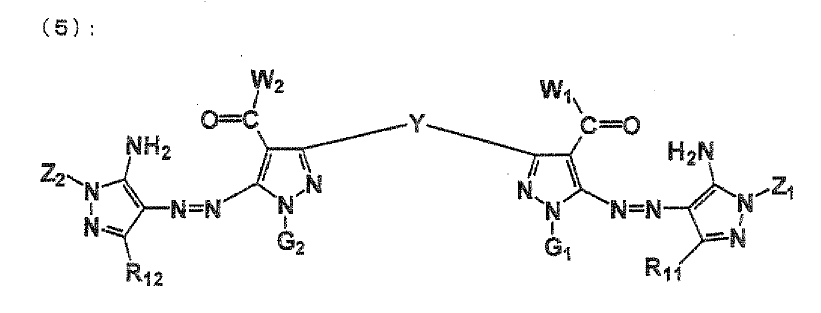

In formula (5), each of G₁ and G₂ independently has the same meaning with G in formula (3).
Each of R₁₁ and R₁₂ independently has the same meaning with R₁ in formula (3).
Each of W₁ and W₂ independently has the same meaning with W in formula (3).
Each of Z₁ and Z₂ independently has the same meaning with R₂ in formula (3).
Y has the same meaning with the case where Y in formula (3) represents a divalent substituent.

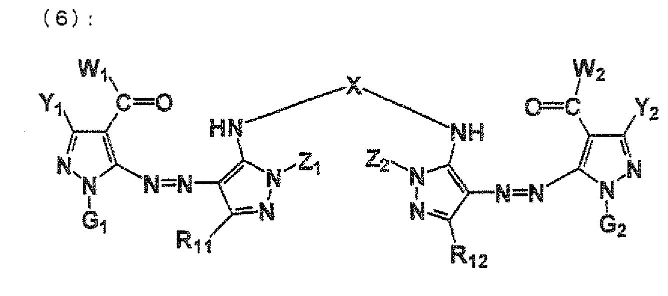

In formula (6), each of G₁ and G₂ independently has the same meaning with G in formula (3).
Each of R₁₁ and R₁₂ independently has the same meaning with R₁ in formula (3).
Each of W₁ and W₂ independently has the same meaning with W in formula (3).
Each of Y₁ and Y₂ independently has the same meaning with Y in formula (3).
Each of Z₁ and Z₂ independently has the same meaning with R₂ in formula (3).
X has the same meaning with the case where X₁ or X₂ in formula (3) represents a divalent substituent.

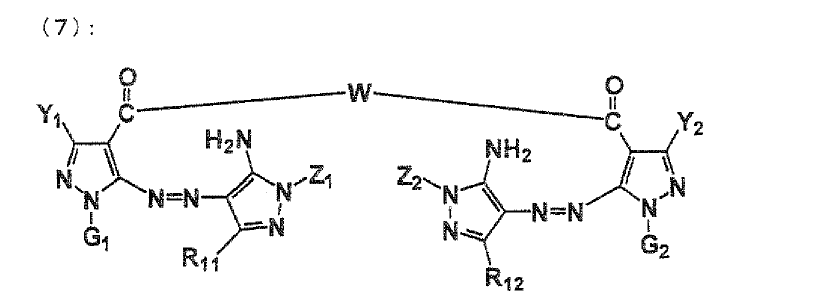

In formula (7), each of G₁ and G₂ independently has the same meaning with G in formula (3).
Each of R₁₁ and R₁₂ independently has the same meaning with R₁ in formula (3).
Each of Y₁ and Y₂ independently has the same meaning with Y in formula (3).
Each of Z₁ and Z₂ independently has the same meaning with R₂ in formula (3).
W has the same meaning with the case where W in formula (3) represents a divalent substituent.

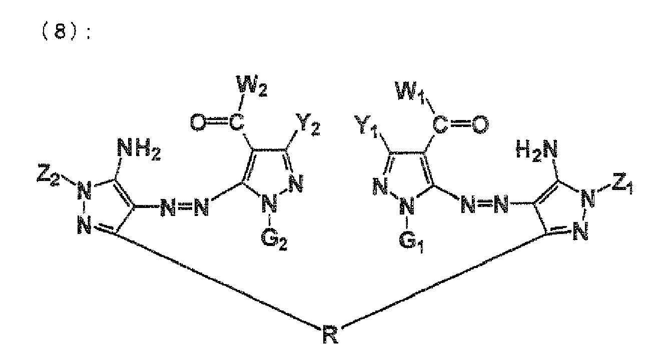

In formula (8), each of G₁ and G₂ independently has the same meaning with G in formula (3).
Each of W₁ and W₂ independently has the same meaning with W in formula (3).
Each of Y₁ and Y₂ independently has the same meaning with Y in formula (3).
Each of Z₁ and Z₂ independently has the same meaning with R₂ in formula (3).
R has the same meaning with the case where R₁ in formula (3) represents a divalent substituent.

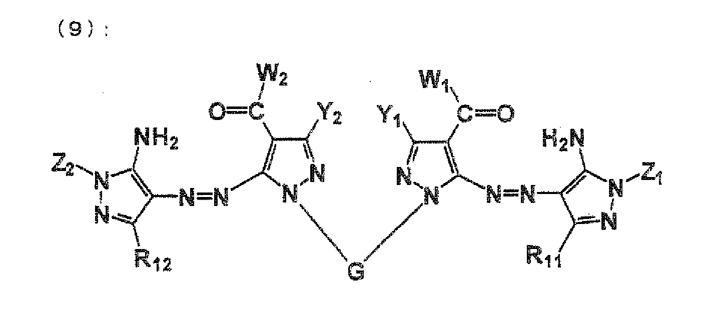

In formula (9), each of R₁₁ and R₁₂ independently has the same meaning with R₁ in formula (3).
Each of W₁ and W₂ independently has the same meaning with W in formula (3).
Each of Y₁ and Y₂ independently has the same meaning with Y in formula (3).
Each of Z₁ and Z₂ independently has the same meaning with R₂ in formula (3).
G has the same meaning with the case where G in formula (3) represents a divalent substituent.

In the invention, the azo pigment represented by formula (3) is preferably the azo pigment represented by formula (4), (5), (7), (8) or (9), more preferably the azo pigment represented by formula (4), (5), (7) or (9), and most preferably the azo pigment represented by formula (4).

The azo pigment represented by formula (4), a tautomer thereof, a salt thereof, a hydrate thereof, or a solvate thereof will be described in detail below.

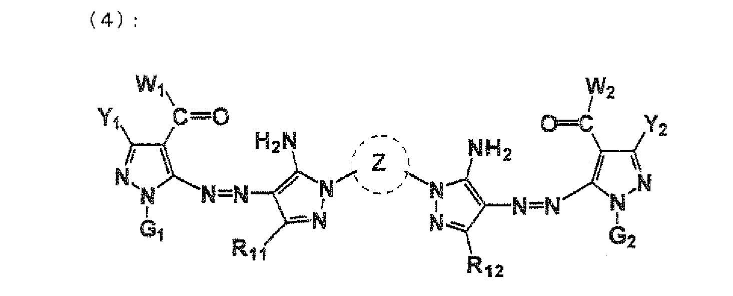

In formula (4), Z represents a 5- to 8-membered nitrogen-containing heterocyclic ring; each of Y₁, Y₂, R₁₁ and R₁₂ independently represents a hydrogen atom or a substituent; each of G₁ and G₂ independently represents a hydrogen atom, an alkyl group, a cycloalkyl group, an aralkyl group, an alkenyl group, an alkynyl group, an aryl group, or a heterocyclic group; and each of W₁ and W₂ independently represents an alkoxy group, an amino group, an alkyl group, or an aryl group.

In formula (4), Z represents a divalent 5- to 8-membered nitrogen-containing heterocyclic ring. Preferred examples of the heterocyclic groups include, without limiting the substitution positions, a pyrrole ring, a pyrazole ring, a triazole ring, an imidazole ring, a thiazole ring, an i-thiazole ring, an oxazole ring, an i-oxazole ring, a thiadiazole ring, a thiophene ring, a furan ring, a pyridine ring, a pyrimidine ring, a triazine ring, and a pyridane ring, more preferably a 6-membered nitrogen-containing heterocyclic ring, e.g., a pyridine ring, a pyrimidine ring and an S-triazine ring are exemplified, and most preferably a pyrimidine ring. When Z represents a 6-membered nitrogen-containing heterocyclic ring, intramolecular and intermolecular interactions of colorant molecules are preferably liable to be further improved from the points of hydrogen bonding and the plane property of the molecules.

In formula (4), each of Y₁ and Y₂ has the same meaning with Y in formula (3), and preferred examples are also the same.

In formula (4), each of G₁ and G₂ has the same meaning with G in formula (3), and preferred examples are also the same.

In formula (4), each of R₁₁ and R₁₂ has the same meaning with R₁ in formula (3), and preferred examples are also the same.

In formula (4), each of W₁ and W₂ has the same meaning with W in formulae (3) and preferred examples are also the same.

In the invention, the azo pigment represented by formula (1) includes a tautomer thereof in the same scope.
Formula (1) is shown in the form of limiting structural formulae out of several kinds of tautomers that can be taken in terms of chemical structures, but the pigment may be a tautomer other than the structure shown, or a mixture containing plural tautomers may also be used.
For example, the pigment represented by formula (4) is considered to have a tautomer of azo-hydrazone represented by the following formula (4').
A compound represented by the following formula (4'), which is a tautomer of the azo pigment represented by formula (4), is also included in the same scope.

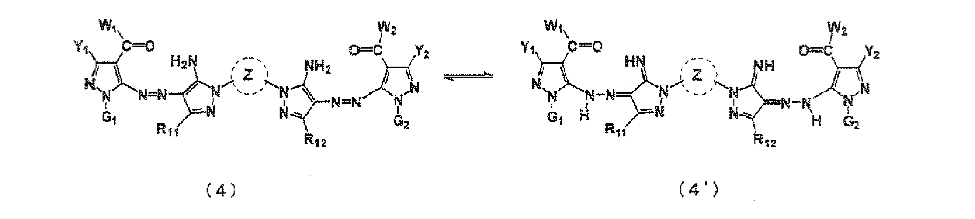

In formula (4'), R₁₁, R₁₂, W₁, W₂, Y₁, Y₂, G₁, G₂ and Z respectively have the same meaning with R₁₁, R₁₂, W₁, W₂, Y_{1,} Y₂, G₁, G₂ and Z in formula (4).

With regard to preferred combinations of substituents of the pigment represented by formula (4), a compound in which at least one of various substituents is the above preferred group is preferred, a compound in which more kinds of various substituents are the above preferred groups is more preferred, and a compound in which all the substituents are the above preferred groups is most preferred.

Especially preferred combinations as the azo pigment represented by formula (4) of the invention are combinations including the following (a) to (e).

(a) Each of W₁, and W₂ preferably independently represents an alkoxy group (e.g., a methoxy group, an ethoxy group, an i-propoxy group, a t-butoxy group), an amino group (e.g., an -NH₂ group, a methylamino group, a dimethylamino group, an anilino group), an alkyl group (e.g., a methyl group, an ethyl group, an n-propyl group, an i-propyl group, a t-butyl group, a cyclopropyl group), or an aryl group (e.g., a phenyl group, a p-tolyl group, a naphthyl group), more preferably represents an alkoxy group, an amino group or an alkyl group, still more preferably an alkoxy group or an amino group, still further preferably an alkoxy group having total carbon atoms of 5 or less, an amino group (e.g., an -NH₂ group), or an alkylamino group having total carbon atoms of 5 or less, still especially preferably an alkoxy group having total carbon atoms of 3 or less, an amino group (e.g., an -NH₂ group), or an alkylamino group having total carbon atoms of 3 or less, and most preferably a methoxy group (e.g., an -OCH₃ group).

(b) Each of R₁₁ and R₁₂ preferably independently represents a hydrogen atom or a substituent (e.g., a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total), more preferably a straight chain or branched alkyl group having 1 to 8 carbon atoms in total, still more preferably a methyl group, an i-propyl group or a t-butyl group, and most preferably a t-butyl group.

(c) Z represents a divalent heterocyclic group, which may further be condensed. Z preferably represents a 5 to 8-membered heterocyclic group, more preferably a 5- or 6-membered substituted or unsubstituted heterocyclic group, e.g., a pyrrole ring, a pyrazole ring, a triazole ring, an imidazole ring, a thiazole ring, an i-thiazole ring, an oxazole ring, an i-oxazole ring, a thiadiazole ring, a thiophene ring, a furan ring, a. pyridine ring, a pyrimidine ring, a triazine ring, or a pyridane ring, and especially preferably a 6-membered nitrogen-containing heterocyclic group having 3 to 10 carbon atoms. The examples of still more preferred heterocyclic rings include a pyridine ring, a pyrimidine ring, an S-triazine ring, a pyridazine ring, and a pyrazine ring, still further preferred examples are a pyridine ring, a pyrimldine ring, an S-triazine ring, a pyridazine ring, and a pyrazine ring, still yet preferred are a pyrimidine ring and an S-triazine ring, and most preferred is a pyrimidine ring.

(d) Each of G₁ and G₂ independently represents a hydrogen atom, an alkyl group, a cycloalkyl group, an aralkyl group, an alkenyl group, an alkynyl group, an aryl group, or a heterocyclic group, preferably a hydrogen atom, a methyl group, an ethyl group, an n-propyl group, an i-propyl group, a t-butyl group, a cyclopropyl group, a benzyl group, a 2-phenethyl group, a vinyl group, an allyl group, an ethynyl group, a propargyl group, a phenyl group, a p-tolyl group, a naphthyl group, a pyridyl group, a pyrimidinyl group, or a pyrazinyl group, more preferably a hydrogen atom, a methyl group, a phenyl group, a pyridyl group, a pyrimidinyl group, or a pyrazinyl group, of these groups a methyl group, a 2-pyridyl group, a 2,6-pyrimidinyl group, or a 2,5-pyrazinyl group is preferred. An alkyl group having total carbon atoms of 5 or less is more preferred, an alkyl group having total carbon atoms of 3 or less is still more preferred, and a methyl group is most preferred.

(e) Each of Y₁ and Y₂ independently represents a hydrogen atom, an alkyl group (e.g., a methyl group), an aryl group (e.g., a phenyl group), a heterocyclic group (e.g., a 2-pyridyl group), or an alkylthio group (e.g., a methylthio group), preferably a hydrogen atom, a methyl group, a phenyl group, or a methylthio group, and most preferably a hydrogen atom.

In formulae (1), (2) and (3), n is preferably 2 or 3, and especially preferably n is 2. When n is 2, high tinctorial strength and excellent light fastness are obtained and chemical resistance is improved.

The azo pigment represented by formula (1), (2), (3) or (4) of the invention is preferably represented by the following formula (10), (11), (12) or (13).

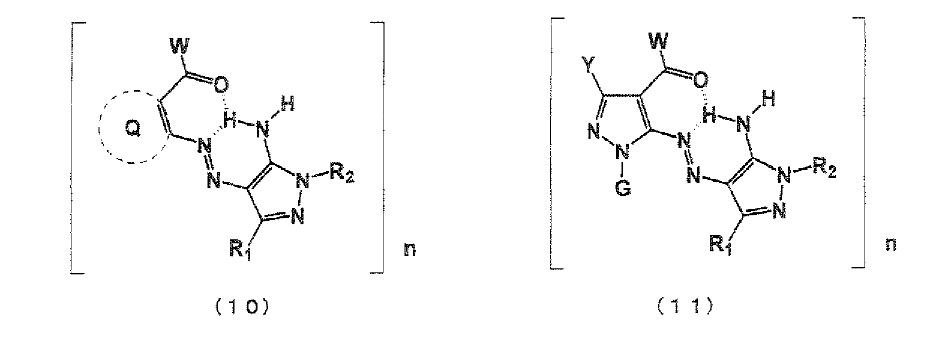

R₁, R₂, W, Q and n in formula (10) respectively have the same meaning with R₁, R₂, W, Q and n in formula (2).
G, R₁, R₂, W and Y in formula (11) respectively have the same meaning with G, R₁, R₂, W and Y in formula (3).

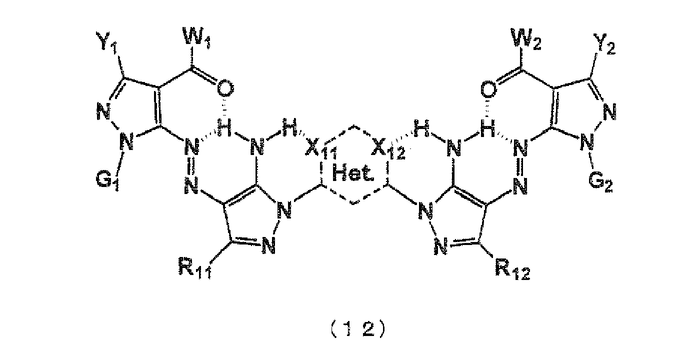

G₁, G_{2,} R₁₁, R₁₂, W₁, W₂, Y₁ and Y₂ in formula (12) respectively have the same meaning with G₁, G₂, R₁₁, R₁₂. W₁, W₂, Y₁ and Y₂ in formula (4).
Each of X₁₁ and X₁₂ independently represents a heterocyclic group constituted by Z in formula (4), and represents each hetero atom in the heterocyclic group constituted by Het.

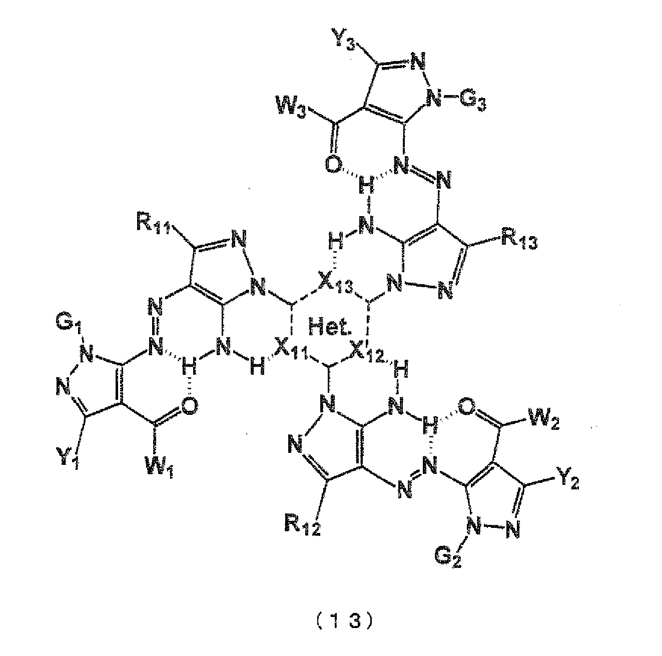

In formula (13), each of G₁, G₂ and G₃ independently has the same meaning with G in formula (3).
Each of W_{1,} W₂ and W₃ independently has the same meaning with W in formula (3).
Each of Y₁, Y₂ and Y₃ independently has the same meaning with Y in formula (3).
Each of R₁₁, R₁₂ and R₁₃ independently has the same meaning with R₁ in formula (3).
Each of X₁₁, X₁₂ and X₁₃ independently has the same meaning with the case where R₂ in formula (3) represents a trivalent heterocyclic group, and represents each hetero atom in the heterocyclic group constituted by Het.

In the azo pigments represented by formulae (1), (2), (3) and (4), a variety of tautomers are considered.
In the invention, it is preferred for the azo pigment represented by formula (1) to have substituents for forming intramolecular hydrogen bonding or intramolecular cross hydrogen bonding. It is preferred to have substituents for forming at least one or more intramolecular cross hydrogen bonding, more preferred to have substituents for forming at least three or more intramolecular hydrogen bonding, and especially preferred to have substituents for forming at least three or more intramolecular hydrogen bonding, and at least two of these hydrogen bonding have substituents for forming intramolecular cross hydrogen bonding.

Of the azo pigments represented by formulae (1), (2), (3) and (4), as the examples of the formulae of particularly preferred azo pigments as described above, the azo pigments represented by the above formulae (10) to (13) can be exemplified.

A primary factor that these structures are preferred is that, as shown by formulae (10) to (13), nitrogen atoms for constituting the heterocyclic rings contained in the structure of the azo pigment, hydrogen atoms and hetero atoms (nitrogen atoms of the azo group or the hydrazone group being the tautomer thereof and oxygen atoms of the carbonyl group or nitrogen atoms of the amino group) can easily form at least one or more intramolecular cross hydrogen bonding (intramolecular hydrogen bonding).
A primary factor that these structures are preferred is that, as shown by formulae (10) and (11), nitrogen atoms for constituting the heterocyclic groups contained in the structure of azo pigment, hydrogen atoms of the amino groups and hetero atoms (nitrogen atoms of the azo group or the hydrazone group being the tautomer thereof and oxygen atoms of the carbonyl group or nitrogen atoms of the amino group) can easily form at least one or more intramolecular cross hydrogen bonding.
As a more preferred factor is that, as shown by formulae (12) and (13), nitrogen atoms for constituting the heterocyclic groups contained in the structure of azo pigment, hydrogen atoms of the amino groups and hetero atoms (nitrogen atoms of the azo group or the hydrazone group being the tautomer thereof and oxygen atoms of the carbonyl group or nitrogen atoms of the amino group) can easily form at least four or more intramolecular hydrogen bonding and can easily form at least two or more intramolecular cross hydrogen bonding.
As a result, the plane property of the molecule rises and intramolecular and intermolecular interactions are improved. For example, crystallizability of the azo pigment represented by formula (12) heightens (higher-order structure is easily formed), and performances such as light fastness, heat stability, wet heat stability, water resistance, gas resistance and solvent resistance that are required of the pigment are widely improved, which is, therefore, the most preferred example.

Further, even if isotopes (e.g., 2H, 3H, 13C, 15N) are contained in the compounds represented by formulae (1) to (13), which compounds are applicable to the invention.

The specific examples of the azo pigments represented by formulae (1) to (13) are shown below, but the azo pigments for use in the invention are not restricted to the following examples. Further, the structures of the following specific examples are shown in the form of limiting structural formulae out of several kinds of tautomers that can be taken in terms of chemical structures, but it is a matter of course that the pigments may have tautomeric structures other than the structures shown.

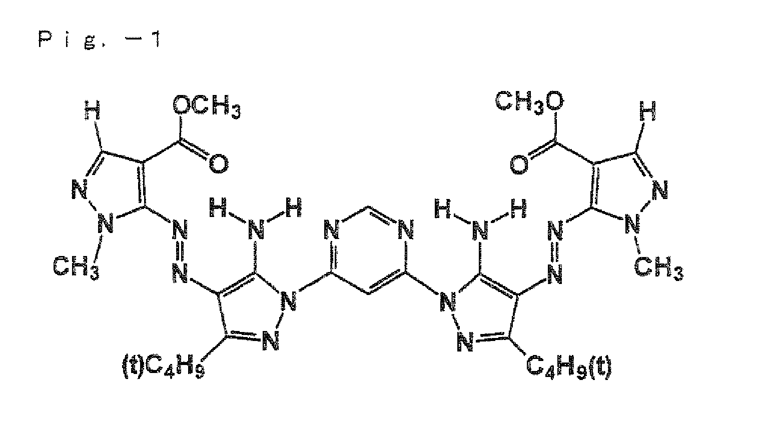

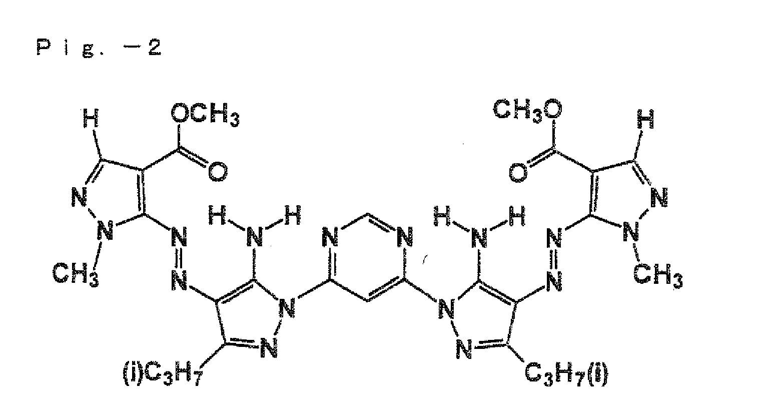

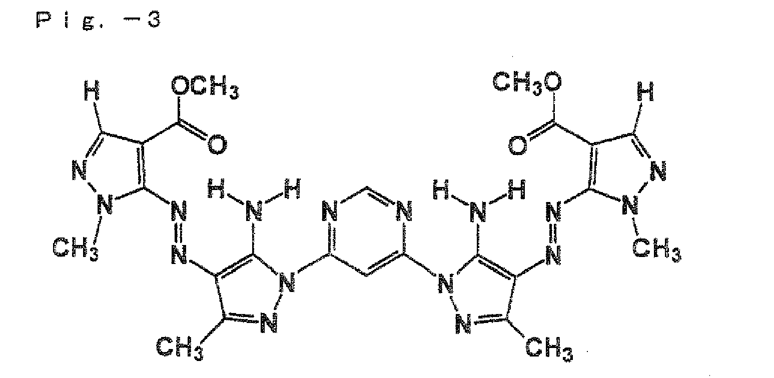

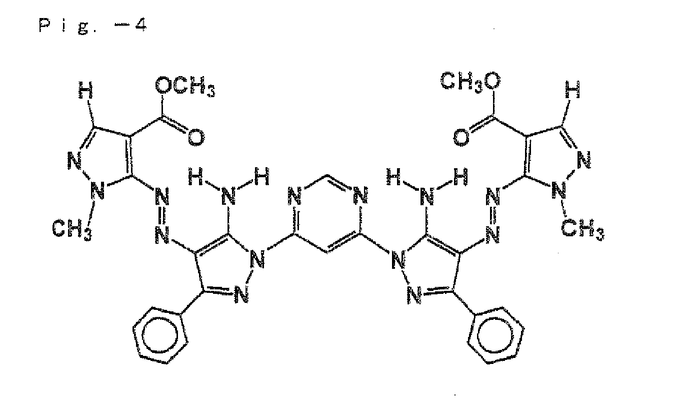

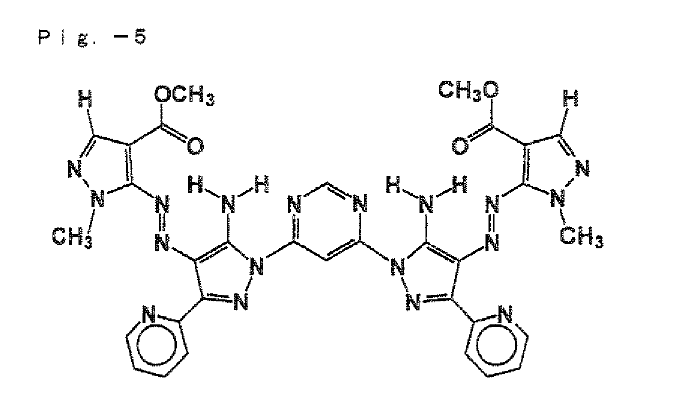

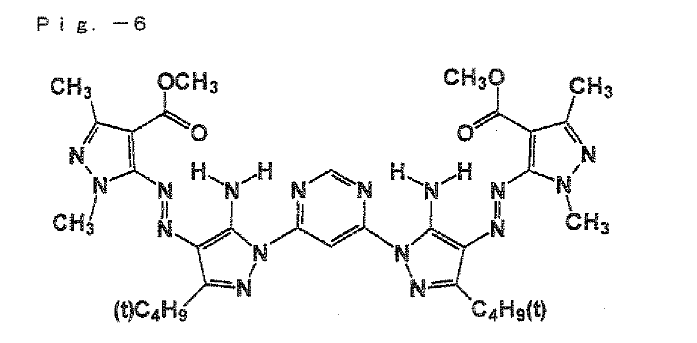

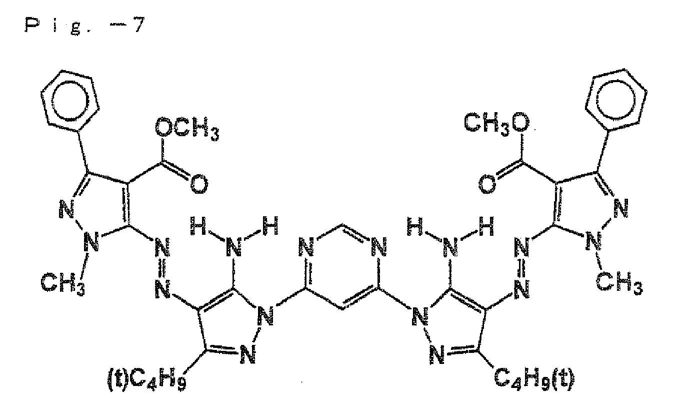

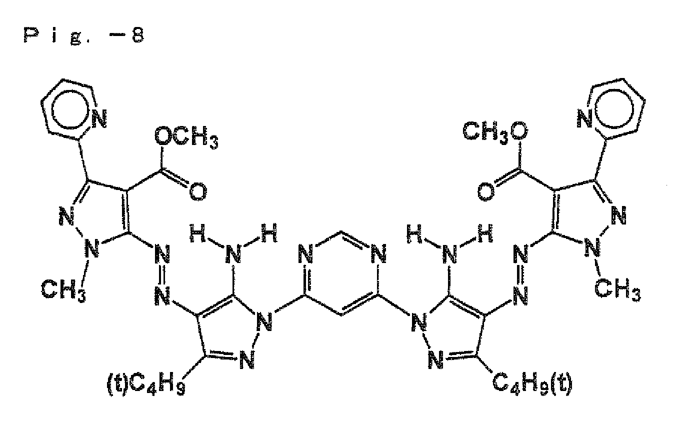

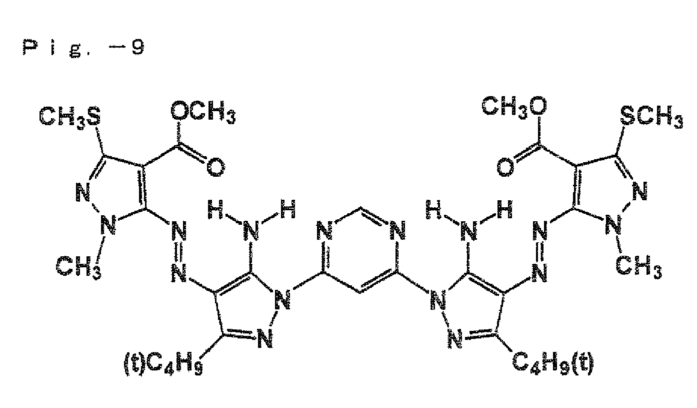

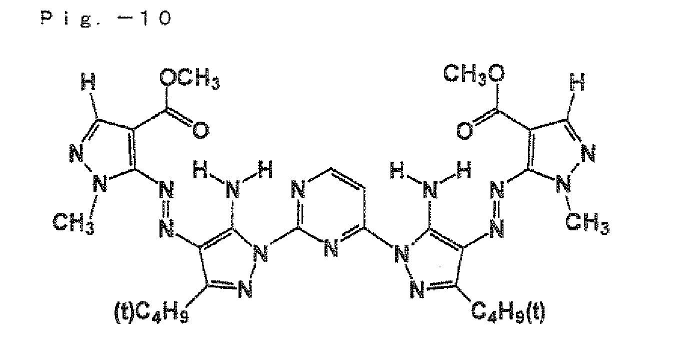

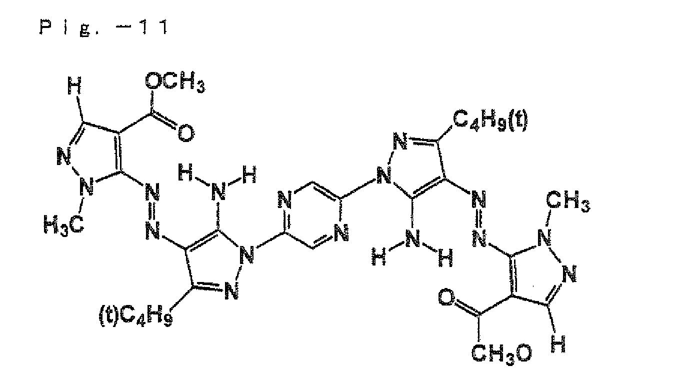

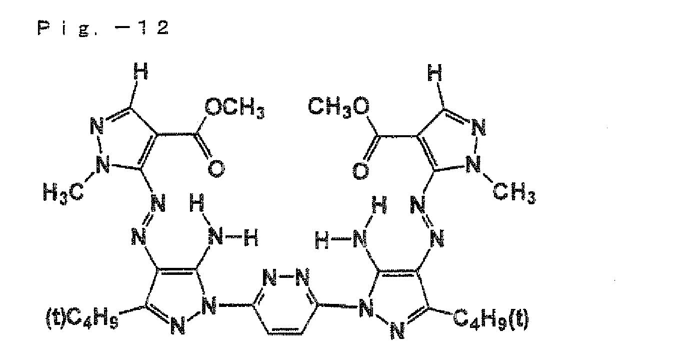

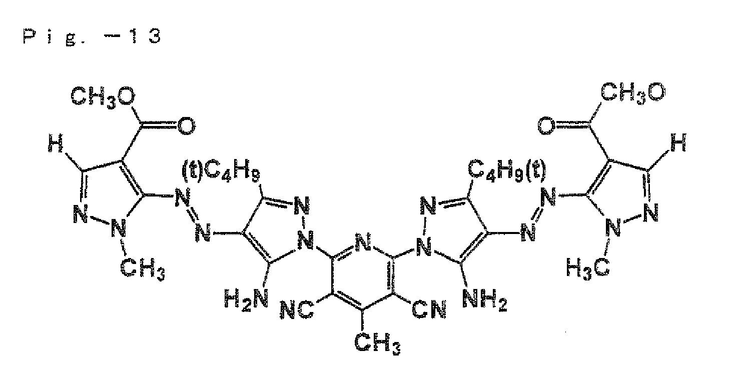

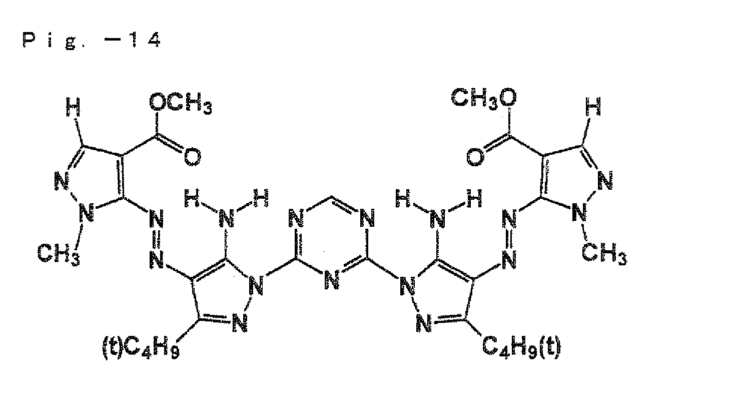

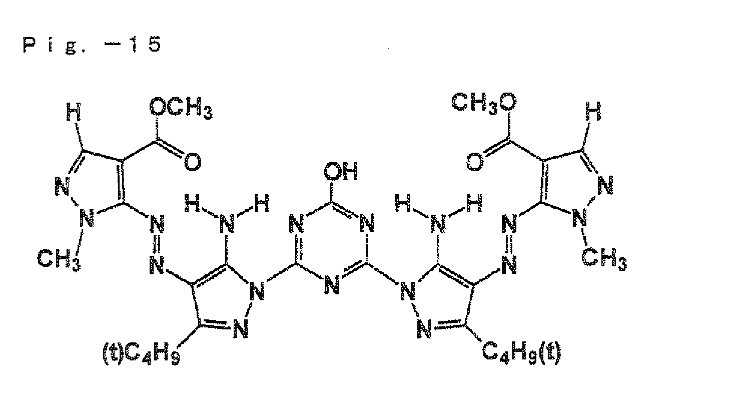

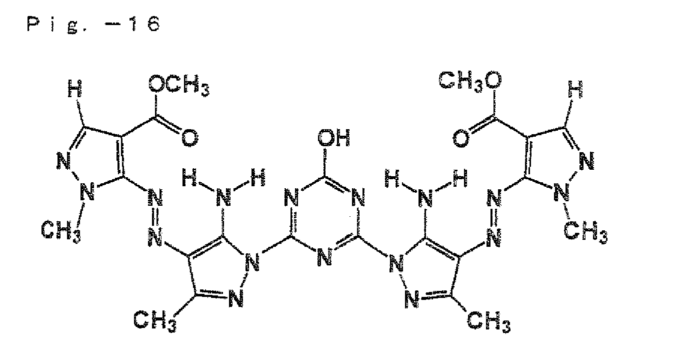

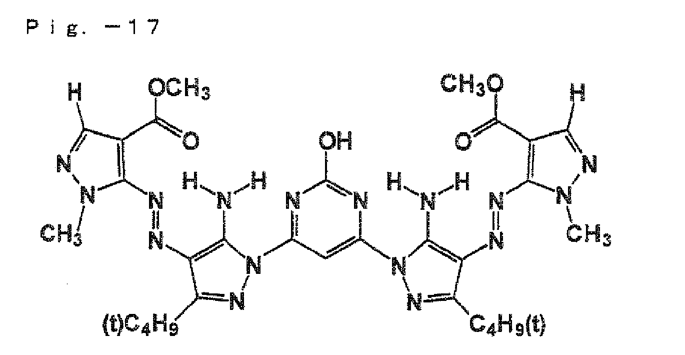

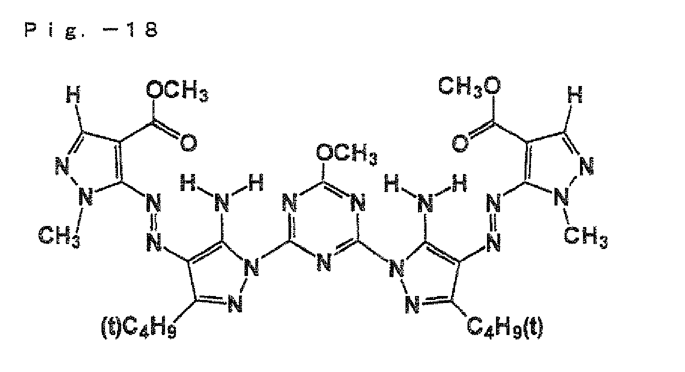

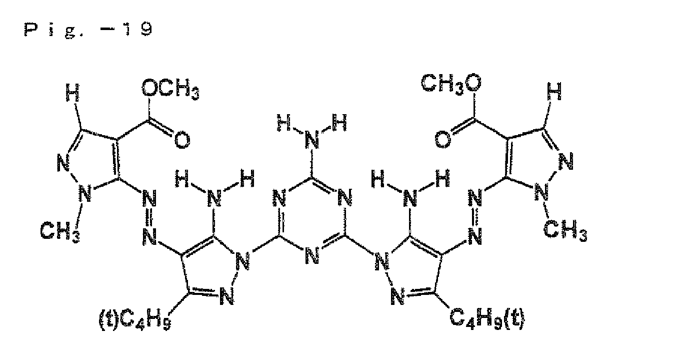

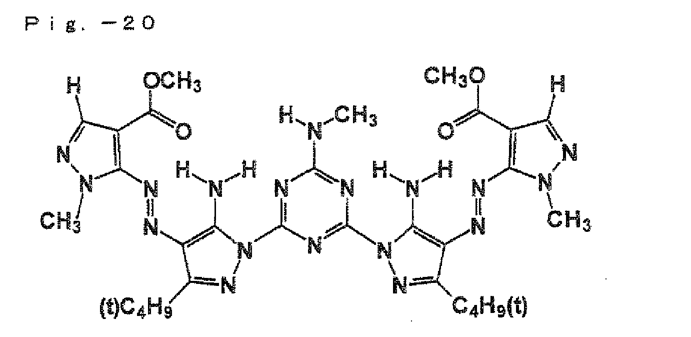

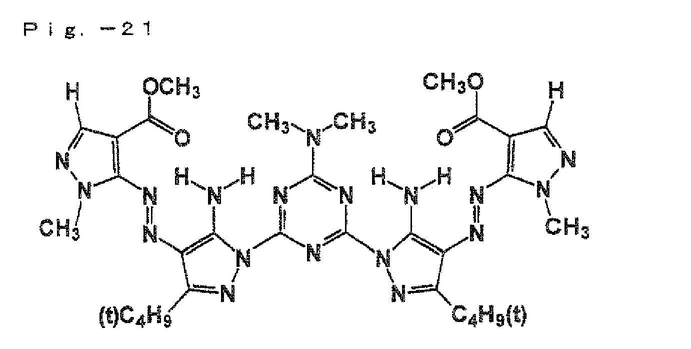

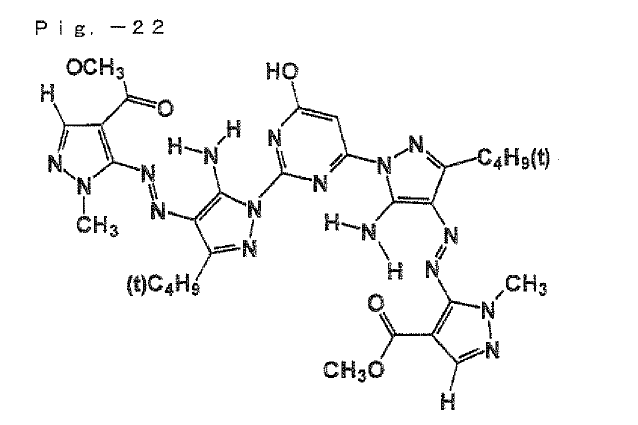

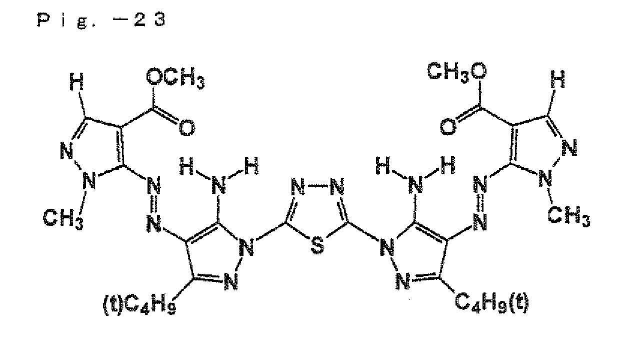

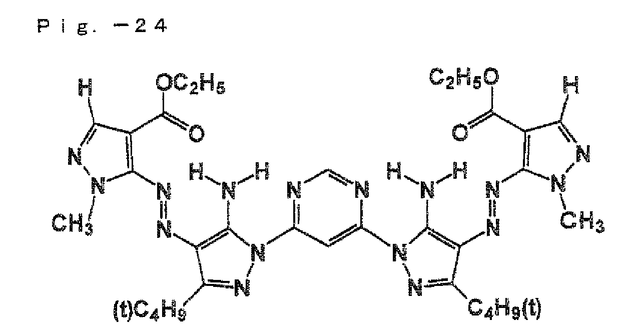

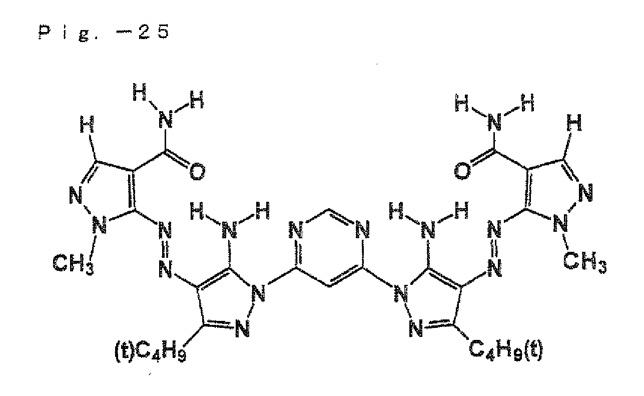

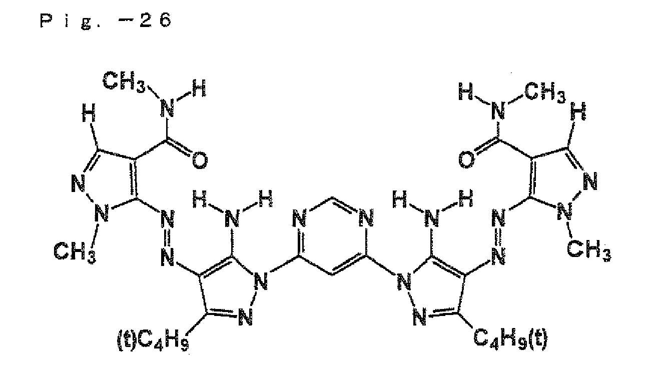

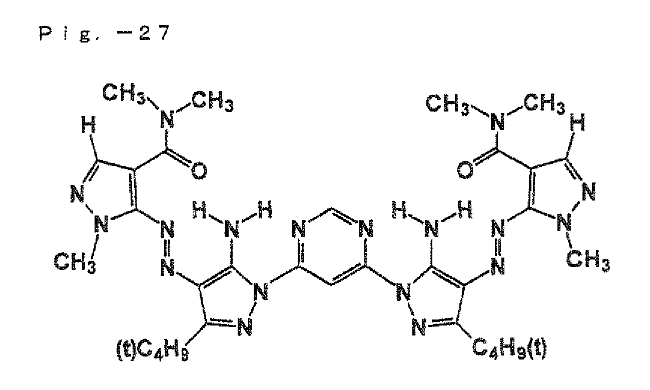

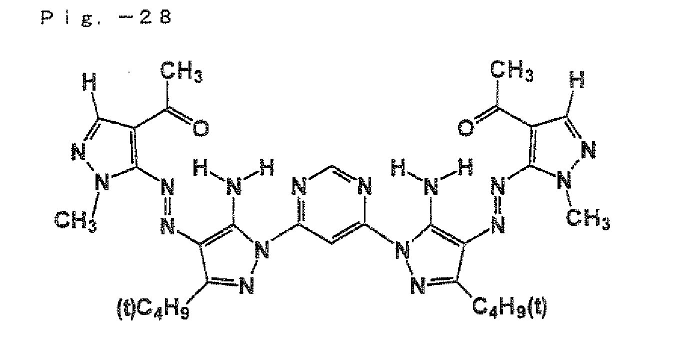

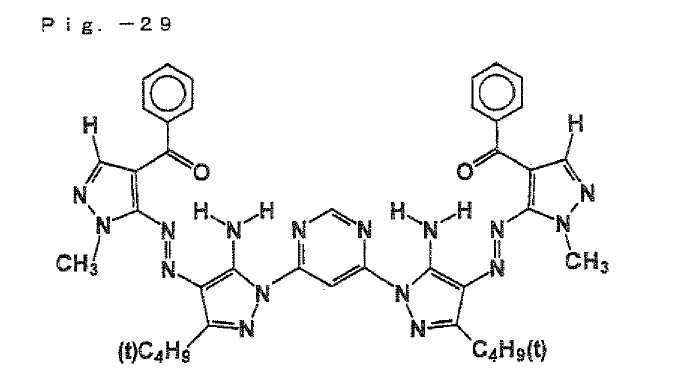

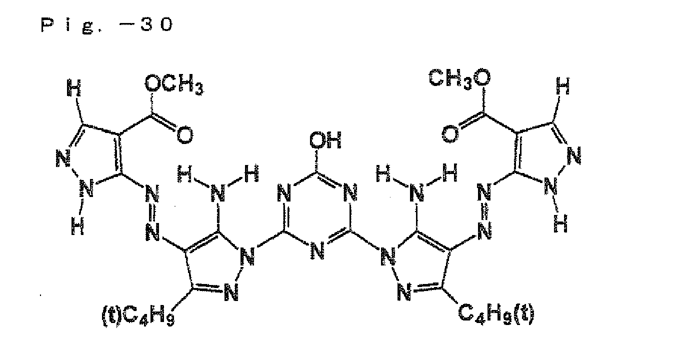

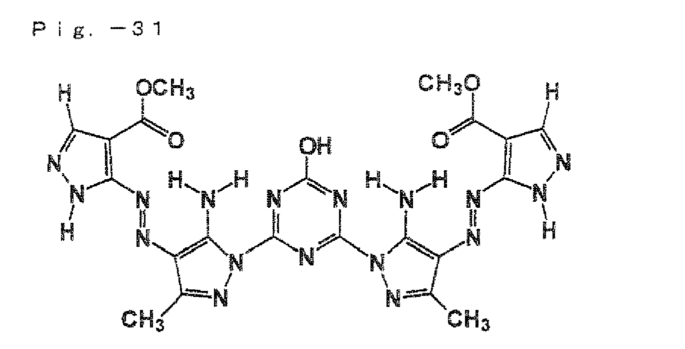

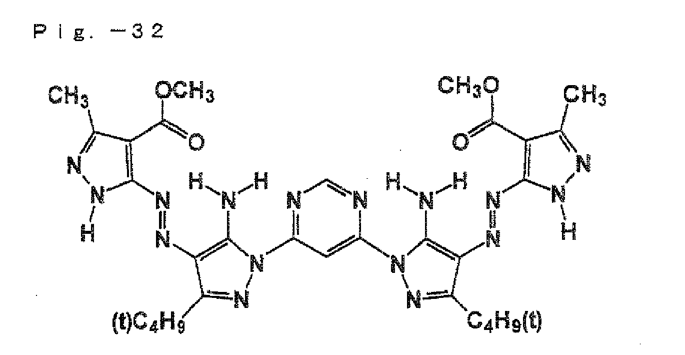

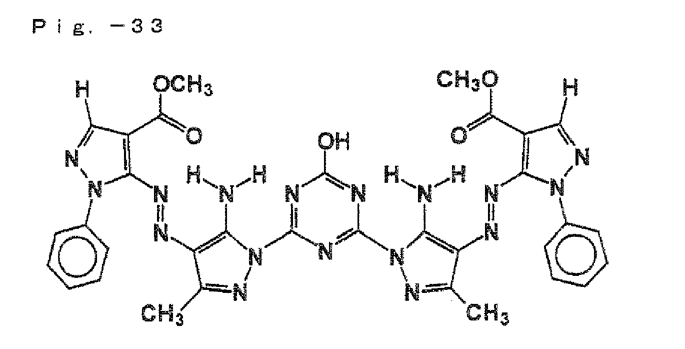

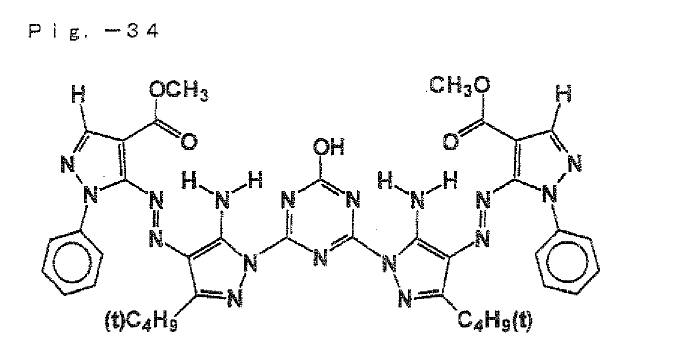

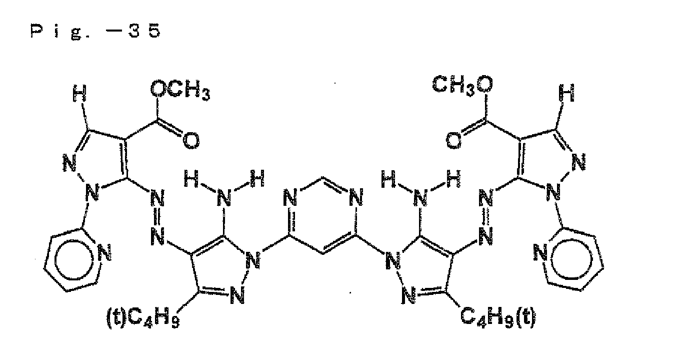

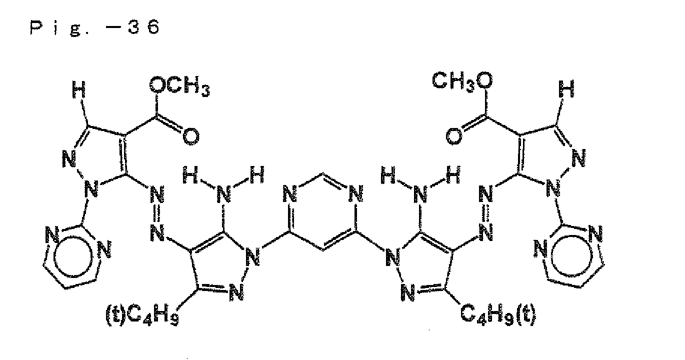

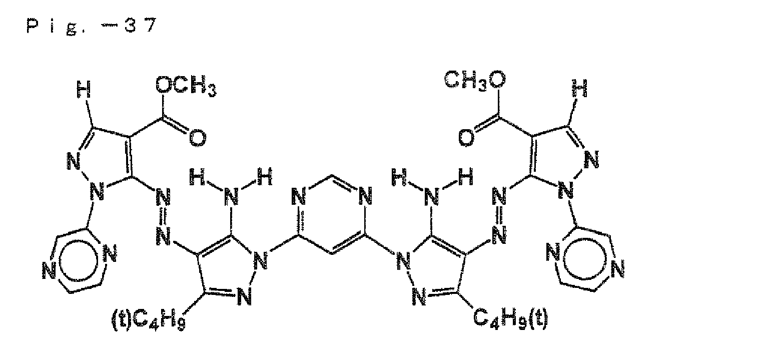

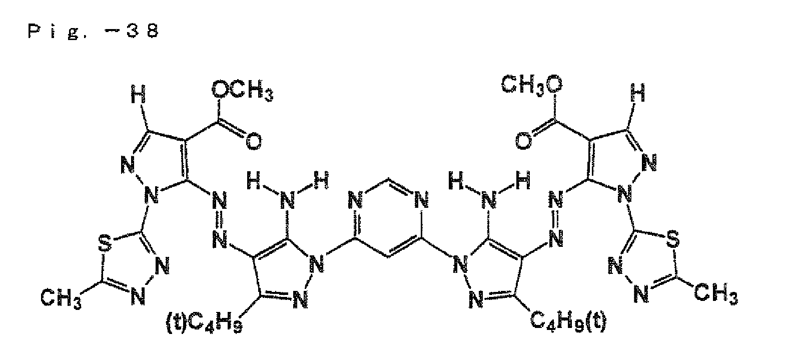

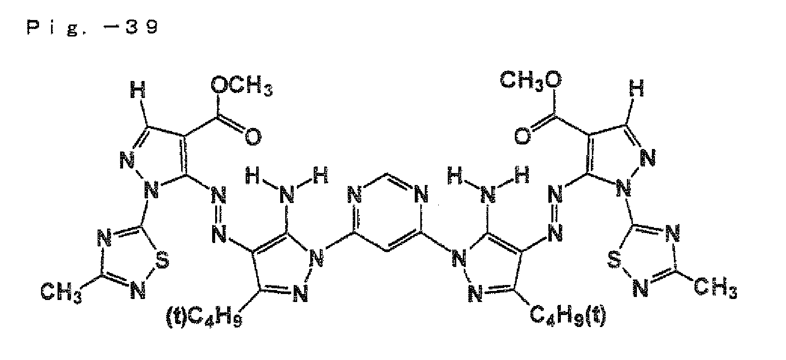

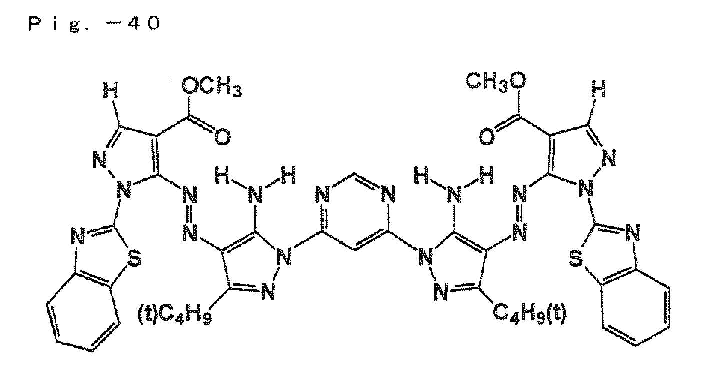

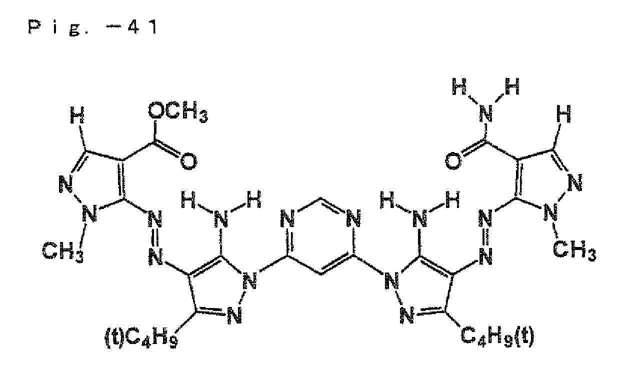

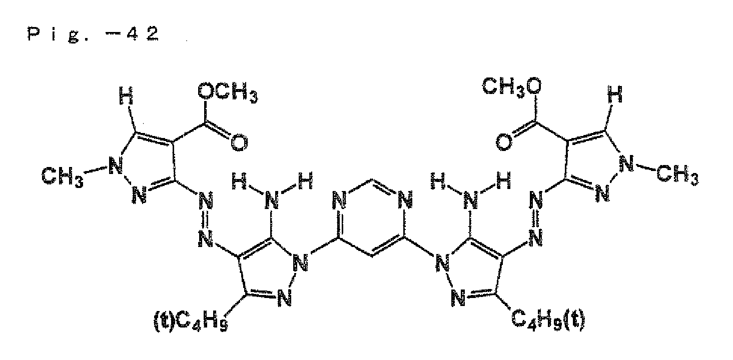

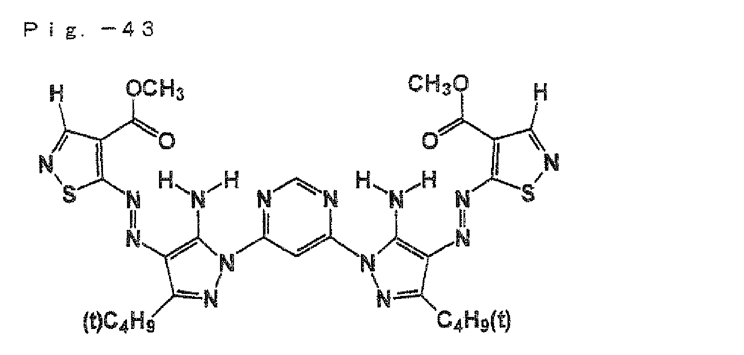

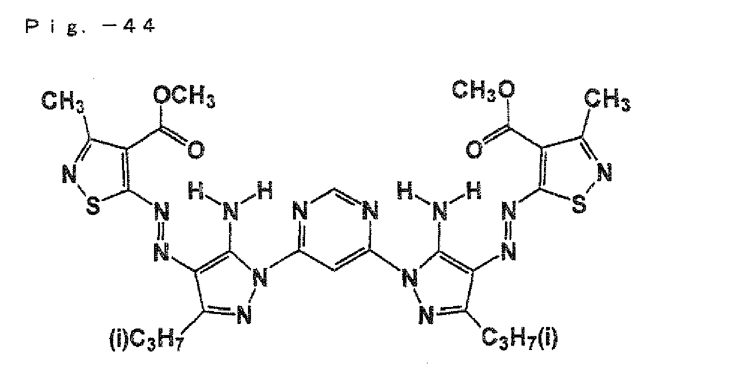

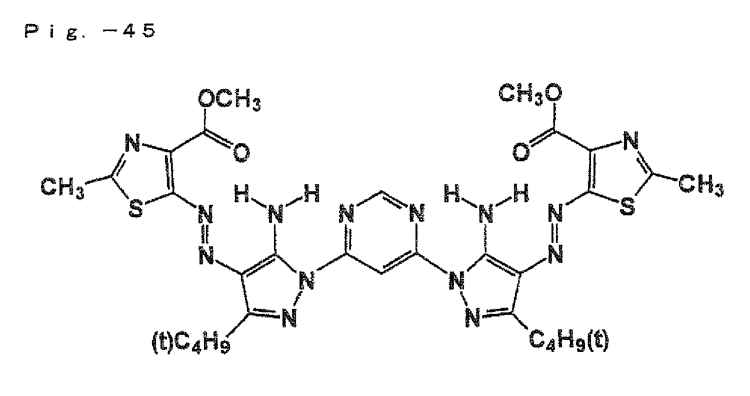

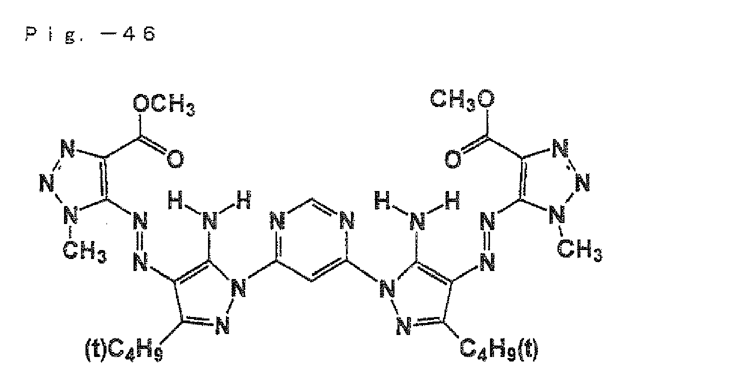

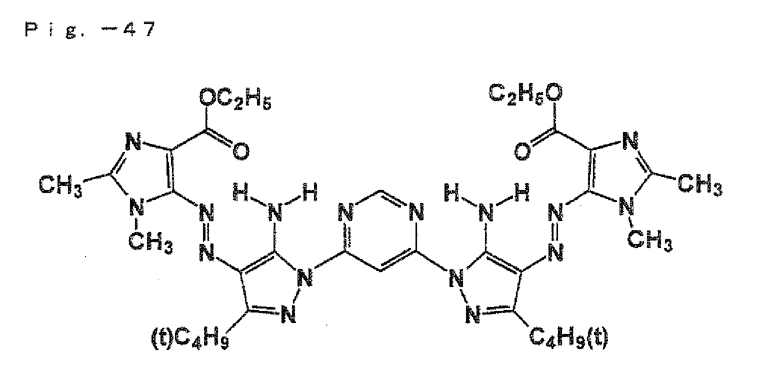

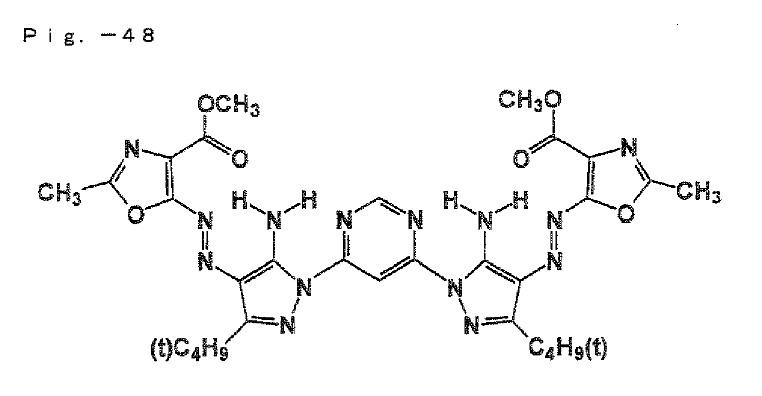

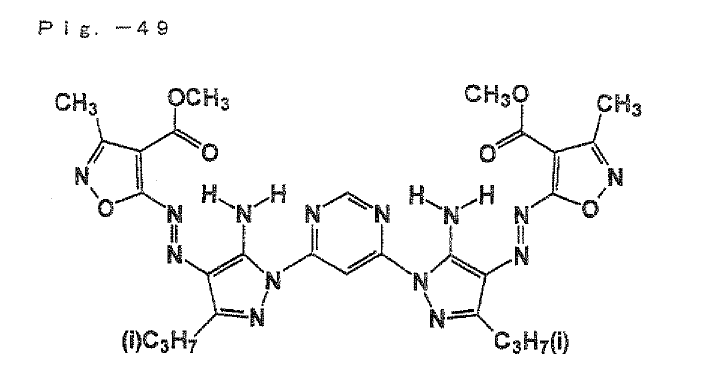

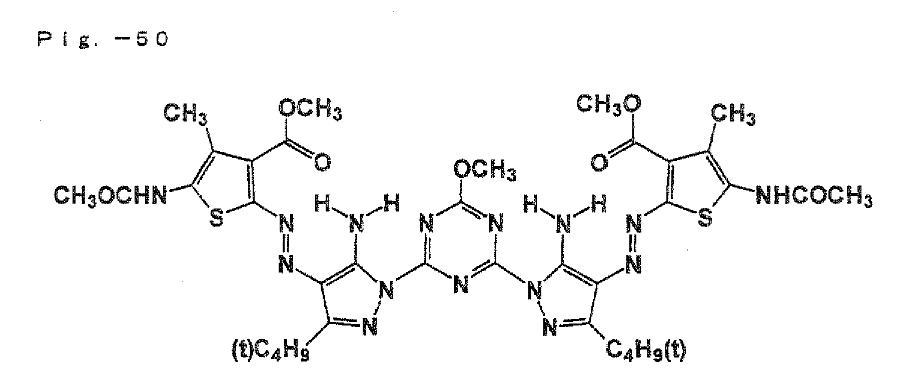

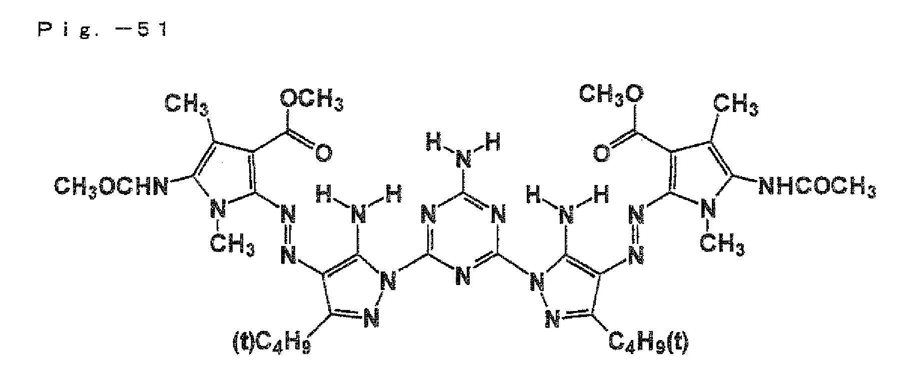

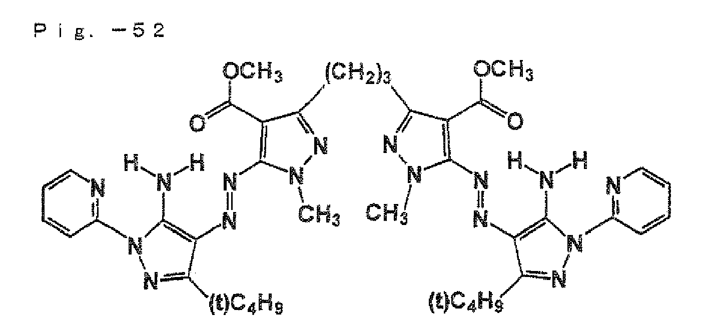

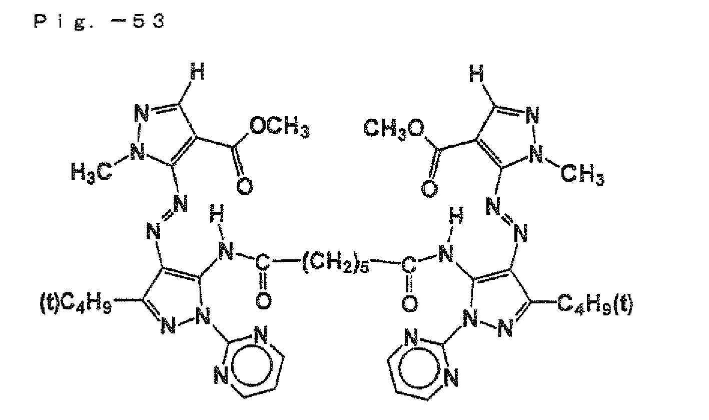

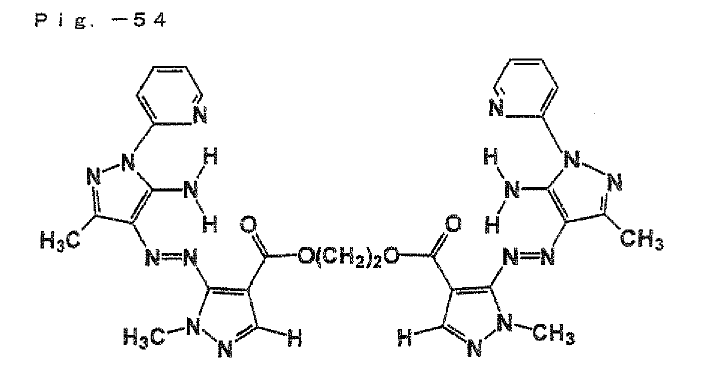

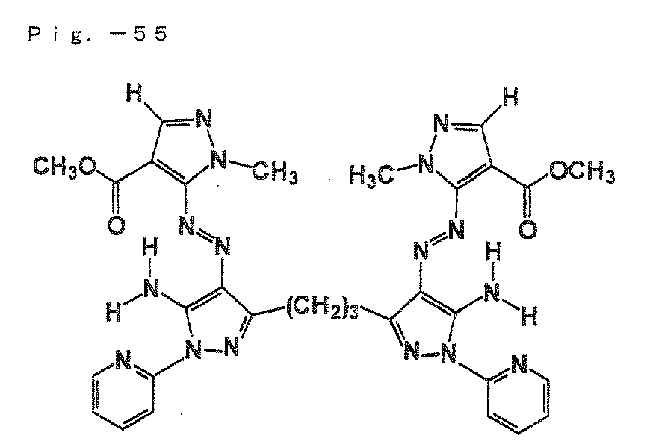

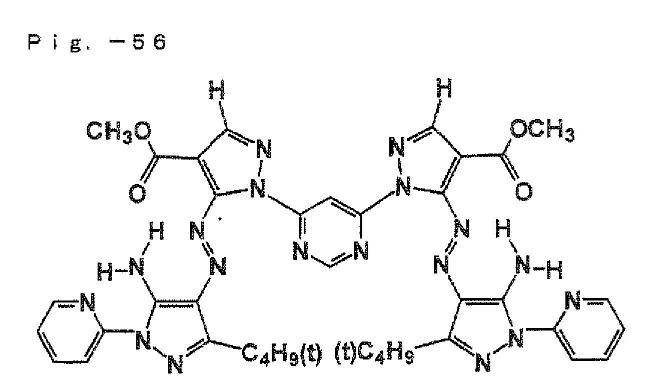

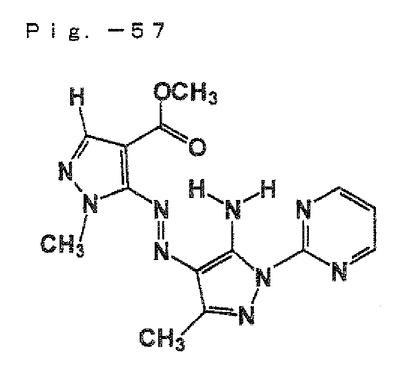

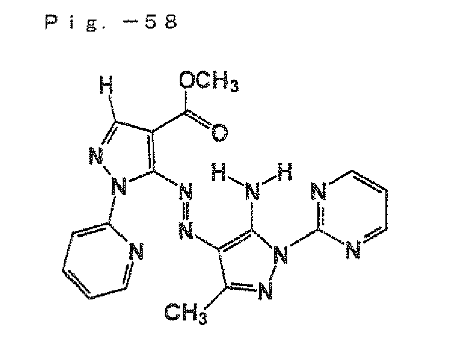

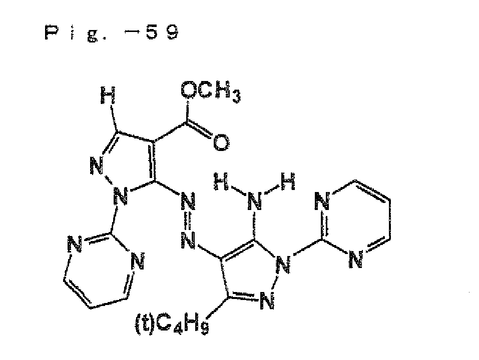

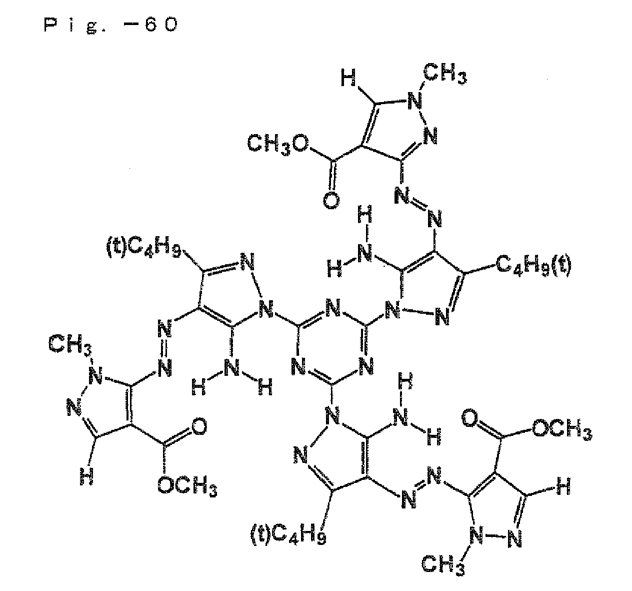

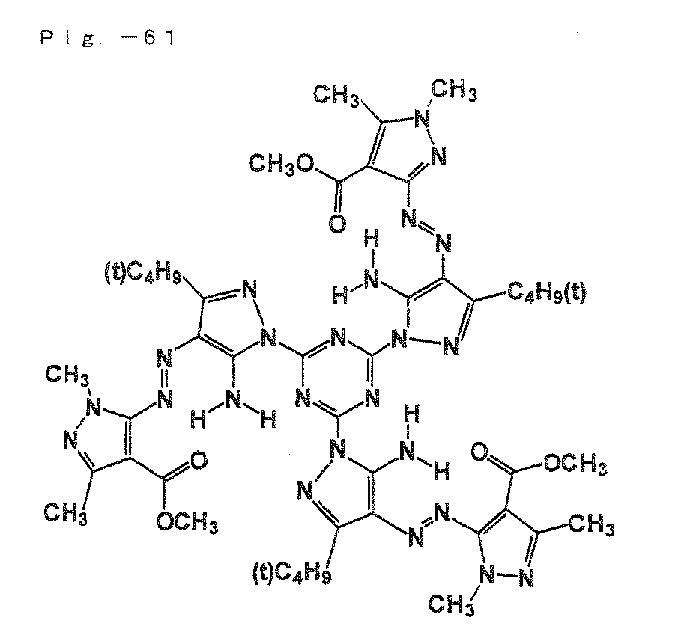

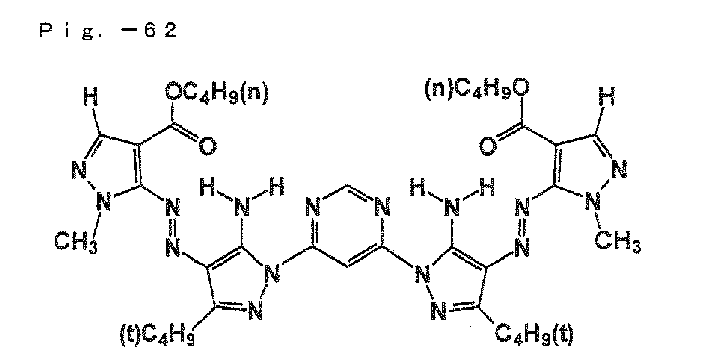

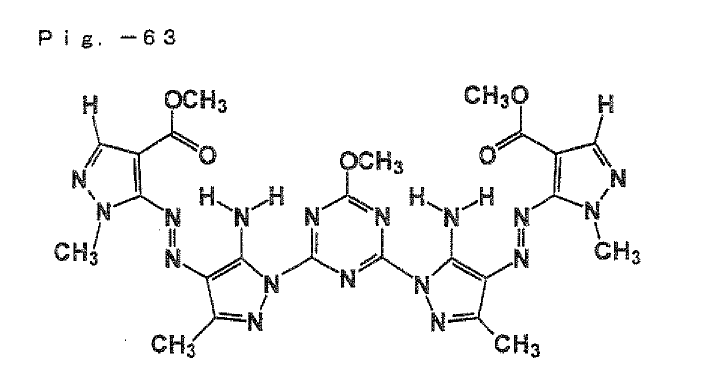

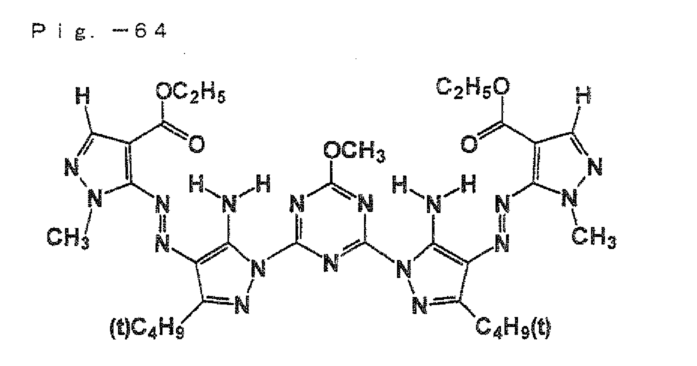

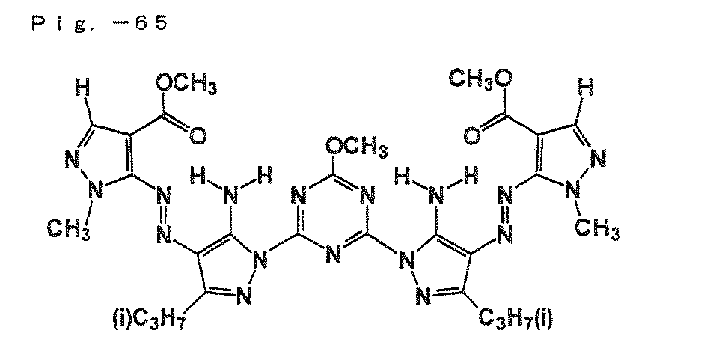

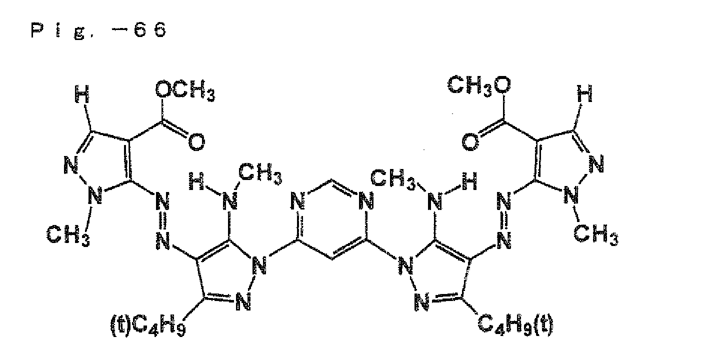

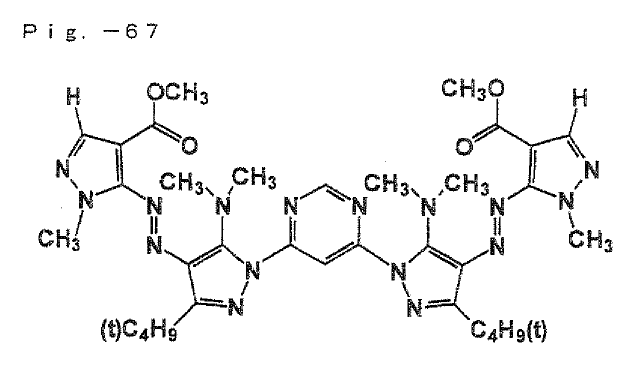

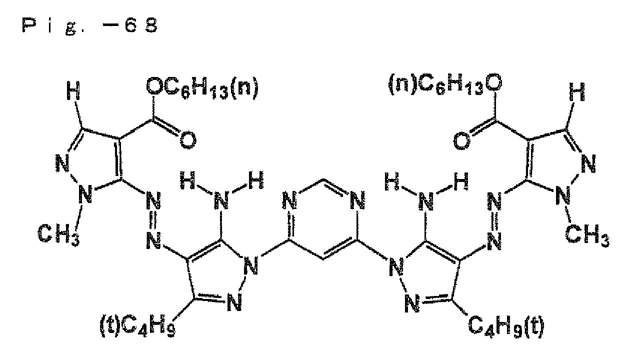

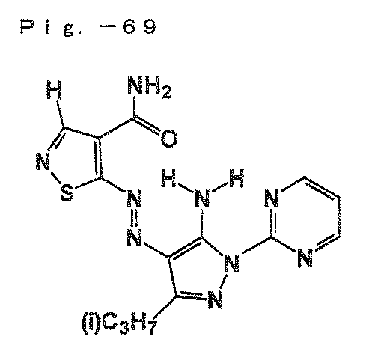

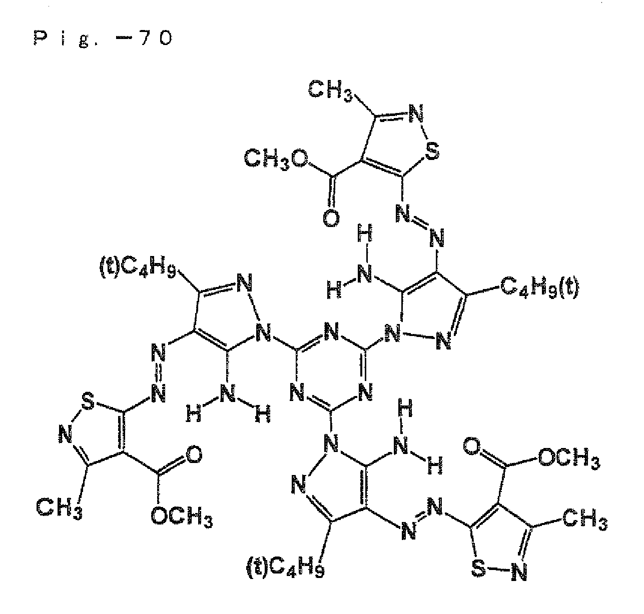

In the invention, also in the case where tautomers are present due to the structure of a compound, the compound is shown as one of the representative forms, but tautomers different from the description of the invention are also included in the azo pigment of the invention. The salts of the azo pigments of the invention, the hydrates thereof and solvates thereof are also included in the azo pigment of the invention.

The pigments of the invention represented by the general formula (1) may have a chemical structure represented by the general formula (1) or may be the tautomers thereof, and may be the pigments of any crystal form called polymorphic form.

Polymorphism means that crystals having the same chemical composition can be different from each other in the conformation of building block (molecules or ions) in the crystal. Chemical and physical properties of the pigments are decided by the crystal structure, and polymorphic forms of the same pigment can be discriminated from each other by rheology, color, and other color characteristics. Also, different polymorphic forms can be confirmed by X-Ray Diffraction (results of powder X-ray diffractometry) or by X-Ray Analysis (results of X-ray analysis of crystal structure).
**I**n the case where the pigments of the invention represented by the general formulae (1) and (2) exhibit polymorphism, they may be in any polymorphic forms and may be a mixture of two or more polymorphic forms. However, pigments wherein a single crystal form is predominant are preferred. That is, pigments not contaminated with polymorphic form crystals are preferred. The content of the azo pigment having a single crystal form is from 70% to 100%, preferably from 80% to 100%, more preferably from 90% to 100%, still more preferably from 95% to 100%, particularly preferably 100%, based on the entire azo pigment. When the azo pigment contains a single crystal form azo pigment as a major component, regularity of alignment of the pigment molecules is improved, and the intramolecular and intermolecular mutual action is enhanced, thus a high-level three-dimensional network being easily formed. As a result, performances required for pigments, such as hue, light fastness, humidity fastness, fastness to an oxidative gas, and solvent resistance, are improved, thus the above-described content being preferred.
The mixing ratio of polymorphic forms in the azo pigment can be confirmed from values obtained by physicochemical measurement such as X-ray crystal structure analysis of single crystal, powder X-ray diffractometry (XRD), microscopic photography of the crystals (TEM), or **I**R (KBr method).

With those which have acid groups among the azo pigments of the invention represented by the general formula (1), part or all of the acid groups may be in a salt form, or the pigment may be a mixture of a salt type pigment and a free acid type pigment. Examples of the salt type include salts of an alkali metal such as Na, Li, or K, salts of ammonium optionally substituted by an alkyl group or a hydroxyalkyl group, and salts of an organic amine. Examples of the organic amine include a lower alkyl amine, a hydroxyl-substituted lower alkyl amine, a carboxy-substituted lower alkyl amine, and a polyamine having from 2 to 10 alkyleneimine units containing from 2 to 4 carbon atoms. With these salt type pigments, they are not necessarily limited to one as to kind, but may be in a mixture of two or more thereof.

Further, as to the structure of the pigment to be used in the invention, in the case where plural acid groups exist in one molecule, the plural acid groups may be of a salt type or an acid type, and may be different from each other.

In the invention, the azo pigment represented by formula (1) may be hydrates containing a water molecule in the crystal, or may be solvates containing a solvent (e.g., alcohols such as methanol, ethanol, 2-propanol, t-butyl alcohol, etc., aprotic solvents such as dimethyl sulfoxide, dimethylformamide, dimethylacetamide, N-methylpyrrolidone, etc., ketone solvents such as acetone, methyl ethyl ketone, etc.).

One preparing method of the azo pigment represented by formula (1) is described in the next place. For example, the heterocyclic amine represented by the following formula (A) is made diazonium on the acidic condition, and subjected to coupling reaction with the compound represented by the following formula (B), and then post treatment according to an ordinary method, thus the azo pigment represented by formula (1) can be manufactured.

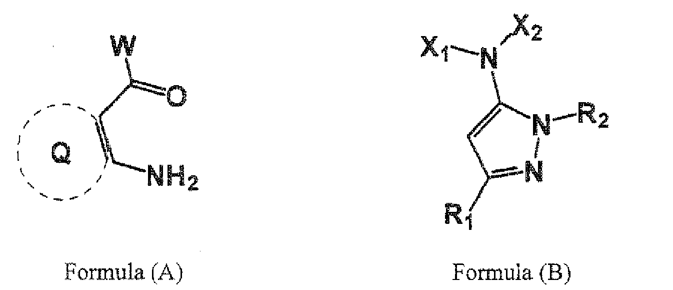

In formulae (A) and (B), each of W, Q, R₁, R₂, X₁ and X₂ has the same meaning as in formula (1).

The heterocyclic amines represented by the general formula (A) can generally be produced by a known conventional process, for example, a process described in Helv. Chim. Acta. 41, z5$, 1052-1056 or in Helv. Chim. Acta. 42, 1959, 349-352, or a similar process.
The compounds represented by the general formula (B) can generally be produced by a process described in WO 06/082669 or in JP-A-2006-57076, or a similar process.
The diazotization reaction of the heterocyclic amine represented by the general formula (A) can be conducted, for example, by reacting it with a reagent such as sodium nitrite, nitrosylsulfonic acid, or isoamyl nitrite in an acidic solvent such as sulfuric acid, phosphoric acid, acetic acid, hydrochloric acid, or methanesulfonic acid at a temperature of 15°C or less for about 10 minutes to about 6 hours.
The coupling reaction is preferably conducted by reacting the diazonium salt obtained by the above-mentioned process with the compound represented by the general formula (B) at 40°C or less, preferably 25°C or less, for about 10 minutes to about 12 hours.
The product obtained by the reaction may form precipitated crystals but, in general, water or an alcoholic solvent is added to the reaction solution to thereby precipitate crystals, and the precipitated crystals can be collected by filtration. Also, an alcoholic solvent or water may be added to the reaction solution to thereby precipitate crystals, and the precipitated crystals can be collected by filtration. The crystals thus collected by filtration are washed and dried, as needed, to obtain the azo pigment represented by the general formula (1).

The compounds represented by the general formula (1) are obtained as a crude azo pigment (crude) by the above-described production process. In the case of using them as the pigments of the invention, they are preferably subjected to after-treatment. As methods of the after-treatment, there are illustrated, for example, a pigment particle-controlling step such as milling treatment (e.g., solvent-salt milling, salt milling, dry milling, solvent milling or acid pasting) or solvent heating treatment; and a surface-treating step using, for example, a resin, a surfactant or a dispersing agent.

The compounds of the invention represented by formula (1) are preferably subjected to the solvent heating treatment and/or the solvent-salt milling as the after-treating step. As a solvent to be used in the solvent heating treatment, there are illustrated, for example, water; aromatic hydrocarbon series solvents such as toluene and xylene; halogenated hydrocarbon series solvents such as chlorobenzene and o-dichlorobenzene; alcoholic solvents such as i-propanol and i-butanol; polar aprotic organic solvents such as N,N-dimethylformamide, N,N-dimethylacetamide, N-methyl-2-pyrrolidone; glacial acetic acid; pyridine; and a mixture thereof. An inorganic or organic acid or base may further be added to the above-described solvents. The temperature of the solvent heating treatment varies depending upon the desired primary particle size of the pigment, but is preferably from 40 to 150°C, more preferably from 60 to 100°C. Also, the treating time is preferably from 30 minutes to 24 hours.

As the solvent-salt milling, there is illustrated, for example, the procedure wherein a crude azo pigment, an inorganic salt, and an organic solvent which does not dissolve them are placed in a kneader, and knead-millmg of the mixture is conducted therein. As the inorganic salt, water-soluble inorganic salts can preferably be used. For example, inorganic salts such as sodium chloride, potassium chloride, and sodium sulfate are preferably used. Also, it is more preferred to use inorganic salts having an average particle size of from 0.5 to 50 µm. The amount of the inorganic salt to be used is preferably a 3- to 20-fold amount by weight, more preferably a 5- to 15-fold amount by weight, based on the crude pigment. As the organic solvent, water-soluble organic solvents can preferably be used and, since the solvent becomes easily vaporizable due to an increase in temperature upon kneading, high-boiling solvents are preferred in view of safety. Examples of such organic solvents include diethylene glycol, glycerin, ethylene glycol, propylene glycol, liquid polyethylene glycol, liquid polypropylene glycol, 2-(methoxymethoxy)ethanol, 2-butoxyethanol, 2-(i-pentyloxy)ethanol, 2-(hexyloxy)ethanol, diethylene glycol monomethyl ether, diethylene glycol monoethyl ether, diethylene glycol monobutyl ether, triethylene glycol, triethylene glycol monomethyl ether, 1-methoxy-2-propanol, 1-ethoxy-2-propanol, dipropylene glycol, dipropylene glycol monomethyl ether, dipropylene glycol monomethyl ether, dipropylene glycol, and a mixture thereof. The amount of the water-soluble organic solvent to be used is preferably a 0.1- to 5-fold amount by weight based on the crude azo pigment. The kneading temperature is preferably from 20 to 130°C, particularly preferably from 40 to 110°C. As a kneader, there can be used, for example, a kneader or a mix muller.

### <Vinyl polymer particles>

The vinyl polymer particles in the invention contain the azo pigment represented by formula (1), a tautomer thereof, a salt thereof, a hydrate thereof, or a solvate thereof, and a vinyl polymer containing a structural unit (a) having a non-aromatic alicyclic group bonded to the polymer main chain via a linking group, and a structural unit (b) having a hydrophilic group (hereinafter sometimes also referred to as "resin" or "specific rein").
The vinyl polymer pigment dispersion containing the pigment of the present invention can be produced by a conventional physical or chemical method using the specific resin, the pigment, and the like. For example, the resin can be produced by the method described in JP-A-9-151342, JP-A-10-140065, JP-A-11-209672, JP-A-11-172180, JP-A-10-25440 and JP-A-11-43636. Specific examples thereof include a phase inversion method and an acid precipitation method described in JP-A-9-151342 and JP-A-10-140065. Above all, a phase inversion method is preferred in view of dispersion stability.

### a) Phase inversion method

The phase inversion method is fundamentally a self-dispersion (phase inversion emulsification) method of dispersing a mixed melt of a self-dispersing or self-dissolving resin and a pigment in water, wherein a pigment-containing vinyl polymer particle can be obtained. The term "mixed melt" as used herein includes a state of the melt being mixed without dissolving, a state of the melt being dissolved and mixed, and a state containing these two states. Specific examples of the production method by the "phase inversion method" include the methods described in JP-A-10-140065.

### b) Acid precipitation method

The acid precipitation method is a method of preparing a hydrous cake composed of the resin and the pigment and neutralizing a part or all of anionic groups of the resin in the hydrous cake by using a basic compound to obtain a pigment-containing vinyl polymer particle.
The acid precipitation method specifically includes a method comprising (1) a step of dispersing the resin and the pigment in an alkaline aqueous medium and, if desired, performing a heat treatment to gel the resin, (2) a step of adjusting the pH to neutral or acidic to hydrophobe the resin, thereby firmly attaching the resin to the pigment, (3) a step of, if desired, performing filtration and water washing to obtain a hydrous cake, (4) a step of neutralizing a part or all of anionic groups of the resin in the hydrous cake by using a basic compound and then re-dispersing the cake in an aqueous medium, and (5) a step of, if desired, performing a heat treatment to gel the resin.

As more specific preparing methods of the above phase inversion method and acid precipitation method, the methods disclosed in JP-A-9-151342 and JP-A-10-140065 are exemplified.

In the aqueous ink for inkjet recording of the invention, vinyl polymer particles containing a pigment can be obtained by a process of obtaining the specific resin as aqueous dispersion, specifically the vinyl polymer particles can be obtained by providing a preparing process for preparing dispersion of vinyl polymer particles containing a pigment according to a method including the following process (1) and process (2). In addition, the manufacture of the aqueous ink for inkjet recording of the invention can be preferably carried out by providing the above preparing process and using the obtained dispersion of vinyl polymer particles containing a pigment together with water and a water-soluble medium to make aqueous ink.
Process (I): A process for obtaining dispersion by dispersing a mixture containing the above-described specific resin of the invention, an organic solvent, a neutralizer, a pigment and water by stirring and the like
Process (2): A process for removing the organic solvent from the above dispersion

A stirring method is not especially restricted and usually used mixing and stirring apparatus and, if necessary, a disperser such as an ultrasonic wave disperser, a high pressure homogenizer, a beads mill or the like can be used.

The preferred organic solvent includes an alcohol series solvent, a ketone series solvent, and an ether series solvent.
Examples of the alcohol series solvent include i-propyl alcohol, n-butanol, tert-butanol, and ethanol. Examples of the ketone series solvent include acetone, methyl ethyl ketone, diethyl ketone, and methyl i-butyl ketone. Examples of the ether series solvent include dibutyl ether and dioxane. Among these solvents, a ketone series solvent such as methyl ethyl ketone and an alcohol series solvent such as i-propyl alcohol are preferred, with methyl ethyl ketone being most preferred.

The neutralizing agent is used to neutralize a part or all of dissociative groups and form a stably emulsified or dispersed state of the specific resin in water. In the case where the specific resin has an anionic dissociative group as the dissociative group, the neutralizing agent used here includes a basic compound such as organic amine compound, ammonia, and alkali metal hydroxide. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N,N-dimethyl-ethanolamine, N,N-diethyl-ethanolamine, 2-dimethylamino-2-methyl-1-propanol, 2-ammo-2-methyl-1-propanol, N-methyldiethanolamine, N-ethyldiethanolamine, monoisopropanolamine, diisopropanolamine, and triisopropanolamine. Examples of the alkali metal hydroxide include lithium hydroxide, sodium hydroxide, and potassium hydroxide. Among these, in view of dispersion stability in water, sodium hydroxide, potassium hydroxide, triethylamine, and triethanolamine are preferred, with sodium hydroxide and potassium hydroxide being more preferred.

The content of the basic compound is preferably from 5 to 120 mol %, more preferably from 10 to 120 mol %, still more preferably from 80 to 120 mol %, per 100 mol % of the dissociative group. When the content is 5 mol % or more, this is effective in stabilizing dispersion in water and, when it is 120 mol % or less, an effect of reducing water-soluble components is produced.

In process (2), by removing the organic solvent from the dispersion obtained in process (1) by ordinary methods such as reduced pressure distillation and the like and phase inversion to an aqueous phase, vinyl polymer particle dispersion containing the pigment, the particle surfaces of the pigment are covered with the resin, can be obtained. The organic solvent in the obtained dispersion has been substantially removed and the amount of the organic solvent here is preferably 0.2% by mass or less, and more preferably 0.1 % by mass or less.

More specifically, the aqueous ink for inkjet recording can be manufactured by providing, for example, (1) a process of mixing a solution obtained by dissolving the specific resin in the invention having anionic groups in an organic solvent, a basic compound (a neutralizer) and water, and neutralizing the mixed solution, (2) a process of mixing a pigment in the obtained mixed solution to make suspension, and then dispersing the pigment with a disperser to obtain pigment dispersion, and (3) a process of removing the organic solvent by, for example, distillation to thereby cover the pigment with the specific resin having anionic groups and dispersing the covered pigment in an aqueous medium to make aqueous dispersion.
More specifically, JP-A-11-2096722 and JP-A-11-172180 can be referred to.

The size of particles of cumulative volume accounting for 95% of the pigment dispersion of the vinyl polymer particles of the invention is preferably 10nm to 400 nm, more preferably 40 nm to 400 nm, and still more preferably 60 nm to 350 nm. When the size of particles of cumulative volume accounting for 95% is 10 nm or more, preparing aptitude is improved, and storage stability is bettered when it is 400 nm or less. The particle size distribution of the vinyl polymer particles containing the pigment is not especially restricted and vinyl polymer particles having either broad particle size distribution or monodispersity particle size distribution may be used.
The size of particles of cumulative volume accounting for 95% of vinyl polymer particles containing a pigment and particle size distribution are found by measuring volume average particle size according to a dynamic light scattering method with a particle size distribution measuring apparatus NANOTRACK UPA-EX150 (manufactured by Nikkiso Co., Ltd.).

In the invention, dispersion treatment can be performed with, e.g., a ball mill, a roll mill, a beads mill, a high pressure homogenizer, a high speed stirring-type disperser, or an ultrasonic wave homogenizer.

The content of the vinyl polymer particles in the dispersion in the invention (more preferably aqueous ink for inkjet recording) is preferably 1% by mass to 10% by mass in view of dispersion stability and density of the dispersion, more preferably 2% by mass to 8% by mass, and especially preferably 2% by mass to 6% by mass.

### <Water-soluble medium>

The aqueous ink for inkjet recording in the invention contains a water-soluble medium as an essential component. A water-soluble organic solvent is exemplified as the water-soluble medium. The water-soluble organic solvent is used for purposes of a drying preventive, a wetting agent or as a penetration accelerator.
A drying preventive is used for the purpose of clogging prevention by drying of the inkjet recording ink at the orifices of nozzles, and a water-soluble organic solvent of low vapor pressure is preferred to water as the drying preventive and wetting agent. Further, a water-soluble organic solvent is preferably used as the penetration accelerator for the purpose of well penetrating the inkjet recording ink into paper.

Examples of the water-soluble solvent include alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, polyoxyethylene glyceryl ether, polyoxypropylene glyceryl ether, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; saccharides such as glucose, mannose, fructose, ribose, xylose, arabinose, galactose, aldonic acid, glucitol, (sorbitol), maltose, cellobiose, lactose, sucrose, trehalose, and maltotriose; sugar alcohols; hyaluronic acids; so-called solid wetting agents such as ureas; alkyl alcohols containing from 1 to 4 carbon atoms, such as ethanol, methanol, butanol, propanol, and i-propanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone, 1,3-dimethyl-2-imidazolidinone, formamide, acetamide, dimethyl sulfoxide, sorbitol, sorbitan, acetin, diacetin, triacetin, and sulfolane. These organic solvents may be used individually or in combination of two or more thereof.

For use as an anti-drying agent or a wetting agent, a polyol compound is useful, and examples thereof include glycerin, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, and 1,2,6-hexanetriol. These may be used alone or in combination of two or more thereof.

For use as a penetrant promting agent, a polyol compound is preferred, and examples of the aliphatic diol include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, and 2-ethyl-1,3-hexanediol. Among these. 2-ethyl-1,3-hexanediol and 2,2,4-trimethyl-1,3-pentanediol can be illustrated as preferred examples.

As regards the aqueous medium for use in the invention, one kind may be used alone or a mixture of two or more kinds may be used. Preferred examples of the aqueous medium include glycerin, dipropylene glycol, polyoxyethylene glyceryl ether, and polyoxypropylene glyceryl ether.
The content of the aqueous solvent is from 5% by weight to 60% by weight, preferably from 10% by weight to 40% by weight based on the total weight of the ink.
The addition amount of water for use in the present invention is not particularly limited but is preferably from 10% by weight to 99% by weight, more preferably from 30% by weight to 80% by weight, still more preferably from 50% by weight to 70% by weight, based on the total weight of the ink.

### <Surfactant>

The ink of the invention preferably contains a surface tension regulating agent. The surface tension regulating agent includes nonionic, cationic, anionic, and betaine surfactants. In order for the ink droplets to successfully hit by an inkjet system, the addition amount of the surface tension regulating agent is preferably an amount capable of adjusting the surface tension of the ink of the invention to from 20 to 60 mN/m, more preferably from 20 to 45 mN/m, still more preferably from 25 to 40 mN/m.
As the surfactant in the invention, a compound having a structure containing both a hydrophilic moiety and a hydrophobic moiety in the molecule may be effectively used, and any of an anionic surfactant, a cationic surfactant, an amphoteric surfactant, and a nonionic surfactant can be used. Furthermore, the above-described polymer substance (polymer dispersant) is also usable as the surfactant.

Specific examples of the anionic surfactant include sodium dodecylbenzenesulfonate, sodium laurylsulfate, sodium alkyldiphenyl ether disulfonate, sodium alkylnaphthalenesulfonate, sodium dialkylsulfosuccinate, sodium stearate, potassium oleate, sodium dioctylsulfosuccinate, sodium polyoxyethylene alkyl ether sulfate, sodium polyoxyethylene allyl ether sulfate, sodium polyoxyethylene alkylphenyl ether sulfate, sodium dialkylsulfosuccinate, sodium stearate, sodium oleate, and sodium t-octylphenoxyethoxypolyethoxyethylsulfate. One of these surfactants or two or more thereof may be selected.
Specific examples of the nonionic surfactant include polyoxyethylene lauryl ether, polyoxyethylene octylphenyl ether, polyoxyethylene oleylphenyl ether, polyoxyethylene nonylphenyl ether, an oxyethylene-oxypropylene block copolymer, t-octylphenoxyethyl polyethoxyethanol, and nonylphenoxyethyl polyethoxyethanol. One of these surfactants or two or more thereof may be selected.
Examples of the cationic surfactant include a tetraalkylammonium salt, an alkylamine salt, a benzalkonium salt, an alkylpyridinium salt, and an imidazolium salt, and specific examples thereof include dihydroxyethyl stearylamine, 2-heptadecenyl-hydroxyethylimidazoline, lauryldimethylbenzylammonium chloride, cetylpyridinium chloride, and stearamidomethylpyridinium chloride.
The amount of the surfactant added to the liquid composition of the present invention for inkjet recording is not particularly limited, but is preferably 1% by weight or more, more preferably from 1 to 10% by weight, still more preferably from 1 to 3% by weight.

### <Other components>

The ink of the invention may contain other additives. Examples of other additives include known additives such as ultraviolet absorber, anti-fading agent, fungicide, pH-adjusting agent, rust preventing agent, antioxidant, emulsion stabilizer, antiseptic, defoaming agent, viscosity adjusting agent, dispersion stabilizer, and chelating agent.

Examples of the ultraviolet absorber include benzophenone series ultraviolet absorber, a benzotriazole series ultraviolet absorber, a salicylate series ultraviolet absorber, a cyanoacrylate series ultraviolet absorber, and a nickel complex salt series ultraviolet absorber.

As for the anti-fading agent, various organic or metal complex series anti-fading agents may be used. Examples of the organic anti-fading agent include hydroquinones, alkoxyphenols, dialkoxyphenols, phenols, anilines, amines, indanes, chromans, alkoxyanilines, and heterocyclic rings, and examples of the metal complex include a nickel complex and a zinc complex.

Examples of the fungicide include sodium dehydroacetate, sodium benzoate, sodium pyridinethione-1-oxide, ethyl p-hydroxybenzoate, 1,2-benzisothiazolin-3-one, sodium sorbate, and pentachlorophenol sodium. The fungicide is preferably used in an amount of 0.02 to 1.00% by weight in the ink.

The pH adjusting agent is not particularly limited as long as it can adjust the pH to a desired value without adversely affecting the recording ink prepared, and an appropriate pH adjusting agent may be selected according to the purpose, but examples thereof include alcohol amines (e.g., diethanolamine, triethanolamine, and 2-amino-2-ethyl-1,3-propanediol), alkali metal hydroxides (e.g., lithium hydroxide, sodium hydroxide, and potassium hydroxide), ammonium hydroxides (e.g., ammonium hydroxide and quaternary ammonium hydroxide), phosphonium hydroxides, and alkali metal carbonates.

Examples of the rust preventing agent include acidic sulfite, sodium thiosulfate, ammonium thiodiglycolate, diisopropylammonium nitrite, pentaerythritol tetranitrate, and dicyclohexylammonium nitrite.

Examples of the antioxidant include a phenol series antioxidant (including a hindered phenol series antioxidant), an amine series antioxidant, a sulfur series antioxidant, and a phosphorous serie antioxidant.

Examples of the chelating agent include sodium ethylenediaminetetraacetate, sodium nitrilotriacetate, sodium hydroxyethylethylenediaminetriacetate, sodium diethylenetriaminepentaacetate, and sodium uramil diacetate.

### <Resin particles>

The ink in the invention may contain resin particles or polymer latex. As the resin particles or polymer latex, acrylic resins, vinyl acetate resins, styrene-butadiene resins, vinyl chloride resins, acryl-styrene resins, butadiene resins, styrene resins, crosslinked acrylic resins, crosslinked styrene resins, benzoguanamine resins, phenol resins, silicone resins, epoxy resins, urethane resins, paraffin resins, and fluorine resins can be used. As preferred examples, acrylic resins, acryl-styrene resins, styrene resins, crosslinked acrylic resins, and crosslinked styrene resins can be exemplified.
As preferred examples of the resin particles, self-dispersible polymer particles can be exemplified. Self-dispersible polymer particles are particles of a polymer which is capable of becoming a self-dispersion state in an aqueous medium by the functional group (in particular, an alkali-reactive group or a salt thereof) of the polymer itself in the absence of other surfactant, which polymer does not contain a free emulsifier. Here, the self-dispersion state is the state which includes both states of an emulsified state (emulsion) of the polymer being dispersed in an aqueous medium in a liquid state, and a dispersed state (suspension) of the polymer being dispersed in an aqueous medium in a solid state. A polymer capable of becoming a dispersed state being dispersed in a solid state is preferred in the invention.
It is preferred that self-dispersible polymer particles preferably used in the invention contain a polymer containing a hydrophilic constitutional unit and a constitutional unit deriving from an aromatic group-containing monomer from the viewpoint of self dispersibility.

The hydrophilic constituent unit is not particularly limited as long as it is derived from a hydrophilic group-containing monomer, and this unit may be derived from one kind of a hydrophilic group-containing monomer or may be derived from two or more kinds of hydrophilic group-containing monomers. The hydrophilic group is not particularly limited, and may be a dissociative group or a nonionic hydrophilic group. From the standpoint of accelerating self-dispersion and stabilizing the formed emulsion or dispersion state, the hydrophilic group is preferably a dissociative group, more preferably an anionic dissociative group. Examples of the dissociative group include a carboxyl group, a phosphoric acid group, and a sulfonic acid group. Among these, a carboxyl group is preferred in view of fixing property of the ink composition prepared. Examples of the dissociative group-containing monomer include an unsaturated carboxylic acid monomer, an unsaturated sulfonic acid monomer, and an unsaturated phosphoric acid monomer.
Specific examples of the unsaturated carboxylic acid monomer include acrylic acid, methacrylic acid, crotonic acid, itaconic acid, maleic acid, fumaric acid, citraconic acid, and 2-methacryloyloxymethylsuccinic acid. Specific examples of the unsaturated sulfonic acid monomer include styrenesulfonic acid, 2-acrylamido-2-methylpropanesulfonic acid, 3-sulfopropyl (meth)acrylate, and bis-(3-sulfopropyl)-itaconic acid ester. Specific examples of the unsaturated phosphoric acid monomer include vinylphosphonic acid, vinyl phosphate, bis(methacryloxyethyl) phosphate, diphenyl-2-acryloyloxyethyl phosphate, diphenyl-2-methacryloyloxyethyl phosphate, and dibutyl-2-acryloyloxyethyl phosphate. In view of dispersion stability and ejection stability, an unsaturated carboxylic acid monomer is preferred, with an acrylic acid and a methacrylic acid being more preferred.

The aromatic group-containing monomer is not particularly limited as long as it is a compound containing an aromatic group and a polymerizable group. The aromatic group may be a group derived from an aromatic hydrocarbon or a group derived from an aromatic heterocyclic ring. An aromatic group derived from an aromatic hydrocarbon is preferred in view of stability of the particle shape in an aqueous medium. The polymerizable group may be a condensation polymerizable group or an addition polymerizable group. **I**n the invention, in view of the stability of particle shape in an aqueous medium, an addition polymerizable group is preferred, with a group containing an ethylenically unsaturated bond being more preferred.
The aromatic group-containing monomer is preferably a monomer having an aromatic hydrocarbon-derived aromatic group and an ethylenically unsaturated bond, more preferably an aromatic group-containing (meth)acrylate monomer. Examples of the aromatic group-containing monomer include a phenoxyethyl (meth)acrylate, a benzyl (meth)acrylate, a phenyl (meth)acrylate, and a styrene series monomer. Among these, in view of the balance between hydrophilicity and hydrophobicity of the polymer chain and the ink fixing property, at least one selected from a phenoxyethyl (meth)acrylate, a benzyl (meth)acrylate, and a phenyl (meth)acrylate is preferred, a phenoxyethyl (meth)acrylate is more preferred, and phenoxyethyl acrylate is particuarly preferred.

Additionally, the term "(meth)acrylate" means an acrylate or a methacrylate. It is preferred that the self-dispersing polymer fine particles contain a constituent unit derived from an aromatic group-containing (meth)acrylate monomer and that the content thereof is from 10% by weight to 95% by weight. When the content of the aromatic group-containing (meth)acrylate monomer is from 10% by weight to 95% by weieght, the stability of self-emulsified or self-dispersed state is enhanced, and an increase in the ink viscosity can be suppressed. In view of stability of the self-dispersed state, or from the standpoint of stabilizing the particle shape in an aqueous medium by hydrophobic interaction between aromatic rings or of reducing the amount of water-soluble components by virtue of appropriate hydrophobization of the particles, the content of the constituent unit is more preferably from 15% by weight to 90% by weight, still more preferably from 15% by weight to 80% by weight, particularly preferably from 25% by weight to 70% by weight.
The self-dispersing polymer fine particles may consist of, for example, a constituent unit composed of an aromatic group-containing monomer and a constituent unit composed of a dissociative group-containing monomer, and may further contain other constituent units, if desired.

The monomer forming other constituent units is not particularly limited as long as it is a monomer copolymerizable with the aromatic group-containing monomer and the dissociative group-containing monomer. Above all, an alkyl group-containing monomer is preferred in view of flexibility of the polymer structure and easy control of the glass transition temperature (Tg).
Examples of the alkyl group-containing monomer include an alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate; an ethylenically unsaturated monomer having a hydroxyl group, such as hydroxyethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate; a dialkylaminoalkyl (meth)acrylate such as dimethylaminoethyl (meth)acrylate; and a (meth)acrylamide including an N-hydroxyalkyl(meth)acrylamide such as N-hydroxymethyl(meth)acrylamide, N-hydroxyethyl(meth)acrylamide, and N-hydroxybutyl(meth)acrylamide, and an N-alkoxyalkyl(meth)acrylamide such as N-methoxymethyl(meth)acrylamide, N-ethoxymethyl(meth)acrylamide, N-(n-iso)butoxymethyl(meth)acrylamide, N-methoxyethyl(meth)acrylamide, N-ethoxyethyl(meth)acrylamide, and N-(n-,iso)butoxyethyl(meth)acrylamide.
The molecular weight of the polymer capable of constituting self-dispersible polymer particles in the invention is preferably ranging from 3,000 to 200,000 as weight average molecular weight, more preferably ranging from 5,000 to 150,000, and still more preferably ranging from 10,000 to 100,000 By making the weight average molecular weight 3,000 or more, the amount of water-soluble component can be effectively controlled, while when by making the weight average molecular weight 200,000 or less, self-dispersion stability can be increased.

Additionally, the weight average molecular weight can be measured by gel permeation chromatograph (GPC).
From the standpoint of controlling the hydrophilicity and hydrophobicity of the polymer, the polymer constituting the self-dispersing polymer fine particles preferably contains an aromatic group-containing (meth)acrylate monomer in a copolymerization ratio of 15 to 90% by weight, a carboxyl group-containing monomer, and an alkyl group-containing monomer, and has an acid value of 25 to 100 and a weight average molecular weight of 3,000 to 200,000, more preferably contains an aromatic group-containing (meth)acrylate monomer in a copolymerization ratio of 15 to 80% by weight, a carboxyl group-containing monomer, and an alkyl group-containing monomer, and has an acid value of 25 to 95 and a weight average molecular weight of 5,000 to 150,000.
The average particle diameter of the self-dispersing polymer fine particles is preferably from 10 nm to 1 µm, more preferably from 10 to 200 nm, still more preferably from 20 to 100 nm particularly preferably from 20 to 50 nm.
The addition amount of the self-dispersing fine particles is preferably from 0.5 to 20% by weight, more preferably from 3 to 20% by weight, still more preferably from 5 to 15% by weight, based on the ink.
The glass transition temperature Tg of the self-dispersing polymer fine particles is preferably 30C° or more, more preferably 40C° or more, still more preferably 50C° or more.
Also, the polymer particles are not particularly limited with respect to their particle diameter distribution, and may be either polymer particles having a broad particle diameter distribution or polymer particles having a monodisperse particle diameter distribution. Also, two or more kinds of polymer fine particles each having a monodisperse particle diameter distribution may be mixed and used.

### <Liquid composition for enhancing printability>

In the invention, for example, a liquid composition for enhancing the printability is preferably imparted to a printing medium.
One preferred example of the liquid composition for enhancing the printability, which can be used in the invention, is a liquid composition capable of producing an aggregate by changing the pH of the ink. At this time, the pH of the liquid composition is preferably from 1.0 to 9.0, more preferably from 2.0 to 9.0, still more preferably from 3.0 to 8.5. The component of the liquid composition is preferably selected from, for example, polyacrylic acid, acetic acid, glycolic acid, masonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumaric acid, thiophenecarboxylic acid, nicotinic acid, derivatives of these compounds, and salts thereof. These compounds may be used alone or in combination of two or more thereof.

Also, one preferred example of the liquid composition for enhancing the printability, which can be used in the invention, is a processing solution having added thereto a polyvalent metal salt or a polyallylamine. Examples of the component of the liquid composition include, as the polyvalent metal salt, an alkaline earth metal of Group 2A of the periodic table (e.g., magnesium, calcium); a transition metal of Group 3B of the periodic table (e.g., lanthanum); a cation from Group 3A of the periodic table (e.g., aluminum); lanthanides (e.g., neodymium); and polyallylamine and a polyallylamine derivative. Of these, calcium and magnesium are preferred examples. Examples of the anion that may be preferably employed as a counter salt of calcium or magnesium include a carboxylate salt (e.g., formate, acetate, or benzoate), a nitrate, a chloride, and a thiocyanate. As for the amount added to the processing solution, the salt may be allowed to exist in an amount of from about 1 to about 10% by weight, preferably from about 1.5 to about 7% by weight, more preferably from about 2 to about 6% by weight, in the processing solution.

### <Physical properties of ink>

The surface tension of the ink in the invention is preferably 20 mN/m or more and 60 mN/m or less, more preferably 20 mN/m or more and 45 mN/m or less, and still more preferably 25 mN/m or more and 40 mN/m or less.
The viscosity at 20°C of the ink in the invention is preferably 1.2 mPa**·**s or more and 15.0 mPa**·**s or less, more preferably 2 mPa·s or more and less than 13 mPa·s**,** and still more preferably 2.5 mPa·s or more and less than 10 mPa·s.

### <Inkjet recording method>

As for the inkjet recording method preferred in the invention, energy is provided to the ink for inkjet recording to form an image on a known image-receiving material, that is, plain paper, resin-coated paper such as inkjet exclusive paper described, for example, in JP-A-8-169172, JP-A-8-27693, JP-A-2-276670, JP-A-7-276789, JP-A-9-323475, JP-A-62-238783, JP-A-10-153989, JP-A-10-217473, JP-A-10-235995, JP-A-10-337947, JP-A-10-217597, and JP-A-10-337947, film, electrophotographic common paper, cloth, glass, metal, ceramic or the like. Additionally, those described in paragraphs 0093 to 0105 of JP-A-2003-306623 can be applied as the inkjet recording method preferred in the invention.

**I**n forming an image, a polymer latex compound may be used in combination for the purpose of imparting gloss or water resistance or improving the weather resistance. The timing of imparting the latex compound to an image-receiving material may be before or after imparting a coloring material or simultaneously therewith. Accordingly, the site to which the polymer latex compound is added may be in the image-receiving paper or in the ink, or a liquid material of the polymer latex alone may be used. Specifically, the methods described in JP-A-2002-166638 (Japanese Patent Application No. 2000-363090), JP-A-2002-121440 (Japanese Patent Application No. 2000-315231), JP-A-2002-154201 (Japanese Patent Application No. 2000-354380), JP-A-2002-144696 (Japanese Patent Application No. 2000-343944), and JPA-2002-080759 (Japanese Patent Application No. 2000-268952) may be preferably used.

The image forming system preferred in the invention, as one example, includes a first step: a step of imparting a liquid composition for enhancing printability to a recording medium; a second step: a step of imparting an ink composition to the recording medium imparted with the liquid composition; and other steps: other steps are not particularly limited and may be appropriately selected according to the purpose, and examples thereof include a drying/removing step and a heating/fixing step. The drying/removing step is not particularly limited except for drying and removing the ink solvent in the ink composition imparted to the recording medium and may be appropriately selected according to the purpose. The heating/fixing step is not particularly limited except for melting/fixing latex particles contained in the ink used for the above-described inkjet recording method and may be appropriately selected according to the purpose.

The image fanning system preferred in the present invention, as another example, includes a first step: a step of imparting a liquid composition for enhancing printability to an intermediate transfer material; a second step: a step of imparting an ink composition to the intermediate transfer material imparted with the liquid composition; a third step: a step of transferring an ink image formed on the intermediate transfer material, onto a recording medium; and other steps: other steps are not particularly limited and may be appropriately selected according to the purpose, and examples thereof include a drying/removing step and a heating/fixing step.

### EXAMPLES

The invention will be described in further detail with reference to examples, but the invention is by no means restricted to these examples. In the examples "parts" means "parts by masts".
The azo pigments in the invention can be synthesized according to the synthesis method of Pig.-1 described in Synthesis Example I of the following pigment.

### [Synthesis Example 1]

### (Synthesis of pigment)

### Synthesis of Exemplified Compound (Pig.-1)

The scheme of synthesis of exemplified compound (Pig.-1) is shown below.

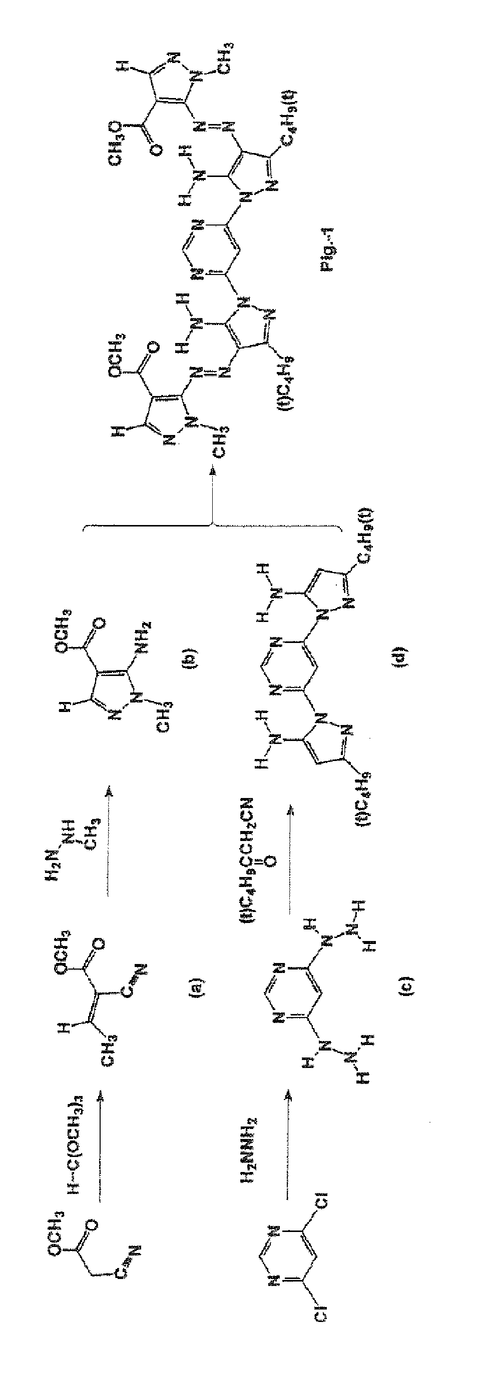

### (1) Synthesis of intermediate (a)

To 29.7 g (0.3 mol) of methyl cyanoacetate are added 42.4 g (0.4 mol) of trimethyl orthoformate, 20.4 g (0.2 mol) of acetic anhydride, and 0.5 g of p-toluenesulfonic acid and heated at 110°C (external temperature), and the mixture is stirred for 20 hours while distilling off low boiling temperature components generated from the reaction system. The reaction liquid is concentrated under reduced pressure, and then refined by silica gel column chromatography to thereby obtain 14.1 g of intermediate (a) (yellow powder, yield: 30%). The result of NMR measurement of the obtained intermediate (a) is as follows.
¹H-NMR (300 MHz, CDCl₃) 7.96 (s, 1H), 4.15 (s, 3H), 3.81 (s, 3H)

### (2) Synthesis of intermediate (b)

To 7.4 mL (141 mmol) of methyl hydrazine is added 150 mL of i-propanol and the mixed liquid is cooled to 15°C (internal temperature). To the mixed liquid is gradually added 7.0 g (49.6 mmol) of intermediate (a), and then the liquid is heated to 50°C and stirred for 1 hour and 40 minutes. The reaction liquid is concentrated under reduced pressure, and then refined by silica gel column chromatography to thereby obtain 10.5 g of intermediate (b) (white powder, yield: 50%). The result of NMR measurement of the obtained intermediate (b) is as follows.
¹H-NMR (300 MHz, CDCl₃) 7.60 (s, 1H), 4.95 (brs, 2H), 3.80 (s, 3H), 3.60 (s, 3H)

### (3) Synthesis of intermediate (c)

To 130 mL of hydrazine monohydrate is added 100 mL of methanol and the liquid is cooled to 10°C (internal temperature). To the mixed liquid is gradually added 50.0 g (336 mmol) of 4,6-dichloropyrimidine (internal temperature: 20°C or lower), and then the liquid is heated to 50°C and stirred for 4 hours and 30 minutes. The crystal precipitated from the reaction liquid is filtered, roughly washed with i-propanol and then dried to thereby obtain 43.1 g of intermediate (c) (white powder, yield: 92%). The result of NMR measurement of the obtained intermediate (c) is as follows.
¹H-NMR (300 MHz, d-DMSO) 7.82 (s, 1H), 7.55 (s, 2H), 5.96 (s, 1H), 4.12 (s, 4H)

### (4) Synthesis of intermediate (d)

Water (900 mL) is added to 35.0 g (0.25 mol) of intermediate (c) and 68.8 g (0.55 mol) of pivaloylacetonitrile and the mixed liquid is stirred at room temperature. 1M aqueous hydrochloric acid is dripped to the suspension to make pH 3, and then heated at 50°C and stirred for 8 hours. To the reaction liquid is dripped an aqueous solution of 8M potassium hydroxide to adjust pH to 8, and 1M aqueous hydrochloric acid is further dripped to adjust pH to 6. The precipitated crystal is filtered out and roughly washed with i-propanol and dried to thereby obtain 83.0 g of intermediate (d) (white powder, yield: 94%). The result of NMR measurement of the obtained intermediate (d) is as follows.
¹H-NMR (300 MHz, d-DMSO) 8.73 (s, 1H), 7.97 (s, 1H), 6.88 (s, 4H), 5.35 (s, 2H), 1.22 (s, 18H)

### (5) Synthesis of exemplified compound (Pig.-1)

To 4.1 mL of concentrated sulfuric acid is added 18.5 mL of acetic acid and cooled with ice with stirring, and 3.85 g (12.1 mmol) of 40% nitrosylsulfuric acid is dripped thereto. To the mixed liquid is gradually added 1.71 g (11.0 mmol) of intermediate (b) (internal temperature: 0°C or lower) and stirred at 0°C for 2 hours. Urea (150 mg) is added to the reaction liquid and further stirred at 0°C for 15 minutes to prepare diazo liquid A.
To 1.89 g (5.3 mmol) of intermediate (d) is added 50 mL of methanol and dissolved by heating, and then diazo liquid A is slowly dripped to the mixed liquid cooled with ice and stirred (internal temperature: 10°C or lower). After the reaction liquid is stirred at room temperature for 2 hours, the precipitated crystal is filtered out and roughly washed with methanol to thereby obtain crude crystal of exemplified compound (Pig.-1). After adding water to the crude crystal and stirring, the resulting suspension is adjusted with a sodium hydroxide aqueous solution to pH 7, 20 mL of dimethylacetamide is further added and the suspension is stirred at 80°C for 2 hours. The precipitated crystal is filtered out, and the suspension is washed out with methanol and the obtained crystal is filtered out and dried to obtain 2.0 g of exemplified compound (Pig,-1) (yellow powder, yield: 79%).

### [Synthesis Example 2]

### (Synthesis of vinyl polymer)

The components of the following monomer composition are mixed so that the total amount becomes 100 parts by mass. As the polymerization initiator, 1 part by mass of 2,2'-azobis(2,4-dimethylvaleronitrile) is added thereto and nitrogen gas replacement is sufficiently performed to thereby obtain a synthetic mixed liquid.

| | |
|---|---|
| Cyclohexyl acrylate (M-3) | 92 parts by mass |
| Acrylic acid | 3 parts by mass |
| Methacrylic acid | 5 parts by mass |
| 2-Mercaptoethanol | 0.1 parts by mass |

In the next place, 100 parts by mass of methyl ethyl ketone is stirred in the nitrogen atmosphere and the temperature is raised up to 75°C. The synthetic mixed liquid is dripped over 3 hours while stirring at 75°C. Further, the reaction is continued while stirring for 5 hours at 75C. After that, the reaction synthesized product is naturally cooled down to 25°C, and methyl ethyl ketone is added for dilution to make the solid content 50% by mass to thereby obtain a vinyl polymer solution having a mass average molecular weight of 45,000.

### [Example 1]

### (No. of experiment: 101)

The obtained 50% vinyl polymer solution (10 parts by mass) is neutralized by the addition of a sodium hydroxide aqueous solution (5 mol/L). Further, the necessary amount of alkali to completely neutralize methacrylic acid and acrylic acid of the vinyl polymer is added. Ten (10) parts by mass of exemplified compound of the pigment of the invention (Pig.-1) is added to the vinyl polymer solution, and kneaded with a roll mill for 2 to 8 hours according to necessity. The kneaded product is dispersed in 100 parts by mass of ion exchange water. The organic solvent is completely removed from the obtained dispersion at 55°C under reduced pressure, and further concentrated by the removal of water, thus aqueous dispersion of pigment-containing vinyl polymer particles having solid content concentration of 15% by mass is obtained.

### (Nos. of experiment: 102 to 383)

Aqueous dispersions of pigment-containing vinyl polymer particles of experimental Nos. 102 to 383 are obtained in the same manner as in experiment No. 101 except for replacing the kinds of pigments and vinyl polymers as shown in Tables 1 to 7 below. The pigments and vinyl polymers are synthesized in the same manner as in Synthesis Example 1.
In Table 2, evaluations are primarily performed by changing the kinds of the pigments of the invention. In Table 3, acid value dependency of the weigh average molecular weights of vinyl polymers is primarily evaluated. In Table 4, evaluations are primarily performed by changing the kinds of the vinyl polymers of the invention.

### (Evaluation of dispersion stability at the time of heating)

Each of the aqueous dispersions of pigment-containing vinyl polymer particles shown in Tables 1 to 7 is put in a PET vessel and stopped hermetically, and aged in the environment at 70°C for 7 days. The size of particles of cumulative volume accounting for 95% before and after heating (D95) is measured with a particle size distribution measuring apparatus NANOTRACK UPA-EX150 (manufactured by Nikkiso Co., Ltd.). The criteria of evaluation are shown below.
A: A sample whose size of particles of cumulative volume that accounts for 95% before heating: D95 is less than 230 nm, and difference in D95 before and after heating is less than 50 nm
B: A sample whose size of particles of cumulative volume that accounts for 95% before heating: D95 is 230 nm or more and less than 280 nm, and difference in D95 before and after heating is less than 50 nm
C: A sample whose size of particles of cumulative volume that accounts for 95% before heating: D95 is less than 230 nm, and difference in D95 before and after heating is 50 nm or more and less than 80 nm
D: A sample whose size of particles of cumulative volume that accounts for 95% before heating: D95 is 230 nm or more and less than 280 nm, and difference in D95 before and after heating is 50 nm or more and less than 80 nm
E: A sample out of the range of A to D
After evaluation according to the above criteria, heating time stability is deteriorated in order of A, B, C, D and E, and dispersion sample of evaluation E is judged to be not preferred.

**TABLE 1**

| No. of Experiment | Pigment | Composition of Vinyl Polymer (% by mass) | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remarks |
|---|---|---|---|---|---|---|---|---|---|---|---|---|
| | | Structural Unit (a) | | Acrylic Acid | Methacrylic Acid | | | | | | | |
| 101 | Pig.-1 | M-3 | 92 | 3 | 5 | 45,000 | 61 | 234 | 263 | 29 | B | Invention |
| 102 | Pig.-1 | M-3 | 92 | 4 | 4 | 39,000 | 53 | 126 | 133 | 7 | A | " |
| 103 | Pig.-1 | M-3 | 92 | 5 | 3 | 42,000 | 64 | 229 | 267 | 38 | A | " |
| 104 | Pig.-1 | M-3 | 90 | 5 | 5 | 50,000 | 66 | 139 | 150 | 11 | A | " |
| 105 | Pig.-1 | M-3 | 90 | 2.5 | 7.5 | 50,000 | 73 | 234 | 261 | 27 | B | " |
| 106 | Pig.-1 | M-3 | 90 | 7.5 | 2.5 | 50,000 | 80 | 239 | 284 | 45 | B | " |
| 107 | Pig.-1 | M-3 | 85 | 2.5 | 12.5 | 49,000 | 91 | 231 | 258 | 27 | B | " |
| 108 | Pig.-1 | M-3 | 85 | 5 | 10 | 48,000 | 84 | 126 | 137 | 11 | A | " |
| 109 | Pig.-1 | M-3 | 85 | 7.5 | 7.5 | 51,000 | 96 | 240 | 282 | 43 | B | " |
| 110 | Pig.-1 | M-3 | 85 | 10 | 5 | 50,000 | 88 | 142 | 177 | 36 | A | " |
| 111 | Pig.-1 | M-3 | 85 | 12.5 | 2.5 | 50,000 | 175 | 127 | 175 | 48 | A | " |
| 112 | Pig.-1 | M-3 | 80 | 2.5 | 17.5 | 49,000 | 123 | 226 | 253 | 27 | A | " |
| 113 | Pig.-1 | M-3 | 80 | 5 | 15 | 47,000 | 116 | 118 | 129 | 12 | A | " |
| 114 | Pig.-1 | M-3 | 80 | 7.5 | 12.5 | 49,000 | 130 | 231 | 273 | 42 | B | " |
| 115 | Pig.-1 | M-3 | 80 | 10 | 10 | 49,000 | 138 | 129 | 165 | 36 | A | " |
| 116 | Pig.-1 | M-3 | 80 | 12.5 | 7.5 | 50,000 | 140 | 137 | 185 | 48 | A | " |
| 117 | Pig.-1 | M-3 | 80 | 15 | 5 | 47,000 | 155 | 230 | 269 | 39 | B | " |
| 118 | Pig.-1 | M-3 | 80 | 17.5 | 2.5 | 47,000 | 148 | 130 | 174 | 44 | A | " |
| 119 | Pig.-1 | M-3 | 75 | 5 | 20 | 50,000 | 175 | 224 | 263 | 39 | A | " |
| 120 | Pig.-1 | M-3 | 75 | 7.5 | 17.5 | 50,000 | 164 | 132 | 155 | 23 | A | " |
| 121 | Pig.-1 | M-3 | 75 | 10 | 15 | 50,000 | 183 | 232 | 279 | 48 | B | " |
| 122 | Pig.-1 | M-3 | 75 | 12.5 | 12.5 | 46,000 | 173 | 120 | 156 | 37 | A | " |
| 123 | Pig.-1 | M-3 | 75 | 15 | 10 | 48,000 | 190 | 233 | 282 | 49 | B | " |
| 124 | Pig.-1 | M-3 | 75 | 17.5 | 7.5 | 46,000 | 193 | 230 | 269 | 40 | B | " |
| 125 | Pig.-1 | M-3 | 75 | 20 | 5 | 51,000 | 181 | 145 | 191 | 47 | A | " |
| 126 | Fig.-1 | M-3 | 70 | 5 | 25 | 50,000 | 196 | 119 | 130 | 11 | A | " |
| 127 | Pig.-1 | M-3 | 70 | 10 | 20 | 50,000 | 216 | 229 | 268 | 39 | A | " |
| 128 | Pig.-1 | M-3 | 70 | 15 | 15 | 49,000 | 221 | 226 | 274 | 48 | A | " |
| 129 | Pig.-1 | M-3 | 70 | 20 | 10 | 50,000 | 229 | 239 | 266 | 27 | B | " |
| 130 | Pig.-1 | M-3 | 70 | 25 | 5 | 46,000 | 220 | 130 | 176 | 47 | A | " |
| 131 | Pig.-1 | M-3 | 65 | 5 | 30 | 50,000 | 227 | 117 | 127 | 11 | A | " |
| 132 | Pig.-1 | M-3 | 65 | 10 | 25 | 50,000 | 249 | 224 | 269 | 45 | A | " |
| 133 | Pig.-1 | M-3 | 65 | 15 | 20 | 56,000 | 241 | 142 | 191 | 49 | A | " |
| 134 | Pig.-1 | M-3 | 65 | 20 | 15 | 52,000 | 262 | 243 | 287 | 45 | B | " |
| 135 | Pig.-1 | M-3 | 65 | 25 | 10 | 50,000 | 267 | 237 | 265 | 29 | B | " |
| 136 | Pig.-1 | M-3 | 65 | 30 | 5 | 49,000 | 262 | 131 | 178 | 47 | A | " |
| 137 | Pig.-1 | M-3 | 60 | 5 | 35 | 50,000 | 301 | 214 | 286 | 72 | C | " |
| 138 | Pig.-1 | M-3 | 60 | 10 | 30 | 53,000 | 343 | 181 | 239 | 58 | C | " |
| 139 | Pig.-1 | M-3 | 60 | 15 | 25 | 56,000 | 303 | 222 | 292 | 70 | C | " |
| 140 | Pig.-1 | M-3 | 60 | 20 | 20 | 53,000 | 330 | 212 | 294 | 70 | C | " |
| 141 | Pig.-1 | M-3 | 60 | 25 | 15 | 52,000 | 300 | 223 | 274 | 51 | C | " |
| 142 | Pig.-1 | M-3 | 60 | 30 | 10 | 50,000 | 448 | 201 | 258 | 57 | C | " |
| 143 | Pig.-1 | M-3 | 60 | 35 | 5 | 50,000 | 313 | 219 | 270 | 51 | C | " |
| 144 | Pig.-1 | M-3 | 93 | 1 | 6 | 49,000 | 56 | 227 | 285 | 58 | C | " |
| 145 | Pig.-1 | M-3 | 93 | 2.5 | 4.5 | 50,000 | 57 | 224 | 282 | 58 | C | " |
| 146 | Pig.-1 | M-3 | 93 | 4 | 3 | 50,000 | 60 | 217 | 278 | 61 | C | " |

**TABLE2**

| No. of Experiment | Pigment | Composition of Vinyl Polymer (% by mass) | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remarks |
|---|---|---|---|---|---|---|---|---|---|---|---|---|
| | | Structural Unit (a) | | Acrylic Acid | Methacrylic Acid | | | | | | | |
| 147 | Pig.-2 | M-3 | 92 | 3 | 5 | 48,000 | 50 | 227 | 265 | 38 | A | Invention |
| 148 | Pig.-3 | M-3 | 92 | 4 | 4 | 50,000 | 50 | 205 | 245 | 40 | A | " |
| 149 | Pig.-6 | M-3 | 92 | 5 | 3 | 37,000 | 51 | 277 | 311 | 34 | B | " |
| 150 | Pig.-7 | M-3 | 90 | 5 | 5 | 46,000 | 67 | 213 | 246 | 33 | A | " |
| 151 | Pig.-10 | M-3 | 90 | 2.5 | 7.5 | 46,000 | 60 | 278 | 320 | 42 | B | " |
| 152 | Pig.-11 | M-3 | 90 | 7.5 | 2.5 | 47,000 | 69 | 263 | 299 | 36 | B | " |
| 153 | Pig.-12 | M-3 | 85 | 2.5 | 12.5 | 49,000 | 79 | 191 | 228 | 37 | A | " |
| 154 | Pig.-15 | M-3 | 85 | 5 | 10 | 47,000 | 81 | 274 | 313 | 39 | B | " |
| 155 | Pig.-16 | M-3 | 85 | 7.5 | 7.5 | 48,000 | 83 | 266 | 313 | 47 | B | " |
| 156 | Pig.-17 | M-3 | 85 | 10 | 5 | 50,000 | 83 | 278 | 322 | 44 | B | " |
| 157 | Pig.-18 | M-3 | 85 | 12.5 | 2.5 | 47,000 | 175 | 163 | 193 | 30 | A | " |
| 158 | Pig.-22 | M-3 | 80 | 2.5 | 17.5 | 48,000 | 109 | 265 | 312 | 47 | B | " |
| 159 | Pig.-23 | M-3 | 80 | 5 | 15 | 48,000 | 113 | 277 | 319 | 42 | B | " |
| 160 | Pig.-24 | M-3 | 80 | 7.5 | 12.5 | 47,000 | 120 | 163 | 193 | 30 | A | " |
| 161 | Pig.-25 | M-3 | 80 | 10 | 10 | 50,000 | 131 | 269 | 313 | 44 | B | " |
| 162 | Pig.-28 | M-3 | 80 | 12.5 | 7.5 | 48,000 | 140 | 227 | 265 | 38 | A | " |
| 163 | Pig.-29 | M-3 | 80 | 15 | 5 | 47,000 | 141 | 264 | 306 | 42 | B | " |
| 164 | Pig.-30 | M-3 | 80 | 17.5 | 2.5 | 46,000 | 146 | 263 | 302 | 39 | B | " |
| 165 | Pig.-35 | M-3 | 75 | 5 | 20 | 48,000 | 164 | 177 | 210 | 33 | A | " |
| 166 | Pig.-38 | M-3 | 75 | 7.5 | 17.5 | 51,000 | 163 | 269 | 317 | 48 | B | " |
| 167 | Pig.-39 | M-3 | 75 | 10 | 15 | 47,000 | 168 | 274 | 316 | 42 | B | " |
| 168 | Pig.-42 | M-3 | 75 | 12.5 | 12.5 | 46,000 | 175 | 163 | 193 | 30 | A | " |
| 169 | Pig.-43 | M-3 | 75 | 15 | 10 | 50,000 | 172 | 273 | 322 | 49 | B | " |
| 170 | Pig.-45 | M-3 | 75 | 17.5 | 7.5 | 46,000 | 182 | 113 | 140 | 27 | A | " |
| 171 | Ping.-46 | M-3 | 75 | 20 | 5 | 51,000 | 179 | 269 | 317 | 48 | B | " |
| 172 | Pig.-47 | M-3 | 70 | 5 | 25 | 51,000 | 193 | 269 | 316 | 47 | B | " |
| 173 | Pig.-49 | M-3 | 70 | 10 | 20 | 49,000 | 198 | 265 | 303 | 38 | B | " |
| 174 | Pig.-50 | M-3 | 70 | 15 | 15 | 47,000 | 211 | 163 | 193 | 30 | A | " |
| 175 | Pig.-51 | M-3 | 70 | 20 | 10 | 49,000 | 214 | 241 | 284 | 43 | B | " |
| 176 | Pig.-58 | M-3 | 70 | 25 | 5 | 51,000 | 216 | 278 | 313 | 35 | B | " |
| 177 | Pig.-69 | M-3 | 65 | 5 | 30 | 48,000 | 229 | 177 | 210 | 33 | A | " |
| 178 | Pig.-70 | M-3 | 65 | 10 | 25 | 47,000 | 238 | 113 | 140 | 27 | A | " |
| 179 | PY-74 | M-3 | 95 | 2.5 | 2.5 | 48,000 | 46 | 299 | 395 | 96 | E | Comparison |
| 180 | PY-74 | M-3 | 92 | 4 | 4 | 50,000 | 47 | 355 | 463 | 108 | E | " |
| 181 | PY-74 | M-3 | 90 | 5 | 5 | 47,000 | 63 | 347 | 431 | 84 | E | " |
| 182 | PY-74 | M-3 | 90 | 2.5 | 7.5 | 48,000 | 58 | 327 | 433 | 106 | E | " |
| 183 | PY-74 | M-3 | 90 | 7.5 | 2.5 | 47,000 | 66 | 330 | 418 | 88 | E | " |
| 184 | PY-74 | M-3 | 85 | 5 | 10 | 49,000 | 77 | 341 | 428 | 87 | E | " |
| 185 | PY-74 | M-3 | 85 | 7.5 | 7.5 | 51,000 | 94 | 369 | 454 | 85 | E | " |
| 186 | PY-74 | M-3 | 80 | 7.5 | 12.5 | 51,000 | 111 | 369 | 457 | 88 | E | " |
| 187 | PY-74 | M-3 | 80 | 10 | 10 | 50,000 | 131 | 355 | 443 | 88 | E | " |
| 188 | PY-74 | M-3 | 80 | 12.5 | 7.5 | 47,000 | 135 | 341 | 428 | 87 | E | " |
| 189 | PY-74 | M-3 | 75 | 12.5 | 12.5 | 49,000 | 168 | 341 | 431 | 90 | E | " |
| 190 | PY-74 | M-3 | 70 | 15 | 15 | 51,000 | 202 | 369 | 462 | 93 | E | " |
| 191 | PY-74 | M-3 | 70 | 20 | 10 | 48,000 | 210 | 341 | 438 | 97 | E | " |
| 192 | PY-74 | M-3 | 65 | 15 | 20 | 47,000 | 236 | 341 | 438 | 97 | E | " |
| 193 | PY-74 | M-3 | 65 | 20 | 15 | 50,000 | 241 | 355 | 453 | 98 | E | " |
| 194 | PY-74 | M-3 | 60 | 20 | 20 | 49,000 | 275 | 341 | 448 | 107 | E | " |

**TABLE 3**

| No. of Experiment | Pigment | Composition of Vinyl Polymer (% by mass) | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remarks |
|---|---|---|---|---|---|---|---|---|---|---|---|---|
| | | Structural Unit (a) | | Acrylic Acid | Methacrylic Acid | | | | | | | |
| 195 | Pig.-18 | M-3 | 90 | 5 | 5 | 5,000 | 68 | 184 | 231 | 47 | A | Invention |
| 196 | pig.-1 | M-3 | 90 | 5 | 5 | 105,000 | 67 | 250 | 269 | 19 | B | " |
| 197 | Pig.-1 | M-3 | 90 | 5 | 5 | 148,000 | 67 | 134 | 164 | 30 | A | " |
| 198 | Pig.-2 | M-3 | 90 | 5 | 5 | 148,000 | 69 | 151 | 169 | 18 | A | " |
| 199 | Pig.-3 | M-3 | 96 | 1 | 3 | 51,000 | 11 | 236 | 272 | 36 | B | " |
| 200 | Pig.-1 | M-3 | 96 | 3 | 1 | 50,000 | 26 | 243 | 267 | 24 | B | " |
| 201 | Pig.-1 | M-3 | 85 | 7.5 | 7.5 | 5,000 | 103 | 217 | 261 | 44 | A | " |
| 202 | Pig.-18 | M-3 | 85 | 7.5 | 7.5 | 70,000 | 102 | 151 | 181 | 30 | A | " |
| 203 | Pig.-1 | M-3 | 85 | 7.5 | 7.5 | 93,000 | 101 | 184 | 229 | 45 | A | " |
| 204 | Pig.-1 | M-3 | 85 | 7.5 | 7.5 | 111,000 | 98 | 250 | 295 | 45 | d3 | " |
| 205 | Pig.-1 | M-3 | 85 | 7.5 | 7.5 | 131,000 | 105 | 151 | 163 | 12 | A | " |
| 206 | Pig.-25 | M-3 | 85 | 7.5 | 7.5 | 150,000 | 101 | 184 | 229 | 45 | A | " |
| 207 | Pig.-1 | M-3 | 80 | 10 | 10 | 5,000 | 138 | 184 | 232 | 48 | A | " |
| 208 | Pig.-1 | M-3 | 80 | 10 | 10 | 7,000 | 141 | 151 | 193 | 42 | A | " |
| 209 | Pig.-1 | M-3 | 80 | 10 | 10 | 88,000 | 134 | 250 | 296 | 46 | B | " |
| 210 | Pig.-1 | M-3 | 80 | 10 | 10 | 112,000 | 139 | 184 | 211 | 27 | A | " |
| 211 | Pig.-16 | M-3 | 80 | 10 | 10 | 130,000 | 137 | 151 | 187 | 36 | A | " |
| 212 | Pig.-1 | M-3 | 80 | 10 | 10 | 149,000 | 138 | 151 | 181 | 30 | A | " |
| 213 | Pig.-1 | M-3 | 75 | 12.5 | 12.5 | 5,000 | 176 | 184 | 232 | 48 | A | " |
| 214 | Pig.-1 | M-3 | 75 | 12.5 | 12.5 | 7,000 | 172 | 283 | 331 | 48 | B | " |
| 215 | Pig.-28 | M-3 | 75 | 12.5 | 12.5 | 77,000 | 173 | 151 | 187 | 36 | A | " |
| 216 | Pig.-1 | M-3 | 75 | 12.5 | 12.5 | 112,000 | 177 | 151 | 163 | 12 | A | " |
| 217 | Pig.-18 | M-3 | 75 | 12.5 | 12.5 | 129,000 | 171 | 250 | 299 | 49 | B | " |
| 218 | Pig.-1 | M-3 | 75 | 12.5 | 12.5 | 149,000 | 178 | 151 | 157 | 6 | A | " |
| 219 | Pig.-1 | M-3 | 70 | 15 | 15 | 5,000 | 208 | 275 | 320 | 45 | B | " |
| 220 | Pig.-1 | M-3 | 70 | 15 | 15 | 75,000 | 208 | 277 | 319 | 42 | B | " |
| 221 | Pig.-18 | M-3 | 70 | 15 | 15 | 89,000 | 207 | 217 | 240 | 23 | A | " |
| 222 | Pig.-19 | M-3 | 70 | 15 | 15 | 112,000 | 213 | 151 | 163 | 12 | A | " |
| 223 | Pig.-1 | M-3 | 70 | 15 | 15 | 129,000 | 210 | 217 | 253 | 36 | A | " |
| 224 | Pig.-19 | M-3 | 70 | 15 | 15 | 149,000 | 206 | 273 | 313 | 40 | B | " |
| 225 | Pig.-1 | M-3 | 90 | 5 | 5 | 3,000 | 66 | 223 | 283 | 60 | C | " |
| 226 | Pig.-1 | M-3 | 90 | 5 | 5 | 4,000 | 64 | 214 | 281 | 67 | C | " |
| 227 | Pig.-1 | M-3 | 90 | 5 | 5 | 155,000 | 61 | 209 | 252 | 43 | C | " |
| 228 | Pig.-1 | M-3 | 80 | 10 | 10 | 3,000 | 132 | 222 | 287 | 65 | C | " |
| 229 | Pig.-1 | M-3 | 80 | 10 | 10 | 4,000 | 131 | 219 | 273 | 54 | C | " |
| 230 | Pig.-1 | M-3 | 80 | 10 | 10 | 165,000 | 131 | 212 | 262 | 50 | C | " |
| 231 | Pig.-1 | M-3 | 70 | 15 | 15 | 3,000 | 204 | 212 | 264 | 52 | C | " |
| 232 | Pig.-1 | M-3 | 70 | 15 | 15 | 4,000 | 204 | 206 | 263 | 57 | C | " |
| 233 | Pig.-1 | M-3 | 70 | 15 | 15 | 160,000 | 204 | 223 | 276 | 53 | C | " |
| 234 | Pig.-1 | M-3 | 65 | 17.5 | 17.5 | 3,000 | 236 | 199 | 251 | 52 | C | " |
| 235 | Pig.-1 | M-3 | 65 | 17.5 | 17.5 | 4,000 | 240 | 223 | 284 | 61 | C | " |
| 236 | Pig.-1 | M-3 | 65 | 17.5 | 17.5 | 165,000 | 238 | 201 | 254 | 53 | C | " |
| 237 | Pig.-1 | M-3 | 98 | 2 | 0 | 48,000 | 204 | 248 | 294 | 46 | B | " |
| 238 | Pig.-1 | M-3 | 98 | 1 | 1 | 47,000 | 6 | 252 | 301 | 49 | B | " |
| 239 | Pig.-1 | M-3 | 98 | 0 | 2 | 51,000 | 9 | 261 | 299 | 38 | B | " |
| 240 | Pig.-1 | M-3 | 95 | 0 | 5 | 47,000 | 22 | 244 | 283 | 39 | B | " |
| 241 | Pig.-1 | M-3 | 90 | 0 | 10 | 51,000 | 53 | 255 | 303 | 48 | B | " |
| 242 | Pig.-1 | M-3 | 85 | 0 | 15 | 50,000 | 88 | 241 | 282 | 41 | B | " |
| 243 | Pig.-1 | M-3 | 80 | 20 | 0 | 46,000 | 145 | 233 | 278 | 45 | B | " |
| 244 | Pig.-1 | M-3 | 75 | 0 | 25 | 51,000 | 154 | 253 | 293 | 40 | B | " |
| 245 | Pig.-1 | M-3 | 70 | 0 | 30 | 51,000 | 187 | 236 | 278 | 42 | B | " |
| 246 | Pig.-1 | M-3 | 65 | 0 | 35 | 49,000 | 216 | 248 | 291 | 43 | B | " |
| 247 | Pig.-1 | M-3 | 67 | 16.5 | 16.5 | 47,000 | 226 | 272 | 310 | 38 | B | " |

**TABLE4**

| No. of Experiment | Pigment | Composition of Vinyl Polymer (% by mass) | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remarks |
|---|---|---|---|---|---|---|---|---|---|---|---|---|
| | | Structural Unit (a) | | Acrylic Acid | Methacrylic Acid | | | | | | | |
| 248 | Pig.-1 | M-1 | 85 | 5 | 10 | 48,000 | 100 | 172 | 195 | 23 | A | Invention |
| 249 | Pig.-18 | M-2 | 85 | 5 | 10 | 50,000 | 99 | 220 | 245 | 25 | B | " |
| 250 | Pig.-1 | M-6 | 85 | 5 | 10 | 38,000 | 99 | 120 | 145 | 25 | A | " |
| 251 | Pig.-25 | M-8 | 85 | 5 | 10 | 47,000 | 101 | 143 | 158 | 15 | A | " |
| 252 | Pig.-18 | M-11 | 85 | 2.5 | 12.5 | 47,000 | 95 | 143 | 173 | 30 | A | " |
| 253 | Pig.-1 | M-12 | 85 | 7.5 | 7.5 | 47,000 | 103 | 143 | 163 | 20 | A | " |
| 254 | Pig.-18 | M-15 | 85 | 7.5 | 7.5 | 49,000 | 103 | 201 | 221 | 20 | A | " |
| 255 | Pig.-1 | M-16 | 85 | 7.5 | 7.5 | 47,000 | 102 | 143 | 168 | 25 | A | " |
| 256 | Pig.-18 | M-17 | 85 | 7.5 | 7.5 | 48,000 | 101 | 172 | 210 | 38 | A | " |
| 257 | Pig.-18 | M-20 | 85 | 7.5 | 7.5 | 50,000 | 98 | 210 | 255 | 45 | B | " |
| 258 | Pig.-1 | M-21 | 85 | 7.5 | 7.5 | 47,000 | 105 | 143 | 153 | 10 | A | " |
| 259 | Pig.-18 | M-25 | 85 | 7.5 | 7.5 | 48,000 | 101 | 172 | 210 | 38 | A | " |
| 260 | Pig.-1 | M-26 | 85 | 7.5 | 7.5 | 48,000 | 102 | 172 | 202 | 30 | A | " |
| 261 | Pig.-18 | M-30 | 85 | 7.5 | 7.5 | 47,000 | 105 | 143 | 153 | 10 | A | " |
| 262 | Pig.-1 | M-34 | 85 | 7.5 | 7.5 | 50,000 | 98 | 210 | 254 | 44 | B | " |
| 263 | Pig.-25 | M-39 | 85 | 7.5 | 7.5 | 48,000 | 103 | 172 | 195 | 23 | A | " |
| 264 | Pig.-20 | M-43 | 85 | 7.5 | 7.5 | 47,000 | 101 | 143 | 173 | 30 | A | " |
| 265 | Pig.-1 | M-50 | 85 | 7.5 | 7.5 | 47,000 | 102 | 143 | 168 | 25 | A | " |
| 266 | Pig.-18 | M-54 | 85 | 7.5 | 7.5 | 48,000 | 104 | 172 | 187 | 15 | A | " |
| 267 | Pig.-1 | M-58 | 85 | 7.5 | 7.5 | 51,000 | 100 | 219 | 264 | 45 | B | " |
| 268 | Pig.-18 | M-63 | 85 | 7.5 | 7.5 | 47,000 | 101 | 143 | 173 | 30 | A | " |
| 269 | Pig.-1 | M-69 | 85 | 7.5 | 7.5 | 47,000 | 105 | 143 | 153 | 10 | A | " |
| 270 | Pig.-19 | M-70 | 85 | 7.5 | 7.5 | 50,000 | 99 | 220 | 263 | 43 | A | " |
| 271 | Pig.-1 | M-74 | 85 | 7.5 | 7.5 | 47,000 | 106 | 143 | 148 | 5 | A | " |
| 272 | Pig.-1 | M-81 | 85 | 7.5 | 7.5 | 51,000 | 100 | 228 | 276 | 48 | B | " |
| 273 | Pig.-1 | M-83 | 85 | 7.5 | 7.5 | 51,000 | 100 | 222 | 267 | 45 | B | " |
| 274 | Pig.-20 | M-94 | 85 | 7.5 | 7.5 | 49,000 | 99 | 201 | 240 | 39 | A | " |
| 275 | Pig.-1 | M-99 | 85 | 7.5 | 7.5 | 47,000 | 105 | 143 | 153 | 10 | A | " |
| 276 | Pig.-1 | M-105 | 85 | 7.5 | 7.5 | 49,000 | 102 | 201 | 231 | 30 | A | " |
| 277 | Pig.-37 | M-110 | 85 | 7.5 | 7.5 | 51,000 | 98 | 229 | 274 | 45 | B | " |

**TABLE 5**

| No. of Experiment | Pigment | Composition of Vinyl Polymer (% by mass) | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remarks |
|---|---|---|---|---|---|---|---|---|---|---|---|---|
| | | Structural Unit (a) | | Acrylic Acid | Methacrylic Acid | | | | | | | |
| 278 | Pig.-1 | BZA | 90 | 5 | 5 | 48,000 | 66 | 279 | 344 | 55 | D | Reference |
| 279 | Pig.-1 | BZA | 85 | 7.5 | 7.5 | 51,000 | 99 | 270 | 341 | 51 | D | " |
| 280 | Pig.-18 | BZA | 80 | 10 | 10 | 70,000 | 132 | 264 | 434 | 70 | D | " |
| 281 | Pig.-1 | BZA | 75 | 12.5 | 12.5 | 53,000 | 168 | 237 | 379 | 62 | D | " |
| 282 | Pig.-8 | BZA | 70 | 15 | 15 | 61,000 | 203 | 246 | 409 | 79 | D | " |
| 283 | Pig.-1 | BZA | 65 | 17.5 | 17.5 | 54,000 | 238 | 255 | 406 | 60 | D | " |
| 284 | Pig.-1 | EHA | 90 | 5 | 5 | 52,000 | 61 | 278 | 360 | 72 | D | " |
| 285 | Pig.-8 | EHA | 85 | 7.5 | 7.5 | 53,000 | 96 | 232 | 377 | 60 | D | " |
| 286 | Pig.-18 | EHA | 80 | 10 | 10 | 52,000 | 132 | 268 | 363 | 75 | D | " |
| 287 | Pig.-1 | EHA | 75 | 12.5 | 12.5 | 54,000 | 165 | 246 | 428 | 72 | D | " |
| 288 | Pig.-1 | EHA | 70 | 15 | 15 | 53,000 | 205 | 271 | 370 | 53 | D | " |
| 289 | Pig.-1 | EHA | 65 | 17.5 | 17.5 | 54,000 | 238 | 264 | 406 | 60 | D | " |
| 290 | Pig.-1 | LA | 90 | 5 | 5 | 53,000 | 61 | 273 | 384 | 67 | D | " |
| 291 | Pig.-20 | LA | 85 | 7.5 | 7.5 | 51,000 | 99 | 266 | 350 | 51 | D | " |
| 292 | Pig.-1 | LA | 80 | 10 | 10 | 52,000 | 132 | 277 | 357 | 69 | D | " |
| 293 | Pig.-18 | LA | 75 | 12.5 | 12.5 | 53,000 | 168 | 261 | 376 | 59 | D | " |
| 294 | Pig.-1 | LA | 70 | 15 | 15 | 52,000 | 203 | 251 | 369 | 71 | D | " |
| 295 | Pig.-19 | LA | 65 | 17.5 | 17.5 | 53,000 | 240 | 273 | 374 | 57 | D | " |
| 296 | Pig.-1 | SMA | 90 | 5 | 5 | 49,000 | 61 | 265 | 378 | 61 | D | " |
| 297 | Pig.-1 | SMA | 85 | 7.5 | 7.5 | 48,000 | 99 | 262 | 352 | 51 | D | " |
| 298 | Pig.-18 | SMA | 80 | 10 | 10 | 50,000 | 132 | 248 | 357 | 69 | D | " |
| 299 | Pig.-1 | SMA | 75 | 12.5 | 12.5 | 50,000 | 168 | 237 | 381 | 64 | D | " |
| 300 | Pig.-8 | SMA | 70 | 15 | 15 | 50,000 | 203 | 233 | 374 | 76 | D | " |
| 301 | Pig.-9 | SMA | 65 | 17.5 | 17.5 | 53,000 | 240 | 267 | 373 | 56 | D | " |
| 302 | Pig.-1 | DEAEMA | 90 | 5 | 5 | 49,000 | 60 | 269 | 374 | 64 | D | " |
| 303 | Pig.-20 | DEAEMA | 85 | 7.5 | 7.5 | 52,000 | 96 | 231 | 381 | 68 | D | " |
| 304 | Pig.-1 | DEAEMA | 80 | 10 | 10 | 53,000 | 131 | 250 | 381 | 65 | D | " |
| 305 | Pig.-18 | DEAEMA | 75 | 12.5 | 12.5 | 53,000 | 167 | 269 | 393 | 73 | D | " |
| 306 | Pig.-1 | DEAEMA | 70 | 15 | 15 | 49,000 | 203 | 260 | 396 | 73 | D | " |
| 307 | Pig.-19 | DEAEMA | 65 | 17.5 | 17.5 | 49,000 | 238 | 242 | 396 | 70 | D | " |
| 308 | Pag.-1 | HEMA | 90 | 5 | 5 | 53,000 | 59 | 261 | 405 | 76 | D | " |
| 309 | Pig.-20 | HEMA | 85 | 7.5 | 7.5 | 54,000 | 95 | 232 | 404 | 71 | D | " |
| 310 | Pig.-1 | HEMA | 80 | 10 | 10 | 54,000 | 130 | 236 | 415 | 79 | D | " |
| 311 | Pig.-18 | HEMA | 75 | 12.5 | 12.5 | 53,000 | 166 | 239 | 411 | 72 | D | " |
| 312 | Pig.-1 | HEMA | 70 | 15 | 15 | 54,000 | 201 | 242 | 424 | 71 | D | " |
| 313 | Pig.-19 | HEMA | 65 | 17.5 | 17.5 | 53,000 | 237 | 246 | 423 | 77 | D | " |
| 314 | Pig.-1 | Styrene | 90 | 5 | 5 | 50,000 | 61 | 271 | 384 | 67 | D | " |
| 315 | Pig.-20 | Styrene | 85 | 7.5 | 7.5 | 50,000 | 95 | 243 | 366 | 78 | D | " |
| 316 | Pig.-1 | Styrene | 80 | 10 | 10 | 53,000 | 133 | 234 | 371 | 54 | D | " |
| 317 | Pig.-18 | Styrene | 75 | 12.5 | 12.5 | 49000 | 168 | 260 | 379 | 69 | D | " |
| 318 | Pig.-1 | Styrene | 70 | 15 | 15 | 52,000 | 203 | 230 | 378 | 65 | D | " |
| 319 | Pig.-19 | Styrene | 65 | 17.5 | 17.5 | 53,000 | 239 | 237 | 389 | 73 | D | " |

| | | | | | | | | | | | | |
|---|---|---|---|---|---|---|---|---|---|---|---|---|
| BZA: Benzyl acrylate EHA: 2-Ethylhexyl acrylate LA: Lauryl acrylate SMA: Stearyl methacrylate DEAEMA: 2-(Diethylamino)ethyl methacrylate HEMA: 2-Hydroxyethyl methacrylate | | | | | | | | | | | | |

**TABLE 6**

| No. of Experiment | Pigment | Composition of Vinyl Polymer (% by mass) | | | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remark |
|---|---|---|---|---|---|---|---|---|---|---|---|---|---|---|
| | | Structural Unit (a) | | Structural Unit (a2) | | Acrylic Acid | Methacrylic Acid | | | | | | | |
| 320 | Pig.-1 | M-1 | 5 | MA | 85 | 0 | 10 | 49,000 | 60 | 201 | 241 | 40 | A | Invention |
| 321 | Pig.-18 | M-2 | 50 | MA | 40 | 0 | 10 | 50,000 | 60 | 230 | 265 | 35 | B | " |
| 322 | Pig.-1 | M-3 | 5 | MA | 85 | 0 | 10 | 39,000 | 59 | 146 | 194 | 48 | A | " |
| 323 | Pig.-22 | M-3 | 20 | MA | 70 | 0 | 10 | 48,000 | 61 | 172 | 205 | 33 | A | " |
| 324 | Pig.-18 | M-3 | 35 | MA | 55 | 0 | 10 | 47,000 | 59 | 143 | 183 | 40 | A | " |
| 325 | Pig.-1 | M-3 | 55 | MA | 35 | 0 | 10 | 48,000 | 60 | 172 | 212 | 40 | A | " |
| 326 | Pig.-18 | M-3 | 75 | MA | 15 | 0 | 10 | 50,000 | 60 | 230 | 265 | 35 | B | " |
| 327 | Pig.-1 | M-11 | 50 | MA | 40 | 0 | 10 | 47,000 | 60 | 143 | 178 | 35 | A | " |
| 328 | Pig.-18 | M-14 | 50 | MA | 40 | 0 | 10 | 48,000 | 59 | 172 | 220 | 48 | A | " |
| 329 | Pig.-18 | M-34 | 50 | MA | 40 | 0 | 10 | 47,000 | 59 | 143 | 183 | 40 | A | " |
| 330 | Pig.-1 | M-38 | 50 | MA | 40 | 0 | 10 | 50,000 | 80 | 230 | 265 | 35 | B | " |
| 331 | Pig.-25 | M-58 | 50 | MA | 40 | 0 | 10 | 47,000 | 80 | 143 | 178 | 35 | A | " |
| 332 | Pig.-1 | M-3 | 5 | MM | 85 | 0 | 10 | 48,000 | 80 | 172 | 212 | 40 | A | " |
| 333 | Pig.-18 | M-3 | 20 | MM | 70 | 0 | 10 | 48,000 | 82 | 172 | 197 | 25 | A | " |
| 334 | Pig.-1 | M-3 | 35 | MM | 55 | 0 | 10 | 47,000 | 59 | 143 | 183 | 40 | A | " |
| 335 | Pig.-25 | M-3 | 55 | MM | 35 | 0 | 10 | 49,000 | 60 | 201 | 241 | 40 | A | " |
| 336 | Pig.-20 | M-3 | 75 | MM | 15 | 0 | 10 | 46,000 | 60 | 114 | 139 | 25 | A | " |
| 337 | Pig.-1 | M-3 | 50 | MM | 40 | 0 | 10 | 152,000 | 60 | 172 | 212 | 40 | A | " |
| 338 | Pig.-18 | M-3 | 50 | MM | 40 | 0 | 10 | 4,000 | 62 | 172 | 197 | 25 | A | " |
| 339 | Pig.-1 | M-3 | 57 | MM | 40 | 0 | 3 | 47,000 | 11 | 143 | 183 | 40 | A | " |
| 340 | Pig.-25 | M-3 | 20 | MM | 40 | 0 | 40 | 49,000 | 248 | 201 | 241 | 40 | A | " |
| 341 | Pig.-1 | M-3 | 5 | MM | 85 | 10 | 0 | 50,000 | 70 | 230 | 303 | 73 | B | " |
| 342 | Pig.-18 | M-3 | 20 | MM | 70 | 10 | 0 | 47,000 | 76 | 143 | 163 | 20 | A | " |
| 343 | Pig.-1 | M-3 | 35 | MM | 55 | 10 | 0 | 48,000 | 74 | 172 | 205 | 33 | A | " |
| 344 | Pig.-18 | M-3 | 55 | MM | 35 | 10 | 0 | 49,000 | 70 | 201 | 244 | 43 | A | " |
| 345 | Pig.-1 | M-3 | 75 | MM | 15 | 10 | 0 | 50,000 | 73 | 230 | 265 | 35 | B | " |
| 346 | Pig.-19 | M-12 | 5 | MM | 85 | 0 | 10 | 48,000 | 59 | 172 | 220 | 48 | A | " |
| 347 | Pig.-1 | M-29 | 20 | MM | 70 | 0 | l0 | 47,000 | 64 | 143 | 158 | 15 | A | " |
| 348 | Pig.-1 | M-58 | 35 | MM | 55 | 0 | 10 | 49,000 | 60 | 201 | 241 | 40 | A | " |
| 349 | Pig.-1 | M-71 | 55 | MM | 35 | 0 | 10 | 50,000 | 59 | 230 | 278 | 48 | B | " |
| 350 | Pig.-20 | M-91 | 75 | MM | 15 | 0 | 10 | 51,000 | 55 | 259 | 306 | 47 | B | " |
| 351 | Pig.-1 | M-58 | 5 | EHA | 85 | 0 | 10 | 47,000 | 63 | 143 | 163 | 20 | A | " |
| 352 | Pig.-1 | M-58 | 20 | EHA | 70 | 0 | 10 | 49,000 | 60 | 201 | 241 | 40 | A | " |
| 353 | Pig.-37 | M-58 | 35 | EHA | 55 | 0 | 10 | 48,000 | 59 | 172 | 220 | 48 | A | " |
| 354 | Pig.-1 | M-58 | 55 | EHA | 35 | 0 | 10 | 50,000 | 57 | 230 | 275 | 45 | B | " |
| 355 | Pig.-1 | M-58 | 75 | EHA | 15 | 0 | 10 | 48,000 | 60 | 172 | 212 | 40 | A | " |
| 356 | Pig.-18 | M-58 | 15 | LA | 85 | 0 | 10 | 65,000 | 59 | 189 | 229 | 40 | A | " |
| 357 | Pig.-1 | M-58 | 20 | LA | 70 | 0 | 10 | 46,000 | 61 | 114 | 137 | 23 | A | " |
| 358 | Pig.-8 | M-58 | 35 | LA | 55 | 0 | 10 | 59,000 | 55 | 262 | 301 | 39 | A | " |
| 359 | Pig.-1 | M-58 | 55 | LA | 35 | 0 | 10 | 50,000 | 57 | 230 | 268 | 38 | B | " |
| 360 | Pig.-1 | M-58 | 75 | LA | 15 | 0 | 10 | 49,000 | 57 | 201 | 245 | 44 | A | " |
| 361 | Pig.-8 | M-58 | 5 | SMA | 85 | 0 | 10 | 50,000 | 57 | 230 | 268 | 38 | B | " |
| 362 | Pig.-18 | M-58 | 20 | SMA | 70 | 0 | 10 | 47,000 | 59 | 143 | 183 | 40 | A | " |
| 363 | Pig.-1 | M-58 | 35 | SMA | 55 | 0 | 10 | 47,000 | 58 | 143 | 188 | 45 | A | " |
| 364 | Pig.-1 | M-58 | 55 | SMA | 35 | 0 | 10 | 50,000 | 58 | 230 | 276 | 46 | B | " |
| 365 | Pig.-1 | M-58 | 75 | SMA | 15 | 0 | 10 | 51,000 | 56 | 259 | 301 | 42 | B | " |
| 366 | Pig.-1 | M-58 | 5 | DEAEMA | 85 | 0 | 10 | 53,000 | 54 | 283 | 306 | 43 | B | " |
| 367 | Pig.-20 | M-58 | 20 | DEAEMA | 70 | 0 | 10 | 53,000 | 55 | 235 | 266 | 31 | B | " |
| 368 | Pig.-1 | M-58 | 35 | DEAEMA | 55 | 0 | 10 | 52,000 | 54 | 278 | 311 | 33 | B | " |
| 369 | Pig.-18 | M-58 | 55 | DEAEMA | 35 | 0 | 10 | 53,000 | 54 | 224 | 266 | 42 | A | " |
| 370 | Pig.-1 | M-58 | 75 | DEAEMA | 15 | 0 | 10 | 50,000 | 55 | 230 | 277 | 47 | B | " |
| 371 | Pig.-19 | M-58 | 5 | HEMA | 85 | 0 | 10 | 53,000 | 55 | 180 | 203 | 23 | A | " |
| 372 | Pig.-1 | M-58 | 20 | HEMA | 70 | 0 | 10 | 49,000 | 57 | 230 | 279 | 49 | B | " |
| 373 | Pig.-1 | M-58 | 35 | HEMA | 55 | 0 | 10 | 48,000 | 59 | 201 | 232 | 31 | A | " |
| 374 | Pig.-18 | M-58 | 55 | HEMA | 35 | 0 | 10 | 50,000 | 55 | 223 | 262 | 39 | A | " |
| 375 | Pig.-1 | M-58 | 75 | HEMA | 15 | 0 | 10 | 50,000 | 53 | 229 | 266 | 37 | A | " |

| | | | | | | | | | | | | | | |
|---|---|---|---|---|---|---|---|---|---|---|---|---|---|---|
| MA: Methyl acrylate MM: Methyl methacrylate EHA: 2-Ethylhexyl acrylate LA: Lauryl acrylate SMA: Stearyl methacrylate DEAEMA: 2-(Diethylamnino)ethyl methacrylate HEMA: 2-Hydroxyethyl methacrylate | | | | | | | | | | | | | | |

**TABLE 7**

| No. of Experiment | Pigment | Composition of Vinyl Polymer (% by mass) | | | | | | Weight Average Molecular Weight | Acid Value (mg KOH/g) | Size of Particles of Cumulative Weight Accounting for 95% D95/nm | D95 after Aging by Heating at 70°C for 7 Days | Δ (difference in D95 before and after aging by heating) | Evaluation | Remark |
|---|---|---|---|---|---|---|---|---|---|---|---|---|---|---|
| | | Structural Unit (a) | | Structural Unit(a2) | | Acrylic Acid | Methacrylic Acid | | | | | | | |
| 376 | Pig.-1 | M-3 | 50 | MA | 40 | 0 | 10 | 162,000 | 54 | 222 | 300 | 78 | C | Invention |
| 377 | Pig.-1 | M-3 | 50 | MA | 40 | 0 | 10 | 4,000 | 52 | 216 | 269 | 53 | C | " |
| 378 | Pig.-1 | M-3 | 57 | MA | 40 | 0 | 3 | 53,000 | 9 | 208 | 242 | 34 | C | " |
| 379 | Pig.-1 | M-3 | 20 | MA | 40 | 0 | 40 | 54,000 | 251 | 196 | 246 | 50 | C | " |
| 380 | PY-74 | M-3 | 50 | MA | 40 | 0 | 10 | 49,000 | 53 | 348 | 426 | 78 | E | Comparison |
| 381 | PY-74 | M-3 | 44 | MM | 46 | 0 | 10 | 52,000 | 53 | 344 | 415 | 71 | E | " |
| 382 | PY-74 | M-3 | 50 | MA | 40 | 0 | 10 | 53,000 | 53 | 351 | 428 | 77 | E | " |
| 383 | PY-74 | M-3 | 50 | MM | 40 | 0 | 10 | 53,000 | 52 | 337 | 416 | 79 | E | " |

| | | | | | | | | | | | | | | |
|---|---|---|---|---|---|---|---|---|---|---|---|---|---|---|
| MA: Methyl acrylate MM: Methyl methacrylate | | | | | | | | | | | | | | |

From experiment Nos. 101 to 146, it is seen that by using exemplified compound (Pig.-1) of the invention as the pigment and using cyclohexyl acrylate in structural unit (a) of thevinyl polymer, the stability of the size of particles of cumulative volume accounting for 95% (D95) is especially preferred even after storage under high temperature condition.

From experiment Nos. 147 to 178, it is seen that the stability of the size of particles of cumulative volume accounting for 95% (D95) is also especially preferred even when the pigment is changed from exemplified compound (Pig.-1) of the invention to exemplified compounds different from exemplified compound (Fig.-1).

From experiment Nos. 195 to 247, it is seen that the stability of the size of particles of cumulative volume accounting for 95% (D95) is also especially preferred even when the weight average molecular weight and acid value of the vinyl polymer of the invention are changed as the pigment.

From experiment Nos. 248 to 277, it is seen that the stability of the size of particles of cumulative volume accounting for 95% (D95) is also especially preferred even when structural unit (a) of the vinyl polymer is changed from cyclohexyl acrylate (exemplified compound (M-3) to structural unit (a) shown in Table 4.

From experiment Nos. 320 to 375, it is seen that the stability of the size of particles of cumulative volume accounting for 95% (D95) is also especially preferred even when constitutional component (a) of the vinyl polymer of the invention is changed to constitutional component (a1) and constitutional component (a2).

### [Example 2]

### (Preparation of self-dispersible polymer particles)

A three-necked flask having a capacity of 2 liters equipped with a stirrer, a thermometer, a reflux condenser and a nitrogen gas-introducing pipe is charged with 350.0 g of methyl ethyl ketone and the temperature is raised up to 75°C. While maintaining the temperature in the reaction vessel at 75°C, a mixed solution including 162.0 g of phenoxethyl acrylate, 180.0 g of methyl methacrylate, 18.0 g of acrylic acid, 70 g of methyl ethyl ketone, and 1.44 g of V-601 (manufactured by Wako Pure Chemical Co., Ltd.) is dripped at a uniform speed so that dripping is completed in 2 hours. After termination of dripping, a solution including 0.72 g of V-601 and 36.0 g of methyl ethyl ketone is added thereto, and after stirring at 75°C for 2 hours, a solution including 0.72 g of V-601 and 36.0 g of i-propanol is added and stirred at 75°C for 2 hours, and then the temperature is raised to 85°C and stirring is continued for further 2 hours. The weight average molecular weight (Mw) of the obtained copolymer is 64,000 (computed in terms of polystyrene by gel permeation chromatography (GPC), used columns are TSKgel Super HZM-H, TSKgel Super HZ4000, and TSKgel Super HZ200 (manufactured by Toso Corporation)), and the acid value is 38.9 (mg KOH/g).
Subsequently, 668.3 g of the polymer solution is weighed, and 388.3 g ofi-propanol, and 145.7 mL of 1 mol/L NaOH aqueous solution are added thereto, and the internal temperature of the reaction vessel is raised to 80°C. Next, 720.1 g of distilled water was dropped at the rate of 20 ml/min to generate aqueous dispersion. After that, the temperature in the reaction vessel is maintained at 80°C for 2 hours, at 85°C for 2 hours, and at 90°C for 2 hours in atmospheric pressure, and then the pressure in the reaction vessel is reduced, and i-propanol, methyl ethyl ketone and distilled water in total of 913.7 g are distilled off to thereby obtain aqueous dispersion (emulsion) of self-dispersible polymer particles (B-01) having solid content concentration of 28.0% by mass.

| | |
|---|---|
| Aqueous dispersion of pigment-containing vinyl polymer Particles in Example 1 (Experiment No. 101) | 25 parts by mass |
| Glycerin5 parts by mass | |
| Diethylene glycol. | 5 parts by mass |
| Triethylene glycol monobutyl ether | 5 parts by mass |
| Polyoxypropylene glyceryl ether | 10 parts by mass |
| Dipropylene glycol | 5 parts by mass |
| Triethanolamine | 1 part by mass |
| OLFINE E1010 (manufactured by Nisshin Chemical Industry Co., Ltd.) | 1 part by mass |
| Aqueous dispersion of self-dispersible polymer particles (B-01) | 15 parts by mass |
| Ion exchange water | 28 parts by mass |

Ink composition is obtained by mixing the above components.
The pH of the ink composition measured with pH meter WM-50EG (manufactured by Toa DKK) is 8.5.

### (Evaluation of streak and unevenness)

The above ink composition obtained from the pigment dispersion in Example 1 (Experiment No. 101) (inkjet recording aqueous ink) is put in a PET vessel and stopped hermetically, and aged in the environment at 58°C for 4 weeks. Then, recording is performed on Kassai (photo luster Pro) (manufactured by Fuji Photo Film Co., Ltd.) with Dump-283 printer (manufactured by Fuji Film Dimatix) as inkjet printer. As recording sample, a solid printing sample capable of expressing in R value, G value and B value is used and printing is performed by the setting shown in Table 8.

**TABLE 8**

| Sample No. | R Value | G Value | B Value |
|---|---|---|---|
| 1 | 255 | 255 | 152 |
| 2 | 255 | 255 | 144 |
| 3 | 255 | 255 | 136 |
| 4 | 255 | 255 | 128 |
| 5 | 255 | 255 | 120 |
| 6 | 255 | 255 | 112 |
| 7 | 255 | 255 | 104 |
| 8 | 255 | 255 | 96 |
| 9 | 255 | 255 | 88 |
| 10 | 255 | 255 | 80 |
| 11 | 255 | 255 | 72 |
| 12 | 255 | 255 | 64 |
| 13 | 255 | 255 | 56 |
| 14 | 255 | 255 | 48 |
| 15 | 255 | 255 | 40 |
| 16 | 255 | 255 | 32 |
| 17 | 255 | 255 | 24 |
| 18 | 255 | 255 | 16 |
| 19 | 255 | 255 | 8 |
| 20 | 255 | 255 | 0 |

Reflection density of printing sample is measured with X-rite 983 (manufactured by X-rite) and steaks and unevenness are confirmed. The samples 1 to 20 in Table 8 are measured in order, and arbitrary three points of the points in the sample where temperature rising saturated are measured, the values were 1.82, 1.79 and 1.84. Evaluation of lprinting in Examples 3 to 20 and Comparative Examples 1 to 3 is performed in the same manner as in Example 2 except for changing the pigment dispersion in Example 1 (Experiment No. 101) to pigment dispersions as shown in Table 9.
The criteria of evaluation are: the difference in the maximum value and the minimum value of print density at arbitrary three points of printed part is 0 to 0.15 is graded A, 0.16 to 0.30 is grade B, 0.31 or greater is grade C, and the case where the print density is 1.5 or less even at any point of three points is also grade C.

### (Experiment of evaluation of printed image)

Evaluation of image fastness is performed with the above-manufactured ink composition and Dump-283 printer (manufactured by Fuji Film Dimatix), and as image-receiving sheets, EPSON photographic paper <Luster> as paper a, photographic paper Cryspia <High Luster> as paper b, PR101 (manufactured by Canon) as paper c, Advanced Photo Paper (manufactured by Hewlett-Packard) as paper d. and Kassai (manufactured by Fuji Photo Film Co., Ltd.) as paper e, and printing of mono-color image pattern the density of which is stepwise changed is performed with PM-G800 and evaluated.

With regard to image preserving property, the following evaluation is performed by measuring color density. Light fastness is evaluated by measuring image density Ci just after printing with X-rite 310, image is exposed to xenon light (100,000 lux) for 7 days with a weather meter (Atlas Co.), and image density Cf is measured again and residual rate of the colorant (Cf/Ci) x 100 is found. The reflection density is evaluated at three points of 0.7, 1.2 and 2.0, and the case where residual rate of the colorant is 85% or more is grade A, one point is less than 85% is grade B and two points are less than 85% is grade C, and density at all of 3 points is less than 85% is D.
The results obtained are shown in Table 9 below.

**TABLE 9**

| Example No. | Number. Of Experiment of Pigment Dispersion | Print Density (Y Value) | | | Difference | Evaluation | Light Fastness | | | | |
|---|---|---|---|---|---|---|---|---|---|---|---|
| | | | | | | | Paper a | Paper b | Paper c | Paper d | Paper e |
| Example 2 | 109 | 1.79 | 1.82 | 1.84 | 0.05 | A | A | A | A | A | A |
| Example 3 | 123 | 1.83 | 1.78 | 1.80 | 0.05 | A | A | A | A | A | A |
| Example 4 | 157 | 1.84 | 1.86 | 1.85 | 0.02 | A | A | A | A | A | A |
| Example 5 | 168 / | 1.85 | 1.85 | 1.83 | 0.02 | A | A | A | A | A | A |
| Example 6 | 176 | 1.82/ | 1.82 | 1.78 | 0.04 | A | A | A | A | A | A |
| Example 7 | 178 | 1.84 | 1.86 | 1.82 | 0.04 | A | A | A | A | A | A |
| Examples 8 | 202 | 1.82 | 1.83 | I.78 | 0.05 | A | A | A | A | A | A |
| Example 9 | 209 | 1.79 | 1.86 | 1.83 | 0.07 | A | A | A | A | A | A |
| Example 10 | 221 | 1.86 | 1.85 | 1.86 | 0.01 | A | A | A | A | B | B |
| Example 11 | 248 | 1.80 | 1.78 | 1.82 | 0.04 | A | A | A | A | A | A |
| Example 12 | 250 | 1.78 | 1.83 | 1.80 | 0.05 | A | A | A | A | A | A |
| Example 13 | 257 | 1.84 | 1.78 | 1.84 | 0.06 | A | A | A | A | A | A |
| Example 14 | 258 | 1.82 | 1.83 | 1.79 | 0.04 | A | A | A | A | A | A |
| Example 15 | 259 | 1.86 | 1.84 | 1.82 | 0.04 | A | A | A | A | A | A |
| Example 16 | 262 | 1.82 | 1.82 | 1.78 | 0.04 | A | A | A | A | A | A |
| Example 17 | 263 | 1.84 | 1.85 | 1.83 | 0.02 | A | A | A | A | A | A |
| Example 18 | 274 | 1.82 | 1.83 | 1.78 | 0.05 | A | A | A | A | A | A |
| Example 19 | 276 | 1.85 | 1.78 | 1.82 | 0.07 | A | A | A | A | A | A |
| Example 20 | 277 | 1.82 | 1.82 | 1.80 | 0.02 | A | A | A | A | A | A |
| Comparative Example 1 | 182 | 1.40 | 1.52 | 1.07 | 0.45 | C | D | D | D | D | D |
| Comparative Example 2 | 185 | 1.64 | 1.32 | 1.67 | 0.35 | C | D | D | D | D | D |
| Comparative Example 3 | 187 | 1.45 | 1.22 | 1.58 | 0.36 | C | D | D | D | D | D |

ln Examples 2 to 20, when the inkjet recording aqueous ink of the invention is used, high print density is obtained, the difference in the maximum and minimum values of print densit6y is small, uniform printed image is obtained and generation of streaks and unevenness is co9ntrollefd. Further, light fastness when the inkjet recording aqueous ink of the invention is used, light fastness is high regardless of the kind of paper and control of streak and unevenness can be reconcile.

### Industrial Applicablity

The invention provides pigment dispersion capable of preparing aqueous ink for inkjet recording, the particle size of which is not changed after storage for a long period of time or even after being exposed to a high temperature condition, generation of streaks and unevenness are controlled, which aqueous ink is capable of forming uniform printed images excellent in light fastness. Another object is to provide aqueous ink for inkjet recording using the pigment dispersion.

While the invention has been described in detail with reference to specific examples thereof, it will be apparent to one skilled in the art that various changes and modifications can be made therein without departing from the spirit and scope thereof.
This patent application is based on Japanese patent application filed on September 4, 2009 (Japanese Patent Application No. 2009-205360) and the contents of the patent application are incorporated in the present patent application as reference.

## Claims

1. A pigment dispersion comprising vinyl polymer particles containing A and B, wherein A is an azo pigment represented by the following formula (1), a tautomer thereof, a salt thereof, a hydrate thereof, or a solvate thereof, and
B is a vinyl polymer containing a structural unit (a) having a non-aromatic alicyclic group bonded to the polymer main chain via a linking group, and a structural unit (b) having a hydrophilic group: 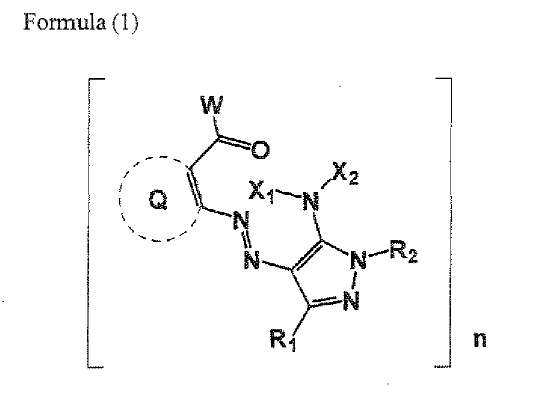 wherein Q represents a nonmetallic atomic group necessary to form a 5-, 6- or 7-membered heterocyclic ring together with a carbon atom; W represents an alkoxy group, an amino group, an alkyl group or an aryl group; each of X₁ and X₂ independently represents a hydrogen atom, an alkyl group, an acyl group, an alkylsulfonyl group, or an arylsulfonyl group; R₁ represents a hydrogen atom or a substituent; R₂ represents a heterocyclic group; n represents an integer of 1 to 4, and when n is 2, formula (1) represents a dimer via Q,W, X₁, X₂, R₁ or R₂, when n is 3, formula (1) represents a trimer via Q, W, X₁, X₂, R₁ or R₂, and when n is 4, formula (1) represents a tetramer via Q,W, X₁, X₂, R₁ or R₂.

2. The pigment dispersion as claimed in claim 1, wherein the structural unit (a) contains a structural unit (a1) represented by the following formula (I); 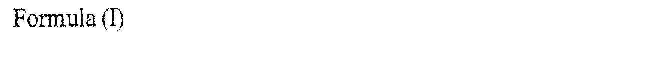 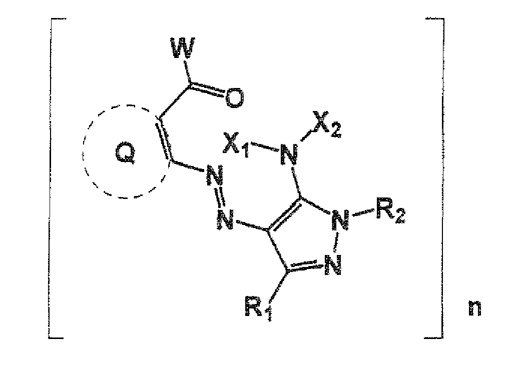 wherein R₁ represents a hydrogen atom, a methyl group, or a halogen atom; L₁ represents -COO-, -OCO-, -CONR₂-, -0-, or a substituted or unsubstituted phenylene group; R₂ represents a hydrogen atom or an alkyl group; L₂ represents a single bond or a divalent linking group; and Cyc₁ represents a monovalent non-aromatic alicyclic group.

3. The pigment dispersion as claimed in claim 1 or 2,
wherein the structural unit (a) further contains a structural unit (a2) deriving from alkyl ester of acrylic acid or methacrylic acid.

4. The pigment dispersion as claimed in any one of claims 1 to 3,
wherein the structural unit (a) contains one or more selected from structural units deriving from cyclohexyl (meth)acrylate in a total amount of 5% by mass or more and less than 93% by mass to total weight of the vinyl polymer, and
the structural unit (b) contains one or more selected from structural units deriving from acrylic acid or methacrylic acid in a total amount of 3% by mass or more and less than 41% by mass to the gross mass of the vinyl polymer.

5. The pigment dispersion as claimed in any one of claims 1 to 4,
wherein the weight average molecular weight of the vinyl polymer is 5,000 to 152,000.

6. The pigment dispersion as claimed in any one of claims 1 to 5,
wherein the acid value of the vinyl polymer is 10 mg KOH/g to 270 mg KOH/g.

7. The pigment dispersion as claimed in any one of claims 1 to 6,
wherein the size of particles of cumulative volume accounting for 95% of the pigment dispersion is 10nm to 400 nm.

8. The pigment dispersion as claimed in any one of claims 1 to 7, wherein the azo pigment represented by formula (1) is represented by the following formula (2): 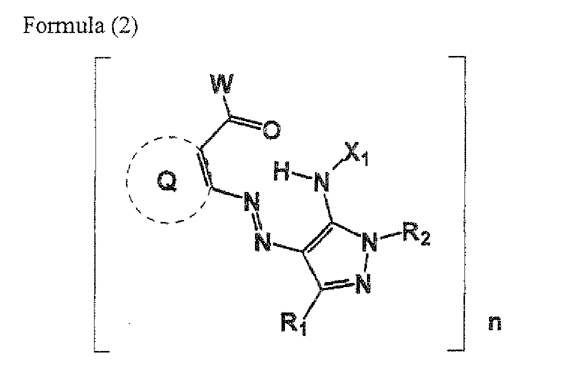 wherein Q, W, X₁, R₁, R₂ and n respectively have the same meaning as Q, W, X₁, R₁, R₂ and n in formula (I), and when n is 2, formula (2) represents a dimer via Q, W, X_{1,} R₁ or R₂, when n is 3, formula (2) represents a trimer via Q, W, X₁, R₁ or R₂, and when n is 4, formula (2) represents a tetramer via Q, W, X₁, R₁ or R₂.

9. The pigment dispersion as claimed in any one of claims 1 to 8,
wherein Q in formula (I) forms a 5-membered nitrogen-containing heterocyclic ring together with a carbon atom.

10. The pigment dispersion as claimed in any one of claims I to 9,
wherein n in formula (1) represents 2.

11. The pigment dispersion as claimed in any one of claims 8 to 10,
wherein X₁ in formula (2) represents a hydrogen atom.

12. The pigment dispersion as claimed in any one of claims 1 to 8,
wherein the azo pigment represented by formula (1) is represented by the following formula (3): 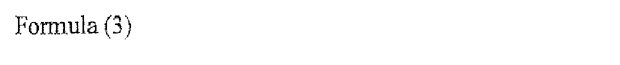 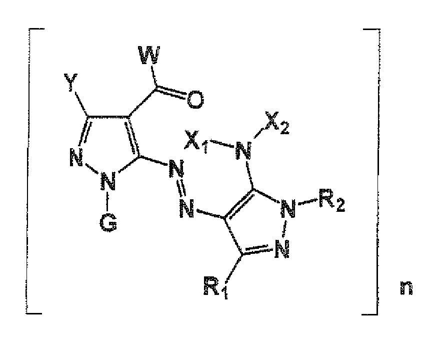 wherein Y represents a hydrogen atom or a substituent; G represents a hydrogen atom, an alkyl group, a cycloalkyl group, an aralkyl group, an alkenyl group, an alkynyl group, an aryl group or a heterocyclic group; W, X₁, X₂, R₁, R₂ and n respectively have the same meanings as W, X₁, X₂, R₁, R₂ and n in formula (1), and when n is 2, formula (3) represents a dimer via Q, W, X₁, X₂, R₁ or R₂, when n is 3, formula (3) represents a trimer via Q, W, X₁, X₂, R₁ or R₂, and when n is 4, formula (3) represents a tetramer via Q, W, X₁, X₂, R₁ or R₂.

13. The pigment dispersion as claimed in claim 12,
wherein the azo pigment represented by formula (3) is represented by the following formula (4):
Formula (4) 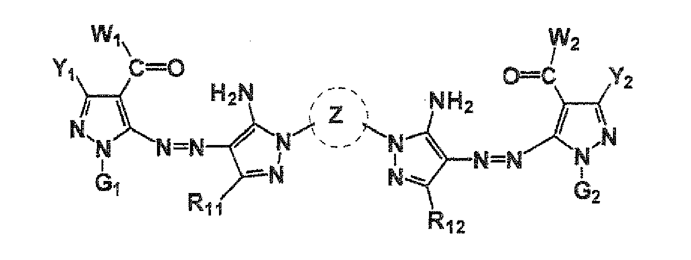 wherein Z represents an atomic group necessary to form a 5-, 6-, 7- or 8-membered nitrogen-containing heterocyclic ring; each of Y₁, Y₂, R₁₁ and R₁₂ independently represents a hydrogen atom or a substituent; each of G₁ and G₂ independently represents a hydrogen atom, an alkyl group, an aralkyl group, an alkenyl group, an alkynyl group, an aryl group, or a heterocyclic group; and each of W₁ and W₂ independently represents an alkoxy group, an amino group, an alkyl group, or an aryl group.

14. The pigment dispersion as claimed in any one of claims 1 to 13,
wherein each of W, W₁ and W₂ independently represents an alkoxy group having carbon atoms of 3 or less in total, an ammo group, or an alkylamino group having carbon atoms of 3 or less in total.

15. The pigment dispersion as claimed in claim 12 or 13,
wherein each of G, G₁ and G₂ independently represents an alkyl group having carbon atoms of 3 or less in total.

16. The pigment dispersion as claimed in any one of claims 13 to 15,
wherein Z represents a 6-membered nitrogen-containing heterocyclic ring.

17. Aqueous ink for inkjet recording which contains pigment dispersion as claimed in any one of claims 1 to 16 and a water-soluble medium.
